(19) Europäisches Patentamt / European Patent Office / Office européen des brevets

(11) **EP 1 944 732 A2**

# (12) EUROPEAN PATENT APPLICATION

(43) Date of publication:
**16.07.2008 Bulletin 2008/29**

(51) Int Cl.:
*G06T 5/00* (2006.01)          *H04N 5/232* (2006.01)
*G06F 17/15* (2006.01)

(21) Application number: **08000410.4**

(22) Date of filing: **10.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **12.01.2007 JP 2007003969**
**08.11.2007 JP 2007290471**
**20.11.2007 JP 2007300222**

(71) Applicant: **Sanyo Electric Co., Ltd.**
**Moriguchi-shi, Osaka (JP)**

(72) Inventors:
• **Hatanaka, Haruo**
  **Moriguchi City**
  **Osaka, 570-8677 (JP)**
• **Fukumoto, Shinpei**
  **Moriguchi City**
  **Osaka, 570-8677 (JP)**

(74) Representative: **Glawe, Delfs, Moll**
**Patentanwälte**
**Postfach 26 01 62**
**80058 München (DE)**

(54) **Apparatus and method for blur detection, and apparatus and method for blur correction**

(57) A blur detection apparatus that detects blur contained in a first image acquired by shooting by an image sensor based on the output of the image sensor has a blur information creator adapted to create blur information reflecting the blur based on the first image and a second image shot with an exposure time shorter than the exposure time of the first image.

## FIG.3

EXPOSURE TIME: T1          T1/4

CORRECTION TARGET IMAGE A1          REFERENCE IMAGE A2

SMALL IMAGE A1a          SMALL IMAGE A2a
                         NOISE ELIMINATION
                         A2b
                         BRIGHTNESS NORMALIZATION
                         A2c

CONVOLVED IMAGE          INITIALLY DECONVOLVED IMAGE

EP 1 944 732 A2

**Description**

**BACKGROUND OF THE INVENTION**

1. Field of the Invention

The present invention relates to an apparatus and a method for detecting blur contained in an image obtained by shooting. The invention also relates to an apparatus and a method for correcting such blur. The invention relates to an image-sensing apparatus employing any of such apparatuses and methods as well.

2. Description of Related Art

A motion blur correction technology is for reducing motion blur (blur in an image induced by motion of an image-shooting apparatus) occurring during shooting, and is highly valued in differentiating image-sensing apparatuses such as digital cameras. Regardless of whether the target of correction is a still image or a moving image, a motion blur correction technology can be thought of as comprising a subtechnology for detecting motion (such as camera shake) and another for correcting an image based on the detection result.

Motion can be detected by use of a motion detection sensor such as an angular velocity sensor or an acceleration sensor, or electronically through analysis of an image. Motion blur can be corrected optically by driving an optical system, or electronically through image processing.

One method to correct motion blur in a still image is to detect motion with a motion detection sensor and then correct the motion itself optically based on the detection result. Another method is to detect motion with a motion detection sensor and then correct the resulting motion blur electronically based on the detection result. Yet another method is to detect motion blur through analysis of an image and then correct it electronically based on the detection result.

Inconveniently, however, using a motion detection sensor leads to greatly increased cost. For this reason, methods have been sought to correct motion blur without requiring a motion detection sensor.

As one method to correct motion blur without use of a motion detection sensor, additive motion blur correction has been in practical use (see, for example, JP-A-H09-261526). Briefly described with reference to Fig. 15, additive motion blur correction works as follows. In additive motion blur correction, an ordinary-exposure period t1 is divided such that a plurality of divided-exposure images (short-exposure images) DP1 to DP4 are shot consecutively, each with an exposure period t2. When the number of divided-exposure images so shot is represented by $P_{NUM}$, then t2 = t1 / $P_{NUM}$ (in this particular case, $P_{NUM}$ = 4). The divided-exposure images DP1 to DP4 are then so laid on one another as to cancel the displacements among them, and are additively merged. In this way, one still image is generated that has reduced motion blur combined with the desired brightness.

According to another proposed method, from a single image containing motion blur - called motion blur image - obtained by shooting, information representing the motion blur that occurred during the shooting - called motion blur information (a point spread function or an image deconvolution filter - is estimated; then, based on the motion blur information and the motion blur image, an image free from motion blur - called deconvolved (restored) image - is generated through digital signal processing. One method of this type uses Fourier Iteration, as disclosed in the following publication: G. R. Ayers and J. C. Dainty, "Iterative blind deconvolution method and its applications", OPTICS LETTERS, 1988, Vol. 13, No. 7, pp. 547-549.

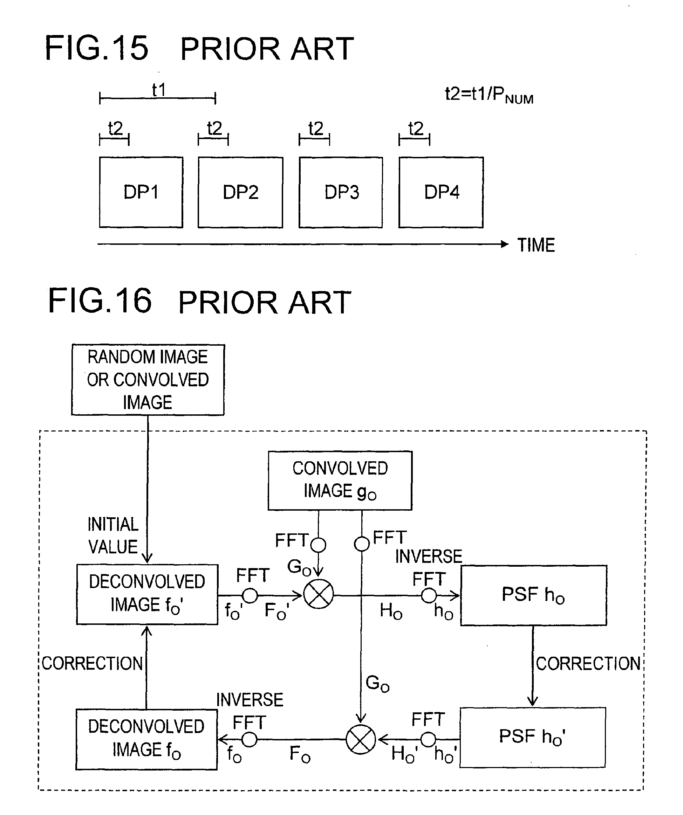

Fig. 16 is a block diagram of a configuration for executing Fourier iteration. In Fourier iteration, through iterative execution of Fourier and inverse Fourier transforms by way of modification of a deconvolved image and a point spread function (PSF), the definitive deconvolved image is estimated from a convolved (degraded) image. To execute Fourier iteration, an initial deconvolved image (the initial value of a deconvolved image) needs to be given. Typically used as the initial deconvolved image is a random image, or a convolved image as a motion blur image.

Certainly, using Fourier iteration makes it possible to generate an image less affected by motion without the need for a motion detection sensor. Inconveniently, however, Fourier iteration is a non-linear optimization method, and it takes a large number of iteration steps to obtain an appropriate deconvolved image; that is, it takes an extremely long time to detect and correct motion blur. This makes the method difficult to put into practical use in digital still cameras and the like. A shorter processing time is a key issue to be addressed for putting it into practical use.

There have been proposed still other methods to correct motion blur without use of a motion detection sensor. According to one conventional method, before and after the shooting of a main image to be corrected, a plurality of subsidiary images are shot so that, from these subsidiary images, information on the blur occurring during the shooting of the main image is estimated and, based on this information, the blur in the main image is corrected (see, for example, JP-A-2001-346093). Inconveniently, this method estimates the blur in the main image from the amount of motion (including the intervals of exposure) among the subsidiary images shot before and after the main image, and thus suffers from low blur detection and correction accuracies. According to another conventional method, motion blur is detected from an image obtained by converting a motion blur image into a two-dimensional frequency domain (see, for example, JP-A-H11-027574). Specifically, the image obtained by the conversion is projected onto a circle about the origin of frequency coordinates and, from the resulting projected data, the magnitude and direction of blur are found. Inconveniently, this method can only estimate linear, constant-velocity blur; moreover, when the shooting subject (hereinafter also simply "subject") has a small frequency component in a particular direction, the method may fail to detect the direction of blur and thus fail to correct it appropriately. Needless to say, high accuracy in blur correction also is a key issue to be addressed.

## SUMMARY OF THE INVENTION

In view of the above, it is an object of the present invention to provide an apparatus and a method for blur detection that contribute to reduced cost and shorter processing times. It is also an object of the invention to provide an apparatus and a method for blur correction that contribute to reduced cost and higher blur correction accuracy. It is also an object of the invention to provide an image-sensing apparatus that employs any of such apparatuses and methods.

According to one aspect of the invention, a blur detection apparatus that detects blur contained in a first image acquired by shooting by an image sensor based on the output of the image sensor is provided with: a blur information creator adapted to create blur information reflecting the blur based on the first image and a second image shot with an exposure time shorter than the exposure time of the first image.

Since the exposure time of the second image is shorter than that of the first image, the blur contained in the second image is usually smaller than that contained in the first image. Detecting the blur in the first image by referring to the second image, containing less blur, is expected to reduce the processing time for creating blur information. Moreover, there is no need to shoot a large number of images as in the conventional additive blur correction, requiring a minimum increase in load during shooting. Needless to say, there is no need to provide a sensor dedicated to the creation of blur information, and this contributes to cost reduction.

Specifically, for example, the blur information is an image convolution function that represents the blur in the entire first image.

For example, the blur information creator is provided with an extractor adapted to extract partial images at least one from each of the first and second images, and creates the blur information based on the partial images.

This helps reduce the amount of calculation needed, and is therefore expected to further reduce the processing time.

Specifically, for example, the blur information creator eventually finds the image convolution function through, first, provisionally finding, from a first function obtained by converting an image based on the first image into a frequency domain and a second function obtained by converting an image based on the second image into the frequency domain, an image convolution function in the frequency domain and, then, correcting, by using a predetermined restricting condition, a function obtained by converting the image convolution function thus found in the frequency domain into a space domain.

Specifically, for example, the blur information creator calculates the blur information by Fourier iteration in which an image based on the first image and an image based on the second image are taken as a convolved image and an initial deconvolved image respectively.

For example, the blur information creator is provided with an extractor adapted to extract partial images at least one from each of the first and second images, and, by generating the convolved image and the initial deconvolved image from the partial images, makes the convolved image and the initial deconvolved image smaller in size than the first image.

This helps reduce the amount of calculation needed, and is therefore expected to further reduce the processing time.

For example, the blur detection apparatus is further provided with a holder adapted to hold a display image based on the output of the image sensor immediately before or after the shooting of the first image, and the blur information creator uses the display image as the second image.

This helps eliminate (or greatly reduce) the increase in load during shooting.

For example, the blur information creator, in the process of generating the convolved image and the initial deconvolved image from the first and second images, performs, on at least one of the image based on the first image and the image based on the second image, one or more of the following types of processing: noise elimination; brightness normalization according to the brightness level ratio between the first and second images; edge extraction; and image size normalization according to the image size ratio between the first and second images.

For example, the blur detection apparatus is further provided with a holder adapted to hold, as a third image, a display image based on the output of the image sensor immediately before or after the shooting of the first image, and the blur information creator creates the blur information based on the first, second, and third images.

For example, the blur information creator generates a fourth image by performing weighted addition of the second and third images, and creates the blur information based on the first and fourth images.

Performing weighted addition appropriately makes it possible to improve the signal-to-noise ratio while maintaining in the fourth image the information (edge information etc.) needed to create accurate blur information.

Instead, for example, the blur information creator is provided with a selector adapted to choose either the second or third image as a fourth image, and creates the blur information based on the first and fourth images. Here, the selector chooses between the second and third images based on at least one of the edge intensity of the second and third images, the exposure time of the second and third images, or preset external information.

For example, the blur information creator calculates the blur information by Fourier iteration in which an image based on the first image and an image based on the fourth image are taken as a convolved image and an initial deconvolved image respectively.

For example, the blur information creator is provided with an extractor adapted to extract partial images at least one from each of the first, second, and third images, and, by generating the convolved image and the initial deconvolved image from the partial images, makes the convolved image and the initial deconvolved image smaller in size than the first image.

This helps reduce the amount of calculation needed, and is therefore expected to further reduce the processing time.

For example, a blur correction apparatus may be configured as follows. The blur correction apparatus is provided with a corrected image generator adapted to generate, by using the blur information created by the blur detection apparatus, a corrected image obtained by reducing the blur in the first image.

According to another aspect of the invention, an image-sensing apparatus is provided with the blur detection apparatus described above and the image sensor mentioned above.

According to yet another aspect of the invention, a method of detecting blur contained in a first image shot by an image sensor based on the output of the image sensor is provided with a step of creating blur information reflecting the blur based on the first image and a second image shot with an exposure time shorter than the exposure time of the first image.

According to still another aspect of the invention, a blur correction apparatus is provided with: an image acquirer adapted to acquire a first image by shooting using an image sensor and acquire a plurality of short-exposure images by a plurality of times of shooting each performed with an exposure time shorter than the exposure time of the first image; a second image generator adapted to generate from the plurality of short-exposure images one image as a second image; and a corrector adapted to correct the blur contained in the first image based on the first and second images.

Since the exposure time of a short-exposure image is shorter than that of the first image, the blur contained in the short-exposure image is usually smaller than that contained in the first image. Even then, a short-exposure image is not free from the effect of blur, and may contain an unignorable degree of blur. To cope with this, a plurality of short-exposure images are shot, and, from these short-exposure images, a second image that is suitable for blur correction is generated. This is expected to lead to higher blur correction accuracy. Moreover, no need for a motion detection sensor contributes to cost reduction.

Specifically, for example, the second image generator selects one of the plurality of short-exposure images as the second image based on at least one of the edge intensity of the short-exposure images; the contrast of the short-exposure images; or the rotation angle of the short-exposure images relative to the first image.

This makes it possible to correct the blur in the first image by using a short-exposure image that is suitable for blur correction, for example one containing the smallest amount of blur. This contributes to enhancing the accuracy of blur correction.

For example, the second image generator selects the second image based further on the differences in shooting time of the plurality of short-exposure images from the first image.

Instead, for example, the second image generator generates the second image by merging together two or more of the plurality of short-exposure images.

This makes it possible to make the signal-to-noise ratio of the second image higher than that of any of the short-exposure images, and is thus expected to enhance the accuracy of blur correction.

Instead, for example, the second image generator is provided with: a selector adapted to select one of the plurality of short-exposure images based on at least one of the edge intensity of the short-exposure images; the contrast of the short-exposure images; or the rotation angle of the short-exposure images relative to the first image; a merger adapted to generate a merged image into which two or more of the plurality of short-exposure images are merged; and a switch adapted to make either the selector or the merger operate alone to generate, as the second image, either the selected one short-exposure image or the merged image. Here, the switch decides which of the selector and the merger to make operate based on the signal-to-noise ratio of the short-exposure images.

This makes it possible to change the manner in which the second image is generated according to the signal-to-noise ratio of the short-exposure images, and thus contributes to reduction of calculation cost.

For example, the corrector creates blur information reflecting the blur in the first image based on the first and second images, and corrects the blur in the first image based on the blur information.

Instead, for example, the corrector corrects the blur in the first image by merging the brightness signal (luminance signal) of the second image into the color signal (chrominance signal) of the first image.

Instead, for example, the corrector corrects the blur in the first image by sharpening the first image by using the second image.

According to another aspect of the invention, an image-sensing apparatus is provided with the blur correction apparatus described above and the image sensor mentioned above.

According to yet another aspect of the invention, a method of correcting blur is provided with: an image acquisition step of acquiring a first image by shooting using an image sensor and acquiring a plurality of short-exposure images by a plurality of times of shooting each performed with an exposure time shorter than an exposure time of the first image; a second image generation step of generating from the plurality of short-exposure images one image as a second image; and a correction step of correcting the blur contained in the first image based on the first and second images.

According to the present invention, it is possible to provide a blur detection apparatus, a blur detection method, and an image-sensing apparatus that contribute to reduced cost and shorter processing times; it is also possible provide a blur correction apparatus, a blur correction method, and an image-sensing apparatus that contribute to reduced cost and higher blur correction accuracy.

The significance and benefits of the invention will be clear from the following description of its embodiments. It should however be understood that these embodiments are merely examples of how the invention is implemented, and that the meanings of the terms used to describe the invention and its features are not limited to the specific ones in which they are used in the description of the embodiments.

## BRIEF DESCRIPTION OF THE DRAWINGS

Fig. 1 is an overall block diagram of an image-sensing apparatus of a first embodiment of the invention.

Fig. 2 is a flow chart showing a flow of operations for motion blur detection and motion blur correction, in connection with Example 1 of the invention;

Fig. 3 is a conceptual diagram showing part of the flow of operations shown in Fig. 2;

Fig. 4 is a detailed flow chart of the Fourier iteration shown in Fig. 2;

Fig. 5 is a block diagram of a configuration for realizing the Fourier iteration shown in Fig. 2;

Fig. 6 is a flow chart showing a flow of operations for motion blur detection and motion blur correction, in connection with Example 2 of the invention;

Fig. 7 is a conceptual diagram showing part of the flow of operations shown in Fig. 6;

Fig. 8 is a diagram illustrating the vertical and horizontal enlargement of the filter coefficients of an image deconvolution filter, as performed in Example 2 of the invention;

Fig. 9 is a flow chart showing a flow of operations for motion blur detection and motion blur correction, in connection with Example 3 of the invention;

Fig. 10 is a conceptual diagram showing part of the flow of operations shown in Fig. 9;

Figs. 11A and 11B are diagram illustrating the significance of the weighted addition performed in Example 3 of the invention;

Fig. 12 is a flow chart showing a flow of operations for motion blur detection and motion blur correction, in connection with Example 4 of the invention;

Fig. 13 is a conceptual diagram showing part of the flow of operations shown in Fig. 12;

Fig. 14 is a block diagram of a configuration for realizing motion blur detection and motion blur correction, in connection with Example 5 of the invention;

Fig. 15 is a diagram illustrating conventional additive motion blur correction;

Fig. 16 is a block diagram of a conventional configuration for realizing Fourier iteration;

Fig. 17 is an overall block diagram of an image-sensing apparatus of a second embodiment of the invention;

Fig. 18 is a diagram showing how a plurality of small images are extracted from each of a correction target image and a reference image, in connection with the second embodiment of the invention;

Fig. 19 is a diagram showing mutually corresponding small images extracted from a correction target image and a reference image, in connection with the second embodiment of the invention;

Fig. 20 is a diagram showing how edge extraction performed on a small image extracted from a reference image detects straight lines extending along edges, in connection with the second embodiment of the invention;

Fig. 21 is a diagram showing the small images shown in Fig. 19 with the straight lines extending along edges superimposed on them, in connection with the second embodiment of the invention;

Fig. 22 is a diagram showing the brightness distribution in the direction perpendicular to the vertical straight lines shown in Fig. 21;

Fig. 23 is a diagram showing the brightness distribution in the direction perpendicular to the horizontal straight lines shown in Fig. 21;

Fig. 24 is a diagram showing a space filter as a smoothing function generated based on brightness distribution, in connection with the second embodiment of the invention;

Fig. 25 is a flow chart showing a flow of operations for motion blur detection, in connection with the second embodiment of the invention;

Fig. 26 is an overall block diagram of an image-sensing apparatus of a third embodiment of the invention;

Fig. 27 is a flow chart showing a flow of operations for motion blur correction in the image-sensing apparatus shown in Fig. 26, in connection with Example 6 of the invention;

Fig. 28 is a flow chart showing a flow of operations for motion blur correction in the image-sensing apparatus shown in Fig. 26, in connection with Example 7 of the invention;

Fig. 29 is a flow chart showing a flow of operations for motion blur correction in the image-sensing apparatus shown in Fig. 26, in connection with Example 8 of the invention;

Fig. 30 is a diagram showing the metering circuit and a LUT provided in the image-sensing apparatus shown in Fig. 26, in connection with Example 8 of the invention;

Fig. 31 is a flow chart showing the operations for calculating a first evaluation value used in the generation of a reference image, in connection with Example 9 of the invention;

Fig. 32 is a diagram illustrating the method for calculating a first evaluation value used in the generation of a reference image, in connection with Example 9 of the invention;

Fig. 33 is a flow chart showing the operations for calculating a second evaluation value used in the generation of a reference image, in connection with Example 9 of the invention;

Figs. 34A and 34B are diagrams showing, respectively, a sharp short-exposure image and an unsharp - significantly blurry - short-exposure image, both illustrating the significance of the operations shown in Fig. 33;

Figs. 35A and 35B are diagrams showing brightness histograms corresponding to the short-exposure images shown in Figs. 34A and 34B respectively;

Fig. 36 is a diagram illustrating the method for calculating a third evaluation value used in the generation of a reference image, in connection with Example 9 of the invention;

Fig. 37 is a flow chart showing a flow of operations for motion blur correction according to a first correction method, in connection with Example 10 of the invention;

Fig. 38 is a flow chart showing a flow of operations for motion blur correction according to a second correction method, in connection with Example 10 of the invention;

Fig. 39 is a conceptual diagram of motion blur correction corresponding to Fig. 38;

Fig. 40 is a flow chart showing a flow of operations for motion blur correction according to a third correction method, in connection with Example 10 of the invention;

Fig. 41 is a conceptual diagram of motion blur correction corresponding to Fig. 40;

Fig. 42 is a diagram showing a one-dimensional Gaussian distribution, in connection with Example 10 of the invention;

Fig. 43 is a diagram illustrating the effect of motion blur correction corresponding to Fig. 40;

Fig. 44 is a diagram showing an example of individual short-exposure images and the optical flow between every two adjacent short-exposure images, in connection with Example 11 of the invention;

Fig. 45 is a diagram showing another example of the optical flow between every two adjacent short-exposure images, in connection with Example 11 of the invention; and

Fig. 46 is a diagram showing yet another example of the optical flow between every two adjacent short-exposure images, in connection with Example 11 of the invention.

## DETAILED DESCRIPTION OF PREFERRED EMBODIMENTS

Hereinafter, embodiments of the present invention will be described specifically with reference to the accompanying drawings. Among the drawings referred to in the course of description, the same parts are identified by common reference signs, and in principle no overlapping description of the same parts will be repeated.

## FIRST EMBODIMENT

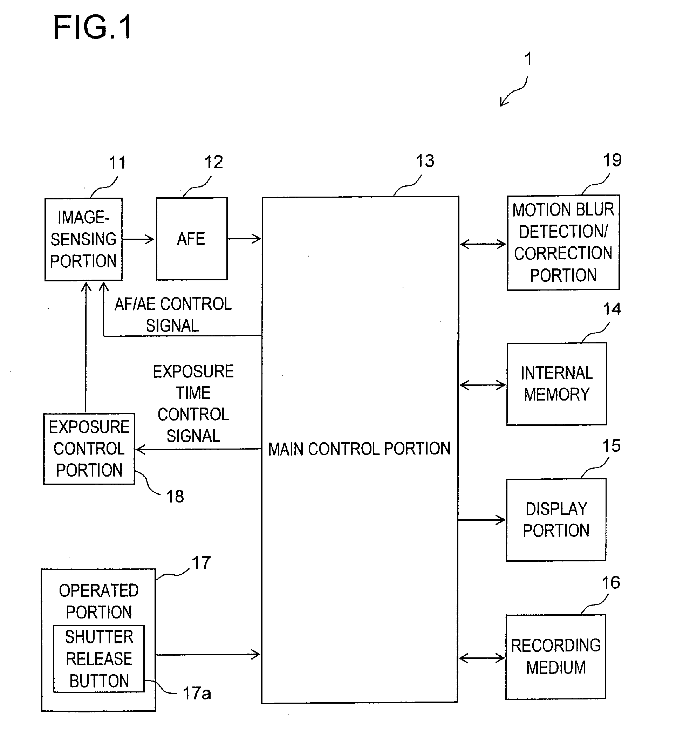

First, a first embodiment of the invention will be described. Fig. 1 is an overall block diagram of the image-sensing apparatus 1 of the first embodiment of the invention. The image-sensing apparatus 1 shown in Fig. 1 is, for example, a digital still camera capable of shooting and recording still images, or a digital video camera capable of shooting and recording still and moving images.

The image-sensing apparatus 1 is provided with an image-sensing portion 11, an AFE (analog front end) 12, a main control portion 13, an internal memory 14, a display portion 15, a recording medium 16, an operated portion 17, an exposure control portion 18, and a motion blur detection/correction portion 19. The operated portion 17 is provided with a shutter release button 17a.

The image-sensing portion 11 includes an optical system, an aperture stop, an image sensor such as a CCD (charge-coupled device) or CMOS (complementary metal oxide semiconductor) image sensor, and a driver for controlling the optical system and the aperture stop (none of these components is illustrated). Based on an AF/AE control signal from the main control portion 13, the driver controls the zoom magnification and focal length of the optical system and the degree of opening of the aperture stop. The image sensor performs photoelectric conversion on the optical image - representing the shooting subject - incoming through the optical system and the aperture stop, and feeds the electric signal obtained as a result to the AFE 12.

The AFE 12 amplifies the analog signal outputted from the image-sensing portion 11 (image sensor), and converts the amplified analog signal into a digital signal. The AFE 12 then feeds the digital signal, one part of it after another, to the main control portion 13.

The main control portion 13 is provided with a CPU (central processing unit), a ROM (read-only memory), a RAM (random-access memory), etc., and also functions as an image signal processing portion. Based on the output signal of the AFE 12, the main control portion 13 generates an image signal representing the image shot by the image-sensing portion 11 (hereinafter also referred to as the "shot image"). The main control portion 13 also functions as a display controller for controlling what is displayed on the display portion 15, and thus controls the display portion 15 in a way necessary to achieve the desired display.

The internal memory 14 is formed of SDRAM (synchronous dynamic random-access memory) or the like, and temporarily stores various kinds of data generated within the image-sensing apparatus 1. The display portion 15 is a display device such as a liquid crystal display panel, and, under the control of the main control portion 13, displays, among other things, the image shot in the immediately previous frame and the images recorded on the recording medium 16. The recording medium 16 is a non-volatile memory such as an SD (secure digital) memory card, and, under the control of the main control portion 13, stores, among other things, shot images.

The operated portion 17 accepts operations from the outside. The operations made on the operated portion 17 are transmitted to the main control portion 13. The shutter release button 17a is operated to instruct to shoot and record a still image.

The exposure control portion 18 controls the exposure time of the individual pixels of the image sensor in a way to optimize the amount of light to which the image sensor of the image-sensing portion 11 is exposed. When the main control portion 13 is feeding the exposure control portion 18 with an exposure time control signal, the exposure control portion 18 controls the exposure time according to the exposure time control signal.

The image-sensing apparatus 1 operates in various modes, including shooting mode, in which it can shoot and record a still or moving image, and play back mode, in which it can play back a still or moving image recorded on the recording medium 16. The modes are switched according to how the operated portion 17 is operated.

In shooting mode, the image-sensing portion 11 performs shooting sequentially at predetermined frame periods (for example, 1 / 60 seconds). In each frame, the main control portion 13 generates a through-display image from the output of the image-sensing portion 11, so that one through-display image after another thus obtained is displayed on the display portion 15 one after another on a constantly refreshed basis.

In the shooting mode, when the shutter release button 17a is pressed, the main control portion 13 saves (that is, stores) image data representing a single shot image on the recording medium 16 and in the internal memory 14. This shot image can contain blur resulting from motion, and will later be corrected by the motion blur detection/correction portion 19 automatically or according to a correction instruction fed via the operated portion 17 etc. For this reason, in the following description, the single shot image that is shot at the press of the shutter release button 17a as described above is especially called the "correction target image". Since the blur contained in the correction target image is detected by the motion blur detection/correction portion 19, the correction target image is also referred to as the "detection target image".

The motion blur detection/correction portion 19 detects the blur contained in the correction target image based on the image data obtained from the output signal of the image-sensing portion 11 without the use of a motion detection sensor such as an angular velocity sensor, and corrects the correction target image according to the detection result, so as to generate a corrected image that has the blur eliminated or reduced.

Hereinafter, the function of the motion blur detection/correction portion 19 will be described in detail by way of practical examples, namely Examples 1 to 5. Unless inconsistent, any feature in one of these Examples is applicable to any other. It should be noted that, in the description of Examples 1 to 4 (and also in the description, given later, of the second embodiment), the "memory" in which images etc. are stored refers to the internal memory 14 or an unillustrated memory provided within the motion blur detection/correction portion 19 (in the second embodiment, motion blur detection/correction portion 20).

**Example 1**

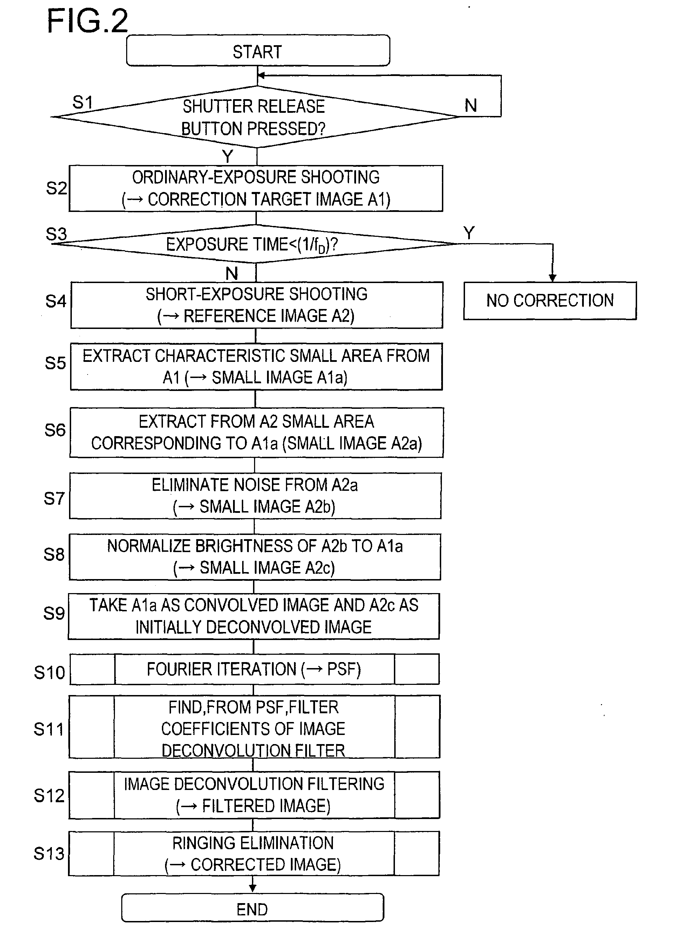

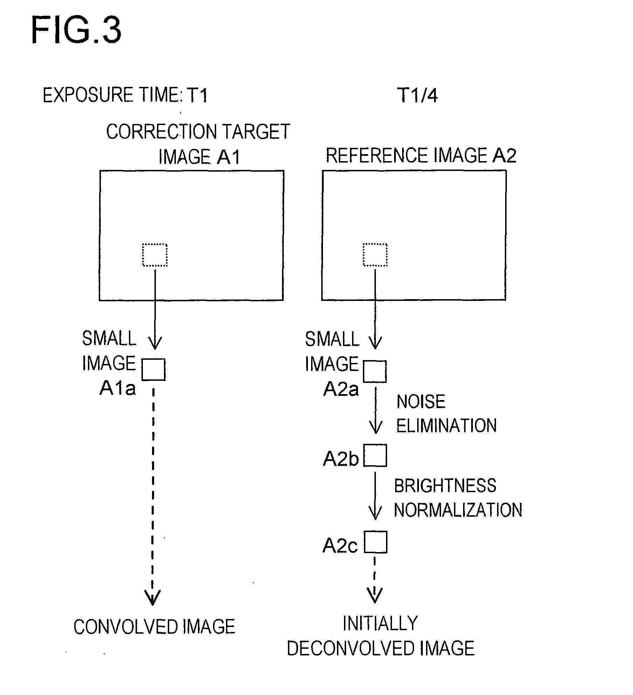

First, Example 1 will be described with reference to Figs. 2 and 3. Fig. 2 is a flow chart showing a flow of operations for motion blur detection and motion blur correction, in connection with Example 1, and Fig. 3 is a conceptual diagram showing part of the flow of operations. This flow of operations will now be described step by step with reference to Fig. 2.

In shooting mode, when the shutter release button 17a is pressed, ordinary-exposure shooting is performed, and the correction target image generated as a result is stored in the memory (steps S1 and S2). The correction target image in Example 1 will henceforth be called the correction target image A1.

Next, in step S3, the exposure time T1 with which the correction target image A1 was obtained is compared with a threshold value $T_{TH}$ and, if the exposure time T1 is smaller than the threshold value $T_{TH}$, it is judged that the correction target image contains no (or an extremely small amount of) blur attributable to motion, and the flow shown in Fig. 2 is ended without performing motion blur correction. The threshold value $T_{TH}$ is, for example, the motion blur limit exposure time. The motion blur limit exposure time is the limit exposure time at which motion blur can be ignored, and is calculated from the reciprocal of the focal length $f_D$.

If the exposure time T1 is larger than the threshold value $T_{TH}$, then, in step S4, following the ordinary-exposure shooting, short-exposure shooting is performed, and the shot image obtained as a result is, as a reference image, stored in the memory. The reference image in Example 1 will henceforth be called the reference image A2. The correction target image A1 and the reference image A2 are obtained by consecutive shooting (that is, in consecutive frames), but the main control portion 13 controls the exposure control portion 18 shown in Fig. 1 such that the exposure time with which the reference image A2 is obtained is shorter than the exposure time T1. For example, the exposure time of the reference image A2 is set at T1 / 4. The correction target image A1 and the reference image A2 have an equal image size.

Next, in step S5, from the correction target image A1, a characteristic small area is extracted, and the image in the thus extracted small area is, as a small image A1a, stored in the memory. A characteristic small area denotes a rectangular area that is located in the extraction source image and that contains a comparatively large edge component (in other words, has high contrast); for example, by use of the Harris corner detector, a 128 x 128-pixel small area is extracted as a characteristic small area. In this way, a characteristic small area is selected based on the magnitude of the edge component (or the amount of contrast) in the image in that small area.

Next, in step S6, from the reference image A2, a small area having the same coordinates as the small area extracted from the correction target image A1 is extracted, and the image in the small area extracted from the reference image A2 is, as a small image A2a, stored in the memory. The center coordinates of the small area extracted from the correction target image A1 (that is, the center coordinates in the correction target image A1) are equal to the center coordinates of the small area extracted from the reference image A2 (that is, the center coordinates in the reference image A2); moreover, since the correction target image A1 and the reference image A2 have an equal image size, the two small areas have an equal image size.

Since the exposure time of the reference image A2 is comparatively short, the signal-to-noise ratio (hereinafter referred to as the S/N ratio) of the small image A2a is comparatively low. Thus, in step S7, the small image A2a is subjected to noise elimination. The small image A2a having undergone the noise elimination is taken as a small image A2b. The noise elimination here is achieved by filtering the small image A2a with a linear filter (such as a weighted averaging filter) or a non-linear filter (such as a median filter).

Since the brightness of the small image A2b is low, in step S8, the brightness level of the small image A2b is increased. Specifically, for example, brightness normalization is performed in which the brightness values of the individual pixels of the small image A2b are multiplied by a fixed value such that the brightness level of the small image A2b becomes equal to the brightness level of the small image A1a (such that the average brightness of the small image A2b becomes equal to the average brightness of the small image A1a). The small image A2b thus having its brightness level increased is taken as a small image A2c.

With the thus obtained small images A1a and A2c taken as a convolved (degraded) image and an initially deconvolved (restored) image respectively (step S9), then, in step S10, Fourier iteration is executed to find an image convolution function.

To execute Fourier iteration, an initial deconvolved image (the initial value of a deconvolved image) needs to be given, and this initial deconvolved image is called the initially deconvolved image.

To be found as the image convolution function is a point spread function (hereinafter called a PSF). An operator, or space filter, that is weighted so as to represent the locus described by an ideal point image on a shot image when the image-sensing apparatus 1 blurs is called a PSF, and is generally used as a mathematical model of motion blur. Since motion blur uniformly convolves (degrades) the entire shot image, the PSF found for the small image A1a can be used as the PSF for the entire correction target image A1.

Fourier iteration is a method for restoring, from a convolved image - an image suffering degradation, a deconvolved image - an image having the degradation eliminated or reduced (see, for example, the following publication: G.

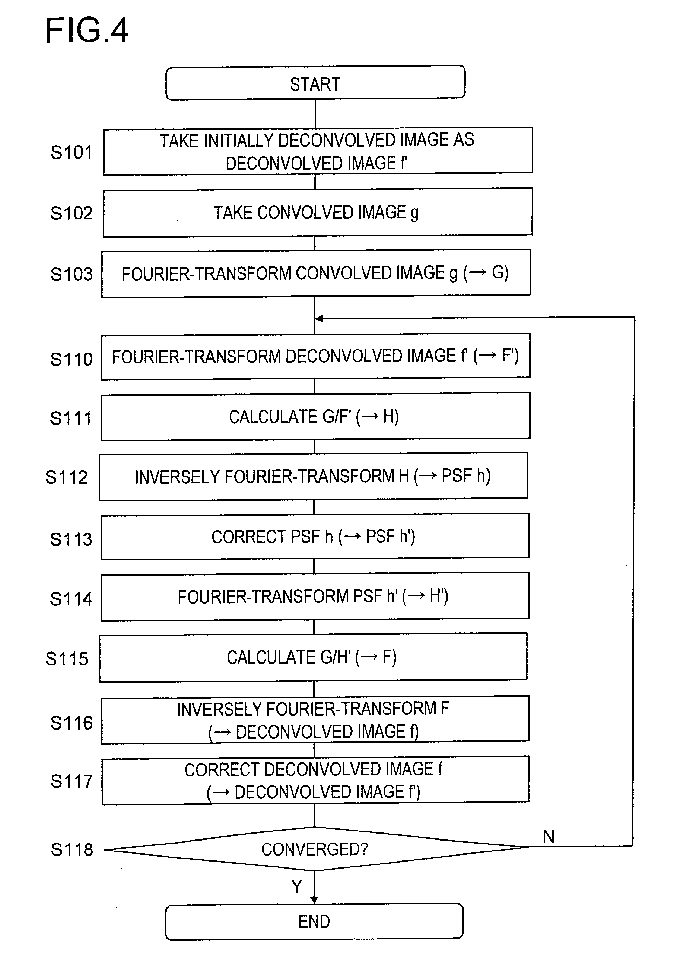

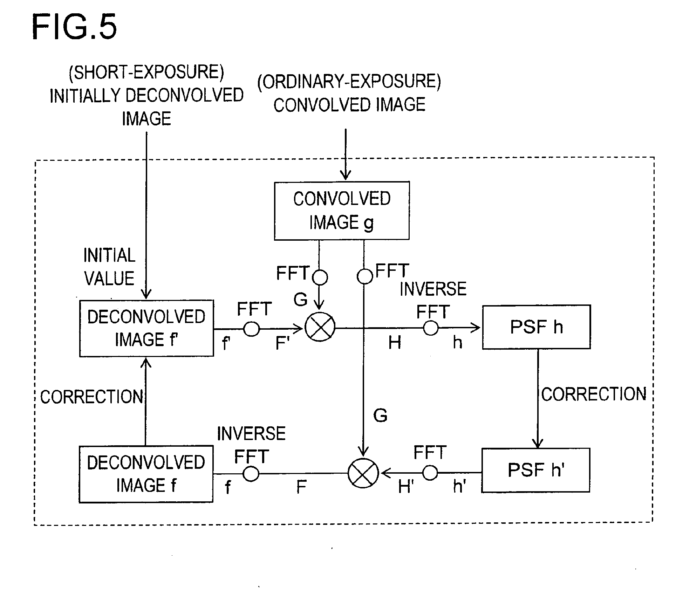

R. Ayers and J. C. Dainty, "Iterative blind deconvolution method and its applications", OPTICS LETTERS, 1988, Vol. 13, No. 7, pp. 547-549). Now, Fourier iteration will be described in detail with reference to Figs. 4 and 5. Fig. 4 is a detailed flow chart of the processing in step S10 in Fig. 2. Fig. 5 is a block diagram of the parts that execute Fourier iteration.

First, in step S101, the deconvolved image is represented by f, and the initially deconvolved image is taken as the deconvolved image f. That is, as the initial deconvolved image f, the above-mentioned initially deconvolved image (in Example 1, the small image A2c) is used. Next, in step S102, the convolved image (in Example 1, the small image A1a) is taken as g. Then, the convolved image g is Fourier-transformed, and the result is, as G, stored in the memory (step S103). For example, in a case where the initially deconvolved image and the convolved image have a size of 128 $\times$ 128 pixels, f' and g are expressed as matrices each of an 128 $\times$ 128 array.

Next, in step S110, the deconvolved image f' is Fourier-transformed to find F', and then, in step S111, H is calculated according to formula (1) below. H corresponds to the Fourier-transformed result of the PSF. In formula (1), F'* is the conjugate complex matrix of F', and $\alpha$ is a constant.

$$H = \frac{G \cdot F'^{*}}{\left|F'\right|^{2} + \alpha} \tag{1}$$

Next, in step S 112, H is inversely Fourier-transformed to obtain the PSF. The obtained PSF is taken as h. Next, in step S113, the PSF h is corrected according to the restricting condition given by formula (2a) below, and the result is further corrected according to the restricting condition given by formula (2b) below.

$$h(x,y) = \begin{cases} 1 & : h(x,y) > 1 \\ h(x,y) & : 0 \leq h(x,y) \leq 1 \\ 0 & : h(x,y) < 0 \end{cases} \tag{2a}$$

$$\sum h(x,y) = 1 \tag{2b}$$

The PSF h is expressed as a two-dimensional matrix, of which the elements are represented by h(x, y). Each element of the PSF should inherently take a value of 0 or more but 1 or less. Accordingly, in step S 113, whether or not each element of the PSF is 0 or more but 1 or less is checked and, while any element that is 0 or more but 1 or less is left intact, any element more than 1 is corrected to be equal to 1 and any element less than 0 is corrected to be equal to 0. This is the correction according to the restricting condition given by formula (2a). Then, the thus corrected PSF is normalized such that the sum of all its elements equals 1. This normalization is the correction according to the restricting condition given by formula (2b).

The PSF as corrected according to formulae (2a) and (2b) is taken as h'.

Next, in step S114, the PSF h' is Fourier-transformed to find H', and then, in step S115, F is calculated according to formula (3) below. F corresponds to the Fourier-transformed result of the deconvolved image f. In formula (3), H'* is the conjugate complex matrix of H'.

$$F = \frac{G \cdot H'^{*}}{\left|H'\right|^{2} + \beta} \tag{3}$$

Next, in step S 116, F is inversely Fourier-transformed to obtain the deconvolved image. The thus obtained deconvolved image is taken as f. Next, in step S 117, the deconvolved image f is corrected according to the restricting condition given by formula (4) below, and the corrected deconvolved image is newly taken as f'.

$$f(x,y) = \begin{cases} 255 & : f(x,y) > 255 \\ f(x,y) & : 0 \le f(x,y) \le 255 \\ 0 & : f(x,y) < 0 \end{cases} \qquad (4)$$

The deconvolved image f is expressed as a two-dimensional matrix, of which the elements are represented by f(x, y). Assume here that the value of each pixel of the convolved image and the deconvolved image is represented as a digital value of 0 to 255. Then, each element of the matrix representing the deconvolved image f (that is, the value of each pixel) should inherently take a value of 0 or more but 255 or less. Accordingly, in step S 117, whether or not each element of the matrix representing the deconvolved image f is 0 or more but 255 or less is checked and, while any element that is 0 or more but 255 or less is left intact, any element more than 255 is corrected to be equal to 255 and any element less than 0 is corrected to be equal to 0. This is the correction according to the restricting condition given by formula (4).

Next, in step S 118, whether or not a convergence condition is fulfilled is checked and thereby whether or not the iteration has converged is checked.

For example, the absolute value of the difference between the newest F' and the immediately previous F' is used as an index for the convergence check. If this index is equal to or less than a predetermined threshold value, it is judged that the convergence condition is fulfilled; otherwise, it is judged that the convergence condition is not fulfilled.

If the convergence condition is fulfilled, the newest H' is inversely Fourier-transformed, and the result is taken as the definitive PSF. That is, the inversely Fourier-transformed result of the newest H' is the PSF eventually found in step S10 in Fig. 2. If the convergence condition is not fulfilled, the flow returns to step S 110 to repeat the operations in steps S110 to S 118. As the operations in steps S 110 to S 118 are repeated, the functions f, F', H, h, h', H', F, and f (see Fig. 5) are updated to be the newest one after another.

As the index for the convergence check, any other index may be used. For example, the absolute value of the difference between the newest H' and the immediately previous H' may be used as an index for the convergence check with reference to which to check whether or not the above-mentioned convergence condition is fulfilled. Instead, the amount of correction made in step S 113 according to formulae (2a) and (2b) above, or the amount of correction made in step S 117 according to formula (4) above, may be used as the index for the convergence check with reference to which to check whether or not the above-mentioned convergence condition is fulfilled. This is because, as the iteration converges, those amounts of correction decrease.

If the number of times of repetition of the loop through steps S 110 to S 118 has reached a predetermined number, it may be judged that convergence is impossible and the processing may be ended without calculating the definitive PSF. In this case, the correction target image is not corrected.

Back in Fig. 2, after the PSF is calculated in step S10, the flow proceeds to step S11. In step S11, the elements of the inverse matrix of the PSF calculated in step S10 are found as the individual filter coefficients of the image deconvolution filter. This image deconvolution filter is a filter for obtaining the deconvolved image from the convolved image. In practice, the elements of the matrix expressed by formula (5) below, which corresponds to part of the right side of formula (3) above, correspond to the individual filter coefficients of the image deconvolution filter, and therefore an intermediary result of the Fourier iteration calculation in step S 10 can be used intact. What should be noted here is that H'* and H' in formula (5) are H'* and H' as obtained immediately before the fulfillment of the convergence condition in step S 118 (that is, H'* and H' as definitively obtained).

$$\frac{H'^{*}}{|H'|^2 + \beta} \qquad (5)$$

After the individual filter coefficients of the image deconvolution filter are found in step S11, then, in step S 12, the correction target image A1 is filtered with the image deconvolution filter to generate a filtered image in which the blur contained in the correction target image A1 has been eliminated or reduced. The filtered image may contain ringing ascribable to the filtering, and thus then, in step S 13, the ringing is eliminated to generate the definitive corrected image.

## Example 2

Next, Example 2 will be described.

As described above, in shooting mode, the image-sensing portion 11 performs shooting sequentially at predetermined frame periods (for example, 1 / 60 seconds) and, in each frame, the main control portion 13 generates a through-display image from the output of the image-sensing portion 11, so that one through-display image after another thus obtained is displayed on the display portion 15 one after another on a constantly refreshed basis.

The through-display image is an image for a moving image, and its image size is smaller than that of the correction target image, which is a still image. Whereas the correction target image is generated from the pixel signals of all the pixels in the effective image-sensing area of the image sensor provided in the image-sensing portion 11, the through-display image is generated from the pixel signals of thinned-out part of the pixels in the effective image-sensing area. In a case where the shot image is generated from the pixel signals of all the pixels in the effective image-sensing area, the correction target image is nothing but the shot image itself that is shot by ordinary exposure and recorded at the press of the shutter release button 17a, while the through-display image is a thinned-out image of the shot image of a given frame.

In Example 2, the through-display image based on the shot image of the frame immediately before or after the frame in which the correction target image is shot is used as a reference image. The following description deals with, as an example, a case where the through-display image of the frame immediately before the frame in which the correction target image is shot is used.

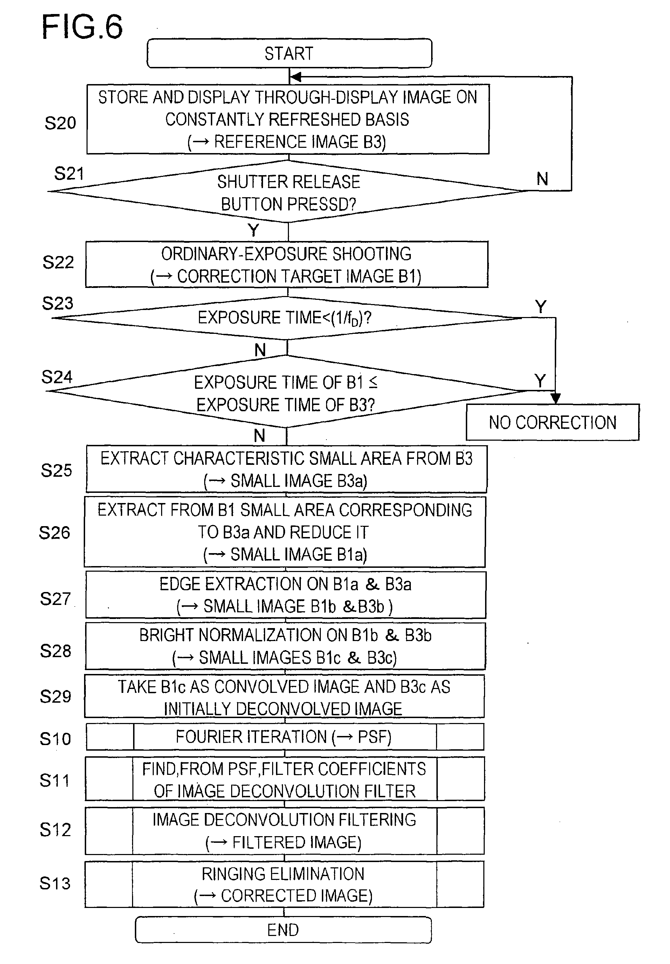

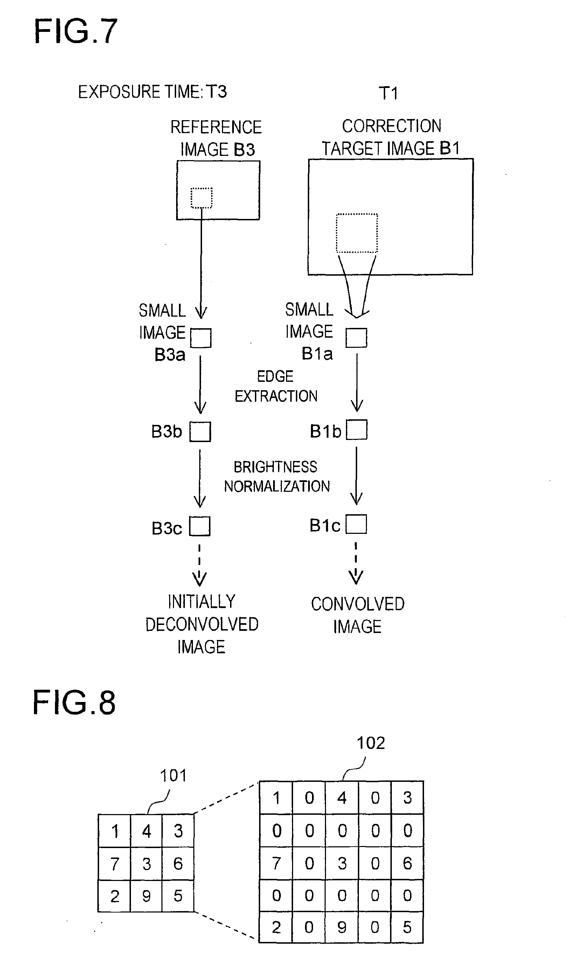

Figs. 6 and 7 are referred to. Fig. 6 is a flow chart showing the flow of operations for motion blur detection and motion blur correction, in connection with Example 2, and Fig. 7 is a conceptual diagram showing part of the flow of operations. This flow of operations will now be described step by step with reference to Fig. 6.

In shooting mode, as described above, a through-display image is generated in each frame so that one through-display image after another is stored in the memory on a constantly refreshed basis and displayed on the display portion 15 on a constantly refreshed basis (step S20). When the shutter release button 17a is pressed, ordinary-exposure shooting is performed, and the correction target image generated as a result is stored (steps S21 and S22). The correction target image in Example 2 will henceforth be called the correction target image B1. The through-display image present in the memory at this point is that obtained in the shooting of the frame immediately before the frame in which the correction target image B1 is shot, and this through-display image will henceforth be called the reference image B3.

Next, in step S23, the exposure time T1 with which the correction target image B I was obtained is compared with a threshold value $T_{TH}$. If the exposure time T1 is smaller than the threshold value $T_{TH}$ (which is, for example, the reciprocal of the focal length $f_D$), it is judged that the correction target image contains no (or an extremely small amount of) blur attributable to motion, and the flow shown in Fig. 6 is ended without performing motion blur correction.

If the exposure time T1 is larger than the threshold value $T_{TH}$, then, in step S24, the exposure time T1 is compared with the exposure time T3 with which the reference image B3 was obtained. If $T1 \leq T3$, it is judged that the reference image B3 has more motion blur, and the flow shown in Fig. 6 is ended without performing motion blur correction. If $T1 > T3$, then, in step S25, by use of the Harris corner detector or the like, a characteristic small area is extracted from the reference image B3, and the image in the thus extracted small area is, as a small image B3a, stored in the memory. The significance of and the method for extracting a characteristic small area are the same as described in connection with Example 1.

Next, in step S26, a small area corresponding to the coordinates of the small image B3a is extracted from the correction target image B1. Then, the image in the small area thus extracted from the correction target image B 1 is reduced in the image size ratio of the correction target image B 1 to the reference image B3, and the resulting image is, as a small image B1a, stored in the memory. That is, when the small image B1a is generated, its image size is normalized such that the small images B1a and B3a have an equal image size.

If the reference image B3 is enlarged such that the correction target image B1 and the reference image B3 have an equal image size, the center coordinates of the small area extracted from the correction target image B 1 (that is, the center coordinates in the correction target image B1) coincide with the center coordinates of the small area extracted from the reference image B3 (that is, the center coordinates in the reference image B3). In reality, however, the correction target image B1 and the reference image B3 have different image sizes, and accordingly the image sizes of the two small areas differ in the image size ratio of the correction target image B1 to the reference image B3. Thus, the image size ratio of the small area extracted from the correction target image B 1 to the small area extracted from the reference image B3 is made equal to the image size ratio of the correction target image B1 to the reference image B3. Eventually, by reducing the image in the small area extracted from the correction target image B1 such that the small images B1a and B3a have equal image sizes, the small image B1a is obtained.

Next, in step S27, the small images B1a and B3a are subjected to edge extraction to obtain small images B1b and B3b. For example, an arbitrary edge detection operator is applied to each pixel of the small image B1a to generate an extracted-edge image of the small image B1a, and this extracted-edge image is taken as the small area B1b. The same is done with the small image B3b.

Thereafter, in step S28, the small images B1b and B3b are subjected to brightness normalization. Specifically, the brightness values of the individual pixels of the small image B1b or B3b or both are multiplied by a fixed value such that the small images B1b and B3b have an equal brightness level (such that the average brightness of the small image B1b becomes equal to the average brightness of the small image B3b). The small images B1b and B3b having undergone the brightness normalization are taken as small images B1c and B3c.

The through-display image taken as the reference image B3 is an image for a moving image, and is therefore obtained through image processing for a moving image - after being so processed as to have a color balance suitable for a moving image. On the other hand, the correction target image B 1 is a still image shot at the press of the shutter release button 17a, and is therefore obtained through image processing for a still image. Due to the differences between the two types of image processing, the small images B1a and B3a, even with the same subject, have different color balances. This difference can be eliminated by edge extraction, and this is the reason that edge extraction is performed in step S27. Edge extraction also largely eliminates the difference in brightness between the correction target image B1 and the reference image B3, and thus helps reduce the effect of a difference in brightness (that is, it helps enhance the accuracy of blur detection); it however does not completely eliminate it, and therefore, thereafter, in step S28, brightness normalization is performed.

With the thus obtained small images B1c and B3c taken as a convolved image and an initially deconvolved image respectively (step S29), the flow proceeds to step S 10 to perform the operations in steps S 10, S11, S 12, and S 13 sequentially.

The operations performed in steps S10 to S 13 are the same as in Example 1. The difference is that, since the individual filter coefficients of the image deconvolution filter obtained through steps S 10 and S11 (and the PSF obtained through step S10) are adapted to the image size of a moving image, these are here re-adapted to the image size of a still image by vertical and horizontal enlargement.

For example, in a case where the image size ratio of the through-display image to the correction target image is 3 : 5 and in addition the size of the image deconvolution filter obtained through steps S 10 and S11 is 3 x 3, when the calculated individual filter coefficients are as indicated by 101 in Fig. 8, through vertical and horizontal enlargement, the individual filter coefficients of an image deconvolution filter having a size of 5 x 5 as indicated by 102 in Fig. 8 are generated. Eventually, the individual filter coefficients of the 5 x 5-size image deconvolution filter are taken as the individual filter coefficients obtained in step S11. In the example indicated by 102 in Fig. 8, those filter coefficients which are interpolated by vertical and horizontal enlargement are given the value of 0; instead, they may be given values calculated by linear interpolation or the like.

After the individual filter coefficients of the image deconvolution filter are found in step S11, then, in step S12, the correction target image B 1 is filtered with this image deconvolution filter to generate a filtered image in which the blur contained in the correction target image B1 has been eliminated or reduced. The filtered image may contain ringing ascribable to the filtering, and thus then, in step S 13, the ringing is eliminated to generate the definitive corrected image.

**Example 3**

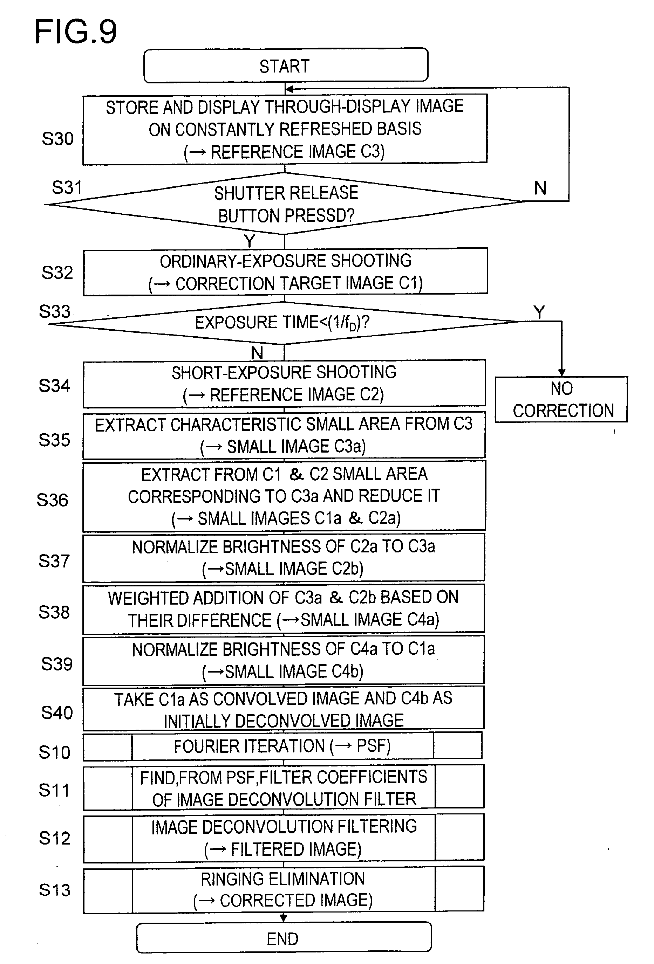

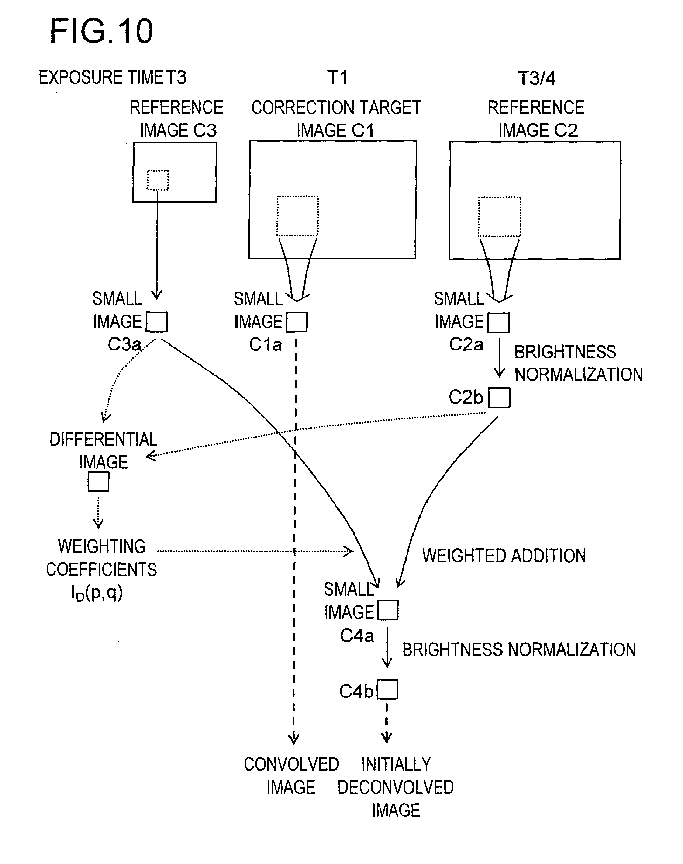

Next, Example 3 will be described. Figs. 9 and 10 are referred to. Fig. 9 is a flow chart showing the flow of operations for motion blur detection and motion blur correction, in connection with Example 3, and Fig. 10 is a conceptual diagram showing part of the flow of operations. This flow of operations will now be described step by step with reference to Fig. 9.

In shooting mode, a through-display image is generated in each frame so that one through-display image after another is stored in the memory on a constantly refreshed basis and displayed on the display portion 15 on a constantly refreshed basis (step S30). When the shutter release button 17a is pressed, ordinary-exposure shooting is performed, and the correction target image generated as a result is stored (steps S31 and S32). The correction target image in Example 3 will henceforth be called the correction target image C1. The through-display image present in the memory at this point is that obtained in the shooting of the frame immediately before the frame in which the correction target image C 1 is shot, and this through-display image will henceforth be called the reference image C3.

Next, in step S33, the exposure time T1 with which the correction target image C1 was obtained is compared with a threshold value $T_{TH}$. If the exposure time T1 is smaller than the threshold value $T_{TH}$ (which is, for example, the reciprocal of the focal length $f_D$), it is judged that the correction target image contains no (or an extremely small amount of) blur attributable to motion, and the flow shown in Fig. 9 is ended without performing motion blur correction.

If the exposure time T1 is larger than the threshold value $T_{TH}$, then the exposure time T1 is compared with the exposure time T3 with which the reference image C3 was obtained. If $T1 \leq T3$, it is judged that the reference image C3 has more motion blur, and thereafter motion blur detection and motion blur correction similar to those performed in Example 1 are performed (that is, operations similar to those in steps S4 to S 13 in Fig. 2 are performed). By contrast, if T1 > T3, then, in step S34, following the ordinary-exposure shooting, short-exposure shooting is performed, and the shot image obtained as a result is, as a reference image C2, stored in the memory. In Fig. 9, the operation of comparing T1 and T3 is omitted, and the following description deals with a case where T1 > T3.

The correction target image C1 and the reference image C2 are obtained by consecutive shooting (that is, in consecutive frames), but the main control portion 13 controls the exposure control portion 18 shown in Fig. 1 such that the exposure time with which the reference image C2 is obtained is shorter than the exposure time T1. For example, the exposure time of the reference image C2 is set at T3 /4. The correction target image C1 and the reference image C2 have an equal image size.

After step S34, in step S35, by use of the Harris corner detector or the like, a characteristic small area is extracted from the reference image C3, and the image in the thus extracted small area is, as a small image C3a, stored in the memory. The significance of and the method for extracting a characteristic small area are the same as described in connection with Example 1 .

Next, in step S36, a small area corresponding to the coordinates of the small image C3a is extracted from the correction target image C1. Then, the image in the small area thus extracted from the correction target image C1 is reduced in the image size ratio of the correction target image C1 to the reference image C3, and the resulting image is, as a small image C1a, stored in the memory. That is, when the small image C1a is generated, its image size is normalized such that the small images C1a and C3a have an equal image size. Likewise, a small area corresponding to the coordinates of the small image C3a is extracted from the reference image C2. Then, the image in the small area thus extracted from the reference image C2 is reduced in the image size ratio of the reference image C2 to the reference image C3, and the resulting image is, as a small image C2a, stored in the memory. The method for obtaining the small image C1a (or the small image C2a) from the correction target image C1 (or the reference image C2) is the same as the method, described in connection with Example 2, for obtaining the small image B1a from the correction target image B 1 (step S26 in Fig. 6).

Next, in step S37, the small image C2a is subjected to brightness normalization with respect to the small image C3a. That is, the brightness values of the individual pixels of the small image C2a are multiplied by a fixed value such that the small images C3a and C2a have an equal brightness level (such that the average brightness of the small image C3a becomes equal to the average brightness of the small image C2a). The small image C2a having undergone the brightness normalization is taken as a small image C2b.

After the operation in step S37, the flow proceeds to step S38. In step S38, first, the differential image between the small images C3a and C2b is generated. In the differential image, pixels take a value other than 0 only where the small images C3a and C2b differ from each other. Then, with the values of the individual pixels of the differential image taken as weighting coefficients, the small images C3a and C2b are subjected to weighted addition to generate a small image C4a.

When the values of the individual pixels of the differential image are represented by $I_D(p, q)$, the values of the individual pixels of the small image C3a are represented by $I_3(p, q)$, the values of the individual pixels of the small image C2b are represented by $I_2(p, q)$, and the values of the individual pixels of the small image C4a are represented by $I_4(p, q)$, then $I_4(p, q)$ is given by formula (6) below, where k is a constant and p and q are horizontal and vertical coordinates, respectively, in the relevant differential or small image.

$$I_4(p,q) = k \cdot I_D(p,q) \cdot I_2(p,q) + (1-k) \cdot I_D(p,q) \cdot I_3(p,q) \qquad (6)$$

As will be clarified in a later description, the small image C4a is used as an image based on which to calculate the PSF corresponding to the blur in the correction target image C1. To obtain a good PSF, it is necessary to maintain an edge part appropriately in the small image C4a. Moreover, naturally, the higher the S/N ratio of the small image C4a, the better the PSF obtained. Generally, adding up a plurality of images leads to a higher S/N ratio; this is the reason that the small images C3a and C2b are added up to generate the small image C4a. If, however, the addition causes the edge part to blur, it is not possible to obtain a good PSF.

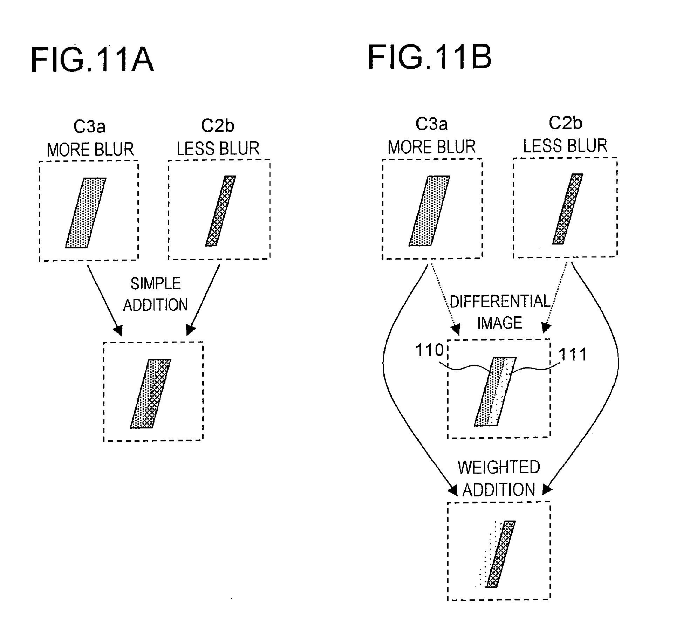

Thus, as described above, the small image C4a is generated through weighted addition according to the pixel values of the differential image. Now, the significance of the weighted addition here will be supplementarily described with reference to Figs. 11A and 11B. The exposure time of the small image C3a is longer than the exposure time of the small image C2b, as shown in Fig. 11A, when the same edge image is shot, more blur occurs in the former than in the latter. Accordingly, if the two small images are simply added up, as shown in Fig. 11A, the edge part blurs; by contrast, as shown in Fig. 11B, if the two small images are subjected to weighted addition according to the pixel values of the differential image between them, the edge part is maintained comparatively well. In the different part 110 (where the edge part is differently convolved) that arises due to the small image C3a containing more blur, $I_D(p, q)$ are larger, giving more weight to the small image C2b, with the result that the small image C4a reflects less of the large edge part convolution in the small image C3a. Conversely, in the non-different part 111, more weight is given to the small image C3a, of which the exposure time is comparatively long, and this helps increase the S/N ratio (reduce noise).

Next, in step S39, the small image C4a is subjected to brightness normalization with respect to the small image C1a. That is, the brightness values of the individual pixels of the small image C4a are multiplied by a fixed value such that the small images C1a and C4a have an equal brightness level (such that the average brightness of the small image C1a becomes equal to the average brightness of the small image C4a). The small image C4a having undergone the brightness normalization is taken as a small image C4b.

With the thus obtained small images C1a and C4b taken as a convolved image and an initially deconvolved image respectively (step S40), the flow proceeds to step S10 to perform the operations in steps S 10, S 11, S 12, and S 13 sequentially.

The operations performed in steps S10 to S 13 are the same as in Example 1. The difference is that, since the individual filter coefficients of the image deconvolution filter obtained through steps S10 and S11 (and the PSF obtained through step S10) are adapted to the image size of a moving image, these are here re-adapted to the image size of a still image by vertical and horizontal enlargement. The vertical and horizontal enlargement here is the same as described in connection with Example 2.

After the individual filter coefficients of the image deconvolution filter are found in step S11, then, in step S12, the correction target image C 1 is filtered with this image deconvolution filter to generate a filtered image in which the blur contained in the correction target image C1 has been eliminated or reduced. The filtered image may contain ringing ascribable to the filtering, and thus then, in step S 13, the ringing is eliminated to generate the definitive corrected image.

## Example 4

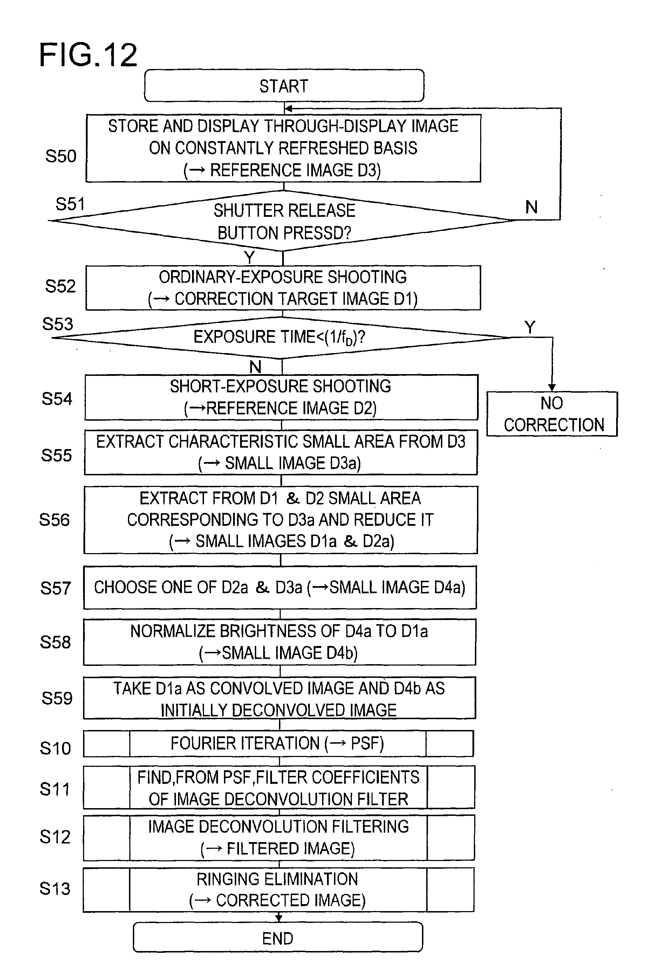

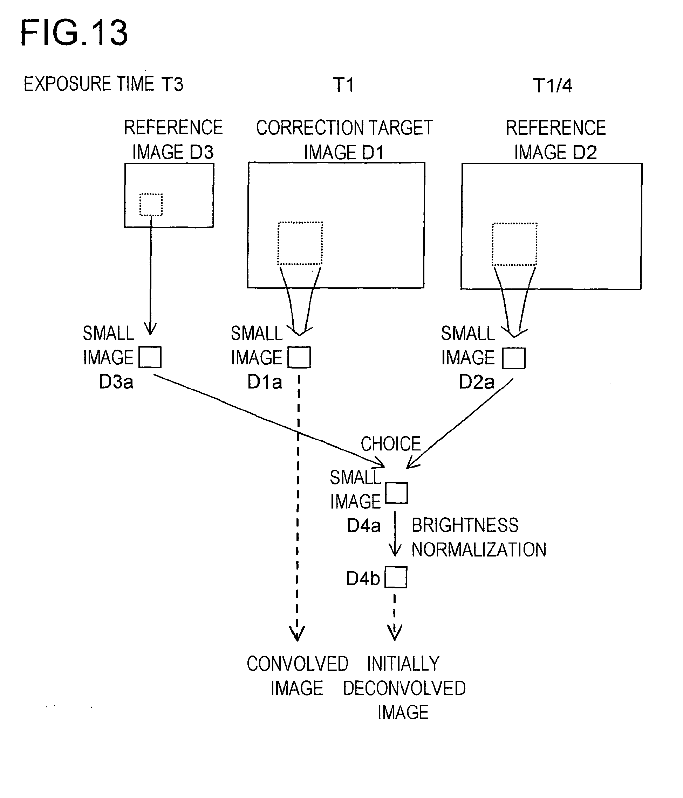

Next, Example 4 will be described. Figs. 12 and 13 are referred to. Fig. 12 is a flow chart showing the flow of operations for motion blur detection and motion blur correction, in connection with Example 4, and Fig. 13 is a conceptual diagram showing part of the flow of operations. This flow of operations will now be described step by step with reference to Fig. 12.

In Example 4, first, the operations in steps S50 to S56 are performed. The operations in steps S50 to S56 are the same as those in steps S30 to S36 (see Fig. 9) in Example 3, and therefore no overlapping description will be repeated. It should however be noted that the correction target image C1 and the reference images C2 and C3 in Example 3 are read as a correction target image D 1 and reference images D2 and D3 in Example 4. The exposure time of the reference image D2 is set at, for example, T1 /4.

Through steps S50 to S56, small images D1a, D2a, and D3a based on the correction target image D1 and the reference images D2 and D3 are obtained, and then the flow proceeds to step S57.

In step S57, one of the small images D2a and D3a is chosen as a small image D4a. The choice here is made according to one or more of various indices.

For example, the edge intensity of the small image D2a is compared with that of the small image D3a, and whichever has the higher edge intensity is chosen as the small image D4a. The small image D4a will serve as the basis of the initially deconvolved image for Fourier iteration. This is because it is believed that, the higher the edge intensity of an image is, the less its edge part is degraded and thus the more suitable it is as the initially deconvolved image. For example, a predetermined edge extraction operator is applied to each pixel of the small image D2a to generate an extracted-edge image of the small image D2a, and the sum of the all pixel values of this extracted-edge image is taken as the edge intensity of the small image D2a. The edge intensity of the small image D3a is calculated likewise.

Instead, for example, the exposure time of the reference image D2 is compared with that of the reference image D3, and whichever has the shorter exposure time is chosen as the small image D4a. This is because it is believed that, the shorter the exposure time of an image is, the less its edge part is degraded and thus the more suitable it is as the initially deconvolved image. Instead, for example, based on selection information (external information) set beforehand via, for example, the operated portion 17 shown in Fig. 1, one of the small images D2a and D3a is chosen as the small image D4a. The choice may be made according to an index value representing the combination of the above-mentioned edge intensity, exposure time, and selection information.

Next, in step S58, the small image D4a is subjected to brightness normalization with respect to the small image D1a. That is, the brightness values of the individual pixels of the small image D4a are multiplied by a fixed value such that the small images D1a and D4a have an equal brightness level (such that the average brightness of the small image D1a becomes equal to the average brightness of the small image D4a). The small image D4a having undergone the brightness normalization is taken as a small image D4b.

With the thus obtained small images D1a and D4b taken as a convolved image and an initially deconvolved image respectively (step S59), the flow proceeds to step S10 to perform the operations in steps S 10, S 11, S 12, and S 13 sequentially.

The operations performed in steps S10 to S 13 are the same as in Example 1. The difference is that, since the individual filter coefficients of the image deconvolution filter obtained through steps S10 and S 11 (and the PSF obtained through step S10) are adapted to the image size of a moving image, these are here re-adapted to the image size of a still image by vertical and horizontal enlargement. The vertical and horizontal enlargement here is the same as described in connection with Example 2.

After the individual filter coefficients of the image deconvolution filter are found in step S11, then, in step S12, the correction target image D1 is filtered with this image deconvolution filter to generate a filtered image in which the blur contained in the correction target image D1 has been eliminated or reduced. The filtered image may contain ringing ascribable to the filtering, and thus then, in step S 13, the ringing is eliminated to generate the definitive corrected image.

**Example 5**

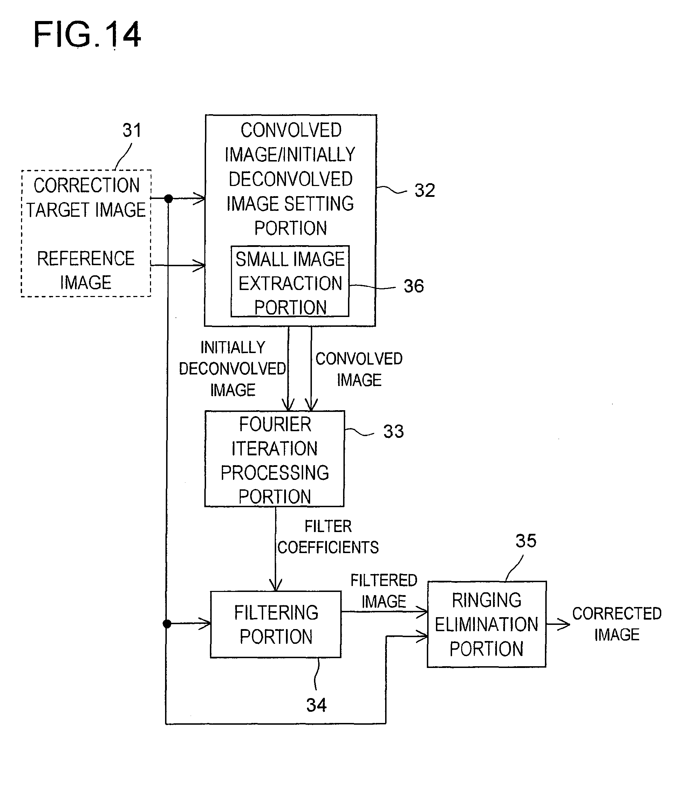

Next, Example 5 will be described. Example 5 focuses on the configuration for achieving the motion blur detection and motion blur correction described in connection with Examples 1 to 4. Fig. 14 is a block diagram showing the configuration. The correction target image mentioned in Example 5 is the correction target image (A1, B1, C1, or D1) in Examples 1 to 4, and the reference image mentioned in Example 5 is the reference image(s) (A2, B3, C2 and C3, or D2 and D3) in Examples 1 to 4.

In Fig. 14, a memory 31 is realized with the internal memory 14 shown in Fig. 1, or is provided within the motion blur detection/correction portion 19. In Fig. 14, a convolved image/initially deconvolved image setting portion 32, a Fourier iteration processing portion 33, a filtering portion 34, and a ringing elimination portion 35 are provided in the motion blur detection/correction portion 19.

The memory 31 stores the correction target image and the reference image. Based on what is recorded in the memory 31, the convolved image/initially deconvolved image setting portion 32 sets a convolved image and an initially deconvolved image by any of the methods described in connection with Examples 1 to 4, and feeds them to the Fourier iteration processing portion 33. For example, in a case where Example 1 is applied, the small images A1a and A2c obtained through the operations in steps S1 to S8 in Fig. 2 are, as a convolved image and an initially deconvolved image respectively, fed to the Fourier iteration processing portion 33.

The convolved image/initially deconvolved image setting portion 32 includes a small image extraction portion 36, which extracts from the correction target image and the reference image small images (A1a and A2a in Fig. 3, C1a, C2a, and C3a in Fig. 10, etc.) that will serve as the bases of the convolved image and the initially deconvolved image.

Based on the convolved image and the initially deconvolved image fed to it, the Fourier iteration processing portion 33 executes the Fourier iteration previously described with reference to Fig. 4 etc. The image deconvolution filter itself is implemented in the filtering portion 34, and the Fourier iteration processing portion 33 calculates the individual filter coefficients of the image deconvolution filter by performing the operations in steps S10 and S11 in Fig. 2 etc.

The filtering portion 34 applies the image deconvolution filter having the calculated individual filter coefficients to each pixel of the correction target image and thereby filters the correction target image to generate a filtered image. The size of the image deconvolution filter is smaller than that of the correction target image, but since it is believed that motion blur uniformly degrades the entire image, applying the image deconvolution filter to the entire correction target image eliminates the blur in the entire correction target image.

The ringing elimination portion 35 performs weighted averaging between the thus generated filtered image and the correction target image to generate a definitive corrected image. For example, the weighted averaging is performed pixel by pixel, and the ratio in which the weighted averaging is performed for each pixel is determined according to the edge intensity at that pixel in the correction target image.

In the thus generated definitive corrected image, the blur contained in the correction target image has been eliminated or reduced, and the ringing ascribable to the filtering has also been eliminated or reduced. Since the filtered image generated by the filtering portion 34 already has the blur eliminated or removed, it can be regarded as a corrected image on its own.

Methods for eliminating the ringing are well-known, and therefore no detailed description will be given in this respect. As one of such methods, it is possible to adopt, for example, the one disclosed in JP-A-2006-129236.

Shot with an exposure time shorter than that for ordinary-exposure shooting, the reference image, though lower in brightness, contains a smaller amount of blur. Thus, its edge component is close to that of an image containing no blur. Thus, as described previously, an image obtained from the reference image is taken as the initially deconvolved image for Fourier iteration.

As the loop of Fourier iteration is repeated, the deconvolved image (f) grows closer and closer to an image containing minimal blur. Here, since the initially deconvolved image itself is already close to an image containing no blur, convergence takes less time than in cases in which, as conventionally practiced, a random image or a convolved image is taken as the initially deconvolved image (at shortest, convergence is achieved with a single loop). Thus, the processing time for the generation of motion blur information (a PSF, or the filter coefficients of an image deconvolution filter) and the processing time for motion blur correction are reduced. Moreover, whereas if the initially deconvolved image is remote from the image to which it should converge, it is highly likely that it will converge to a local solution (an image different from the image to which it should converge), setting the initially deconvolved image as described above makes it less likely that it will converge to a local solution (that is, makes failure of motion blur correction less likely).

Moreover, based on the belief that motion blur uniformly degrades an entire image, a small area is extracted from a given image, then motion blur information (a PSF, or the filter coefficients of an image deconvolution filter) is created from the image data in the small area, and then the created motion blur information is applied to the entire image. This helps reduce the amount of calculation needed, and thus helps reduce the processing time for motion blur information creation and the processing time for motion blur correction. Needless to say, it is also expected to reduce the scale of the circuitry needed and achieve cost reduction accordingly.

Here, as described in connection with each Example, a characteristic small area containing a large edge component is automatically extracted. An increase in the edge component in the image based on which to calculate a PSF signifies an increase in the proportion of the signal component to the noise component. Thus, extracting a characteristic small area helps reduce the effect of noise, and thus makes more accurate detection of motion blur information possible.

In addition, in Example 2, there is no need to perform shooting dedicated to the acquisition of a reference image; in Examples 1, 3, and 4, it is necessary to perform shooting dedicated to the acquisition of a reference image (short-exposure shooting) only once. Thus, almost no increase in load during shooting is involved. Moreover, needless to say, performing motion blur detection and motion blur correction without the use of an angular velocity sensor or the like helps reduce the cost of the image-sensing apparatus 1.

One example of processing for finding a PSF - one based on Fourier iteration - has already been described with reference to Fig. 4. Now, in connection with that processing, additional explanations and modified examples will be given (with reference also to Fig. 5). In the processing shown in Fig. 4, the convolved image g and the deconvolved image f' in a space domain are converted by a Fourier transform into a frequency domain, and thereby the function G representing the convolved image g in the frequency domain and the function F' representing the deconvolved image f' in the frequency domain are found (needless to say, the frequency domain here is a two-dimensional frequency domain). From the thus found functions G and F', a function H representing a PSF in the frequency domain is found, and this function H is then converted by an inverse Fourier transform to a function on the space domain, namely a PSF h. This PSF h is then corrected according to a predetermined restricting condition to find a corrected PSF h'. The correction of the PSF here will henceforth be called the "first type of correction".

The PSF h' is then converted by a Fourier transform back into the frequency domain to find a function H', and from the functions H' and G, a function F is found, which represents the deconvolved image in the frequency domain. This function F is then converted by inverse Fourier transform to find a deconvolved image f on the space domain. This deconvolved image f is then corrected according to a predetermined restricting condition to find a corrected deconvolved image f. The correction of the deconvolved image here will henceforth be called the "second type of correction".

In the example described previously, as mentioned in the course of its description, thereafter, until the convergence condition is fulfilled in step S 118 in Fig. 4, the above processing is repeated on the corrected deconvolved image f; moreover, in view of the fact that, as the iteration converges, the amounts of correction decrease, the check of whether or not the convergence condition is fulfilled may be made based on the amount of correction made in step S 113, which corresponds to the first type of correction, or the amount of correction made in step S 117, which corresponds to the second type of correction. In a case where the check is made based on the amount of correction, a reference amount of correction is set beforehand, and the amount of correction in step S 113 or S 117 is compared with it so that, if the former is smaller than the latter, it is judged that the convergence condition is fulfilled. Here, when the reference amount of correction is set sufficiently large, the operations in steps S110 to S117 are not repeated. That is, in that case, the PSF h' obtained through a single session of the first type of correction is taken as the definitive PSF that is to be found in step S10 in Fig. 2 etc. In this way, even when the processing shown in Fig. 4 is adopted, the first and second types of correction are not always repeated.

An increase in the number of times of repetition of the first and second types of correction contributes to an increase in the accuracy of the definitively found PSF. In this - first - embodiment, however, the initially deconvolved image itself is already close to an image containing no motion blur, and therefore the accuracy of the PSF h' obtained through a single session of the first type of correction is acceptably satisfactorily high in practical terms. In view of this, the check itself in step S 118 may be omitted. In that case, the PSF h' obtained through the operation in step S113 performed once is taken as the definitive PSF to be found in step S 10 in Fig. 2 etc., and thus, from the function H' found through the operation in step S 114 performed once, the individual filter coefficients of the image deconvolution filter to be found in step S 11 in Fig. 2 etc. are found. Thus, in a case where the operation in step S 118 is omitted, the operations in steps S 115 to S 117 are also omitted.

In connection with the first embodiment, modified examples or supplementary explanations will be given below in Notes 1 to 6. Unless inconsistent, any part of the contents of these notes may be combined with any other.

**Note 1:** In Examples 1, 3, and 4 (see Figs. 3, 10, and 13), as described previously, the reference image A2, C2, or D2 is obtained by short-exposure shooting immediately after the ordinary-exposure shooting by which the correction target image is obtained. Instead, the reference image may be obtained by short-exposure shooting immediately before the ordinary-exposure shooting of the correction target image. In that case, as the reference image C3 or D3 in Examples 3 and 4, the through-display image of the frame immediately after the frame in which the correction target image is shot is taken.

**Note 2:** In each Example, in the process of generating from given small images a convolved image and an initially deconvolved image for Fourier iteration, each small image is subjected to one or more of the following types of processing: noise elimination; brightness normalization; edge extraction, and image size normalization (see Figs. 3, 7, 10, and 13). The specific manners in which these different types of processing are applied in respective Examples are merely examples, and may be modified in various ways. In an extreme case, in the process of generating a convolved image and an initially deconvolved image in any Example, each small area may be subjected to all of the four types of processing (although performing image size normalization in Example 1 is meaningless).

**Note 3:** To extract a characteristic small area containing a comparatively large edge component from the correction target image or the reference image, one of various methods may be adopted. For example, the AF evaluation value calculated in autofocus control may be used for the extraction. The autofocus control here employs a TTL (through-the-lens) contrast detection method.

The image-sensing apparatus 1 is provided with an AF evaluation portion (unillustrated). The AF evaluation portion divides a shot image (or a through-display image) into a plurality of sections and calculates, for each of these sections, an AF evaluation value commensurate with the amount of contrast in the image there. Referring to the AF evaluation value of one of those sections, the main control portion 13 shown in Fig. 1 controls the position of the focus lens of the image-sensing portion 11 by hill-climbing control such that the AF evaluation value takes the largest (or a maximal) value, so that an optical image of the subject is focused on the image-sensing surface of the image sensor.

In a case where such autofocus control is performed, when a characteristic small area is extracted from the correction target image or the reference image, the AF evaluation values for the individual sections of the extraction source image are referred to. For example, of all the AF evaluation values for the individual sections of the extraction source image, the largest one is identified, and the section (or an area determined relative to it) corresponding to the largest AF evaluation value is extracted as the characteristic small area. Since the AF evaluation value increases as the amount of contrast (or the edge component) in the section increases, this can be exploited to extract a small area containing a comparatively large edge component as a characteristic small area.

**Note 4:** The values specifically given in the description heretofore are merely examples, and may naturally be changed to any other values.

**Note 5:** The image-sensing apparatus 1 shown in Fig. 1 can be realized in hardware or in a combination of hardware and software. In particular, the functions of the components shown in Fig. 14 (except the memory 31) can be realized in hardware, in software, or in a combination of hardware and software, and these functions can be realized on an apparatus (such as a computer) external to the image-sensing apparatus 1.

When software is used to realize the image-sensing apparatus 1, that part of its block diagram which shows the components realized in software serves as a functional block diagram of those components. All or part of the functions realized by the different components (except 31) shown in Fig. 14 may be prepared in the form of a computer program so that those functions - all or part - are realized as the computer program is executed on a program execution apparatus (for example, a computer).

**Note 6:** In Fig. 14, the convolved image/initially deconvolved image setting portion 32 and the Fourier iteration processing portion 33 form a blur detection apparatus, and a blur correction apparatus is formed by, among other components, the filtering portion 34 and the ringing elimination portion 35. From this blur correction apparatus, the ringing elimination portion 35 may be omitted. The blur correction apparatus may also be regarded as including the blur detection apparatus. The blur detection apparatus may include the memory 31 (holder). In Fig. 1, the motion blur detection/correction portion 19 functions as a blur detection apparatus and also as a blur correction apparatus.

The Fourier iteration processing portion 33 on its own, or the convolved image/initially deconvolved image setting portion 32 and the Fourier iteration processing portion 33 combined together, function as means for generating motion blur information (a PSF, or the filter coefficients of an image deconvolution filter).

## SECOND EMBODIMENT

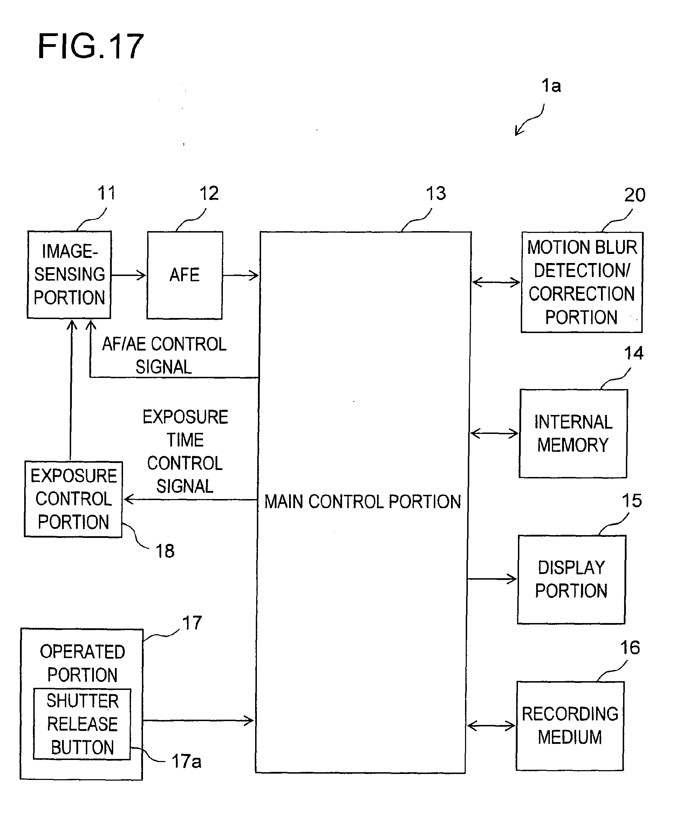

Next, a second embodiment of the invention will be described. The second embodiment is a modified example of the first embodiment, and, unless inconsistent, any feature in the first embodiment is applicable to the second embodiment. Fig. 17 is an overall block diagram of the image-sensing apparatus 1a of the second embodiment. The image-sensing apparatus 1a is formed of components identified by reference signs 11 to 18 and 20. That is, the image-sensing apparatus 1a is formed by replacing the motion blur detection/correction portion 19 in the image-sensing apparatus 1 with a motion blur detection/correction portion 20, and the two image-sensing apparatuses are otherwise the same.

Accordingly, no overlapping description of the same components will be repeated.

In the image-sensing apparatus 1a, when the shutter release button 17a is pressed in shooting mode, ordinary-exposure shooting is performed, and the shot image obtained as a result is, as a correction target image E1, stored in the memory. The exposure time (the length of the exposure time) with which the correction target image E1 is obtained is represented by T1. In addition, immediately before or after the ordinary-exposure shooting by which the correction target image E1 is obtained, short-exposure shooting is performed, and the shot image obtained as a result is, as a reference image E2, stored in the memory. The correction target image E1 and the reference image E2 are obtained by consecutive shooting (that is, in consecutive frames), but the main control portion 13 controls the image-sensing portion 11 via the exposure control portion 18 such that the exposure time with which the reference image E2 is obtained is shorter than the exposure time T1. For example, the exposure time of the reference image E2 is set at T1 / 4. The correction target image E1 and the reference image E2 have an equal image size.

The exposure time T1 may be compared with the threshold value $T_{TH}$ (the motion blur limit exposure time), mentioned in connection with the first embodiment, so that, if the former is smaller than the latter, it is judged that the correction target image contains no (or an extremely small amount of) blur attributable to motion, and no motion blur correction is performed. In that case, it is not necessary to perform the short-exposure shooting for obtaining the reference image E2.

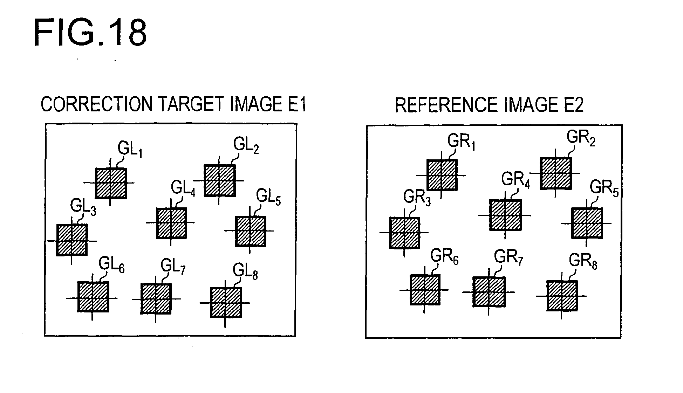

After the correction target image E1 and the reference image E2 are obtained, a characteristic small area is extracted from the reference image E2, and a small area corresponding to the small area extracted from the reference image E2 is extracted from the correction target image E1. The extracted small areas each have a size of, for example, 128 x 128 pixels. The significance of and the method for extracting a characteristic small area are the same as described in connection with the first embodiment. In the second embodiment, a plurality of characteristic small areas are extracted from the reference image E2. Accordingly, as many small areas are extracted from the correction target image E1. Suppose now that, as shown in Fig. 18, eight small areas are extracted from the reference image E2, and the images in those eight small areas (the images in the hatched areas) are called small images $GR_1$ to $GR_8$. On the other hand, eight small areas corresponding to the small images $GR_1$ to $GR_8$ are extracted from the correction target image E1, and the images in them (the images in the hatched areas) are called small images $GL_1$ to $GL_8$.

When i is an integer of 1 or more but 8 or less, the small images $GR_i$ and $GL_i$ have an equal image size (that is, the small images $GR_1$ to $GR_8$ and the small images $GL_1$ to $GL_8$ have an equal image size). In a case where the displacement between the correction target image E1 and the reference image E2 can be ignored, the small areas are extracted such that the center coordinates of each small image $GR_i$ (the center coordinates in the reference image E2) extracted from the reference image E2 are equal to the center coordinates of the corresponding small image $GL_i$ (the center coordinates in the correction target image E1) extracted from the correction target image E1. In a case where the displacement cannot be ignored, template matching or the like may be used to search for corresponding small areas (this applies equally to the first embodiment). Specifically, for example, with each small image $GR_i$ taken as a template, by the well-known template matching, a small area that is most similar to the template is searched for in the correction target image E1, and the image in the small area found as a result is taken as the small image $GL_i$.

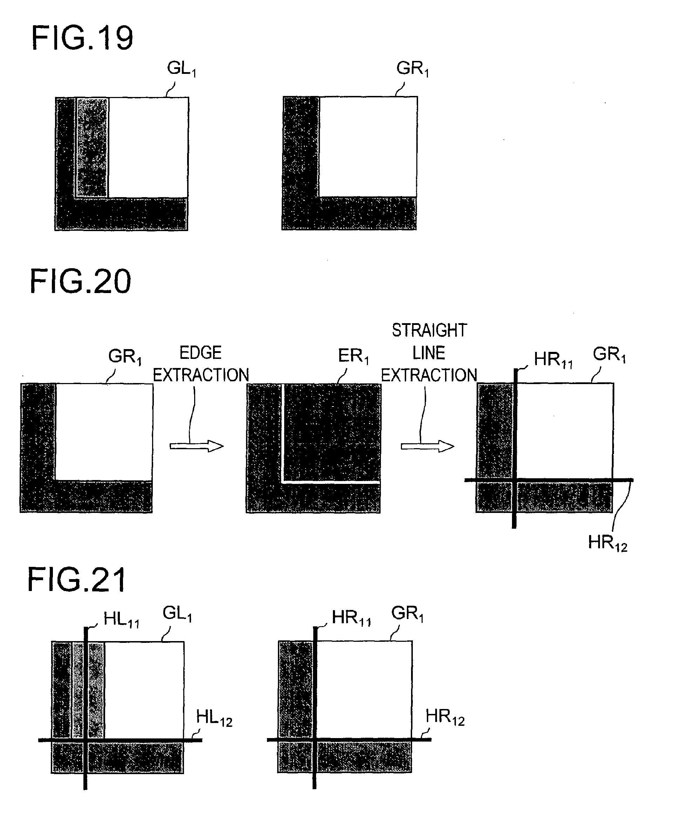

Fig. 19 is an enlarged view of small images $GL_1$ and $GR_1$. In Fig. 19, a high-brightness part is shown white, and a low-brightness part is shown black. Here, it is assumed that the small images $GL_1$ and $GR_1$ contain edges, where brightness sharply changes in the horizontal and vertical directions. It is also assumed that, within the exposure period of the correction target image E1 containing the small image $GL_1$, the image-sensing apparatus 1a was acted upon by motion (such as camera shake) in the horizontal direction. As a result, whereas the edges in the small image $GR_1$ obtained by short-exposure shooting have not blurred, the edges in the small image $GL_1$ obtained by ordinary-exposure shooting have blurred in the horizontal direction.

The small image $GR_1$ is subjected to edge extraction using an arbitrary edge detection operator to obtain an extracted-edge image $ER_1$ as shown in Fig. 20. In the extracted-edge image $ER_1$ shown in Fig. 20, a high-edge-intensity part is shown white, and a low-edge-intensity part is shown black. The part along the rectilinear edges in the small image $GR_1$ appears as a high-edge-intensity part in the extracted-edge image $ER_1$. The extracted-edge image $ER_1$ is then subjected to the well-known Huff conversion to extract straight lines along the edges. The extracted lines as overlaid on the small image $GR_1$ is shown in the right part of Fig. 20. In the example under discussion, extracted from the small image $GR_1$ are: a straight line $HR_{11}$ extending in the vertical direction; and a straight line $HR_{12}$ extending in the horizontal direction.

Thereafter, straight lines $HL_{11}$ and $HL_{12}$ corresponding to the straight lines $HR_{11}$ and $HR_{12}$ are extracted from the small image $GL_1$. Fig. 21 shows the extracted straight lines $HL_{11}$ and $HL_{12}$ as overlaid on the small image $GL_1$. Fig. 21 also shows the small image $GR_1$ with the straight lines $HR_{11}$ and $HR_{12}$ overlaid on it. The mutually corresponding straight lines run in the same direction; specifically, the straight lines $HL_{11}$ and $HR_{11}$ extend in the same direction, and so do the straight lines $HL_{12}$ and $HR_{12}$.

After the extraction of the straight lines, the distribution of brightness values in the direction perpendicular to each of those straight lines is found, in each of the small images. With respect to the small images $GL_1$ and $GR_1$, the

straight line $HL_{11}$ and the straight line $HR_{11}$ are parallel to the vertical direction of the images, and the straight line $HL_{12}$ and the straight line $HR_{12}$ are parallel to the horizontal direction of the image. Thus, with respect to the straight line $HL_{11}$ and the straight line $HR_{11}$, the distribution of brightness values in the horizontal direction of the images is found and, with respect to the straight line $HL_{12}$ and the straight line $HR_{12}$, the distribution of brightness values in the vertical direction of the images is found.

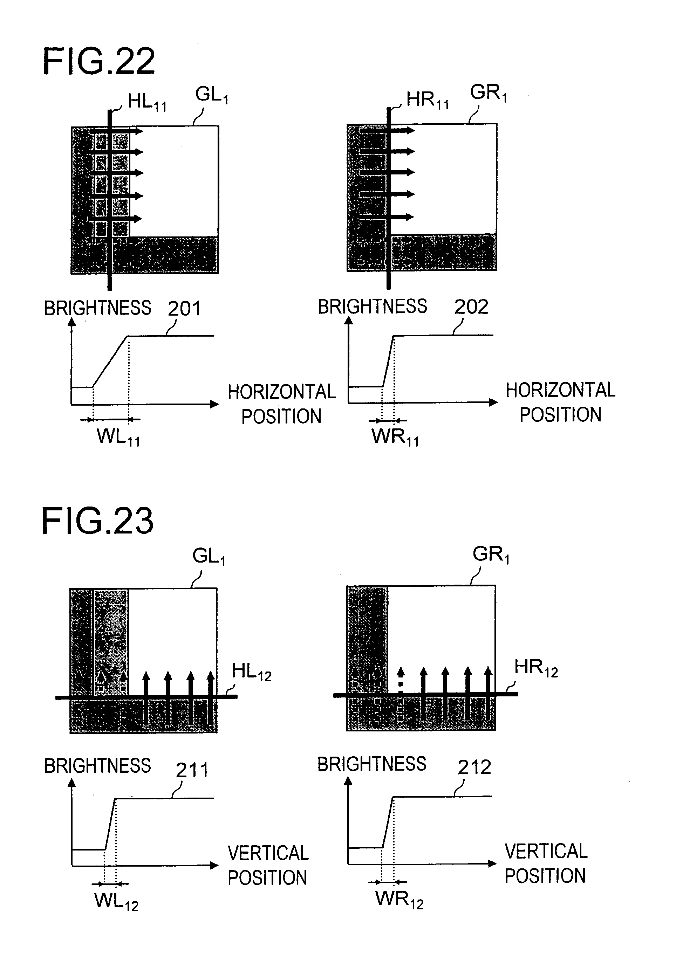

How the distribution of brightness values is found will now be described specifically with reference to Figs. 22 and 23. In Fig. 22, the solid-line arrows shown in the small image $GL_1$ indicate how brightness values are scanned in the direction perpendicular to the straight line $HL_{11}$. Since the direction perpendicular to the straight line $HL_{11}$ is horizontal, while scanning is performed from left to right starting at a given point at the left end of the small image $GL_1$, the brightness value of one pixel after another in the small image $GL_1$ is acquired, so that eventually the distribution of brightness values in the direction perpendicular to the straight line $HL_{11}$ is found. Here, the scanning is performed across the part where the edge corresponding to the straight line $HL_{11}$ lies. That is, the distribution of brightness values is found where the slope of brightness values is sharp. Accordingly, no scanning is performed along the broken-line arrows in Fig. 22 (the same applies in Fig. 23, which will be described later). A distribution found with respect to a single line (in the case under discussion, a horizontal line) is greatly affected by the noise component; thus, similar distributions are found along a plurality of lines in the small image $GL_1$, and the average of the found distributions is taken as the distribution 201 to be definitively found with respect to the straight line $HL_{11}$.

The distribution with respect to the straight line $HR_{11}$ is found likewise. In Fig. 22, the solid-line arrows shown in the small image $GR_1$ indicate how brightness values are scanned in the direction perpendicular to the straight line $HR_{11}$. Since the direction perpendicular to the straight line $HR_{11}$ is horizontal, while scanning is performed from left to right starting at a given point at the left end of the small image $GR_1$, the brightness value of one pixel after another in the small image $GR_1$ is acquired, so that eventually the distribution of brightness values in the direction perpendicular to the straight line $HR_{11}$ is found. Here, the scanning is performed across the part where the edge corresponding to the straight line $HR_{11}$ lies. That is, the distribution of brightness values is found where the slope of brightness values is sharp. Accordingly, no scanning is performed along the broken-line arrows in Fig. 22 (the same applies in Fig. 23, which will be described later). A distribution found with respect to a single line (in the case under discussion, a horizontal line) is greatly affected by the noise component; thus, similar distributions are found along a plurality of lines in the small image $GR_1$, and the average of the found distributions is taken as the distribution 202 to be definitively found with respect to the straight line $HR_{11}$.

In each of the graphs showing the distributions 201 and 202 in Fig. 22, the horizontal axis represents the horizontal position of pixels, and the vertical axis represents the brightness value. As will be understood from the distributions 201 and 202, the brightness value sharply changes across the edge part extending in the vertical direction of the images. In the distribution 201 corresponding to ordinary-exposure shooting, however, the change of the brightness value is comparatively gentle due to the motion during the exposure period. In the edge part in the small image $GL_1$ that corresponds to the straight line $HL_{11}$, the number of pixels in the horizontal direction that are scanned after the brightness value starts to change until it stops changing is represented by $WL_{11}$; in the edge part in the small image $GR_1$ that corresponds to the straight line $HR_{11}$, the number of pixels in the horizontal direction that are scanned after the brightness value starts to change until it stops changing is represented by $WR_{11}$. The thus found $WL_{11}$ and $WR_{11}$ are called the edge widths. In the example under discussion, "$WL_{11} > WR_{11}$". If the blur contained in the reference image E2 is ignored, the difference between the edge widths "$WL_{11} - WR_{11}$" is regarded as a value representing, in terms of number of pixels, the amount of motion blur that occurred in the horizontal direction during the exposure period of the correction target image E1.

The above-described processing for finding the edge width is performed for each of the straight lines extracted from the small images $GL_1$ and $GR_1$. In the example under discussion, edge widths as mentioned above are found also for the straight lines $HL_{12}$ and $HR_{12}$ extracted from the small images $GL_1$ and $GR_1$.

In Fig. 23, the solid-line arrows shown in the small image $GL_1$ indicate how brightness values are scanned in the direction perpendicular to the straight line $HL_{12}$. While scanning is performed in the vertical direction so as to cross the part where the edge corresponding to the straight line $HL_{12}$ lies, the brightness value of one pixel after another in the small image $GL_1$ is acquired, so that eventually the distribution of brightness values in the direction perpendicular to the straight line $HL_{12}$ is found. The scanning is performed along a plurality of lines (in the case under discussion, a vertical line), and the average of the found distributions is taken as the distribution 211 to be definitively found with respect to the straight line $HL_{12}$. In Fig. 23, the solid-line arrows shown in the small image $GR_1$ indicate how brightness values are scanned in the direction perpendicular to the straight line $HR_{12}$. While scanning is performed in the vertical direction so as to cross the part where the edge corresponding to the straight line $HR_{12}$ lies, the brightness value of one pixel after another in the small image $GR_1$ is acquired, so that eventually the distribution of brightness values in the direction perpendicular to the straight line $HR_{12}$ is found. The scanning is performed along a plurality of lines (in the case under discussion, a vertical line), and the average of the found distributions is taken as the distribution 212 to be definitively found with respect to the straight line $HR_{12}$.

Then, for the distributions 211 and 212, edge widths $WL_{12}$ and $WR_{12}$ are found. The edge width $WL_{12}$ represents the number of pixels in the vertical direction that are scanned, in the edge part in the small image $GL_1$ that corresponds to the straight line $HL_{12}$, after the brightness value starts to change until it stops changing; the edge width $WR_{12}$ represents the number of pixels in the vertical direction that are scanned, in the edge part in the small image $GR_1$ that corresponds to the straight line $HR_{12}$, after the brightness value starts to change until it stops changing. In the example under discussion, "$WL_{12} \approx WR_{12}$". This corresponds to the fact that almost no motion blur occurred in the vertical direction during the exposure period of the correction target image E1.

In the same manner as the edge widths are calculated with respect to the small images $GL_1$ and $GR_1$ as described above, the edge widths and their differences are found also with respect to the other small images $GL_2$ to $GL_8$ and $GR_2$ to $GR_8$. When the number of a given small image is represented by the variable i and the number of a given straight line is represented by the variable j (i and j are integers), then, first, the straight lines $HL_{ij}$ and $HR_{ij}$ are extracted from the small images $GL_i$ and $GR_i$, and then the edge widths $WL_{ij}$ and $WR_{ij}$ with respect to the straight lines $HL_{ij}$ and $HR_{ij}$ are found. Thereafter, the differences $D_{ij}$ of the edge widths are calculated according to the formula $D_{ij} = WL_{ij} - WR_{ij}$. When, for example, two straight lines are extracted from each of the small images $GL_1$ to $GL_8$, then a total of 16 edge width differences $D_{ij}$ are found (here, i is an integer of 1 or more but 8 or less, and j is 1 or 2).

In the second embodiment, the pair of straight lines corresponding to the largest of the differences $D_{ij}$ thus found is identified as the pair of straight lines for motion blur detection and, from the edge width difference and the direction of those straight lines corresponding to this pair, the PSF with respect to the entire correction target image E1 is found.

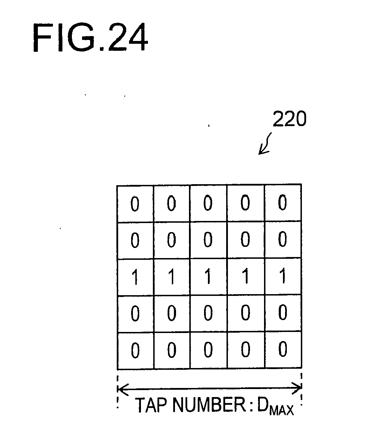

For example, suppose that, of the differences $D_{ij}$ found, the difference $D_{11}$ (= $WL_{11} - WR_{11}$) corresponding to Fig. 22 is the largest. In this case, the pair of straight lines $HL_{11}$ and $HR_{11}$ is identified as the one for motion blur detection, and the difference $D_{11}$ corresponding to the straight lines $HL_{11}$ and $HR_{11}$ is substituted in the variable $D_{MAX}$ representing the largest difference. Then, a smoothing function for smoothing the image in the direction perpendicular to the straight line $HL_{11}$ is created. As shown in Fig. 24, this smoothing function is expressed as a space filter 220 having a tap number (filter size) of $D_{MAX}$ in the direction perpendicular to the straight line $HL_{11}$. In this filter, only the elements lying in the direction perpendicular to the straight line $HL_{11}$ is given a fixed filter coefficient other than 0, and the other elements are given a filter coefficient of 0. The space filter shown in Fig. 24 has a filter size of 5 x 5; it gives a filter coefficient of 1 only to each of the elements in the horizontally middle row, and gives a filter coefficient of 0 to the other elements. In practice, normalization is performed such that the sum of all the filter coefficients equals 1.

Then, with this smoothing function taken as the PSF for the entire E1, the motion blur detection/correction portion 20 corrects the motion blur in the correction target image E1. The PSF found as described above works well on the assumption that the direction and speed of the motion that acted upon the image-sensing apparatus 1a during the exposure period of the correction target image E1 is fixed. If this assumption is true, and the above smoothing function accurately represents the PSF of the correction target image E1, then, by subjecting an ideal image containing no blur to space filtering using the space filter 220, it is possible to obtain an image equivalent to the correction target image E1.

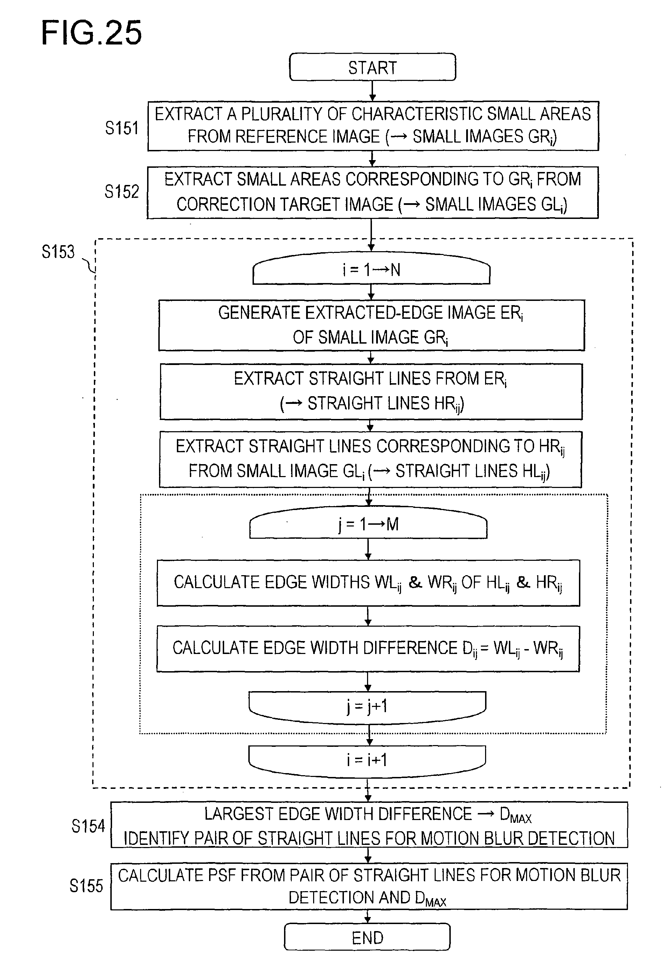

Fig. 25 is a flow chart showing the flow of operations for motion blur detection, including the operations for the above processing. The operations in steps S151 to S155 are performed by the motion blur detection/correction portion 20.

After the correction target image E1 and the reference image E2 are acquired, in step S151, a plurality of characteristic small areas are extracted from the reference image E2, and the images in those small areas are, as small images $GR_i$, stored in the memory. Next, in step S 152, small areas respectively corresponding to the small images $GR_i$ are extracted from the correction target image E1, and the images in the small areas extracted from the correction target image E1 are, as small images $GL_i$, stored in the memory. Now, in the memory are present, for example, small images $GL_1$ to $GL_8$ and $GR_1$ to $GR_8$ as shown in Fig. 18.

After the operation in step S152, the flow proceeds to step S153. In step S153, a loop for the variable i is executed, and this loop includes an internal loop for the variable j. In step S153, from a small image $GR_i$, an extracted-edge image $ER_i$ is generated, and then, from the extracted-edge image $ER_i$, one or more straight lines $HR_{ij}$ are extracted, and then straight lines $HL_{ij}$ corresponding to the straight lines $HR_{ij}$ are extracted from a small image $GL_i$. Then, with respect to every pair of mutually corresponding $HL_{ij}$ and $HR_{ij}$, their edge widths $WL_{ij}$ and $WR_{ij}$ are calculated, and the difference $D_{ij}$ (=$WL_{ij} - WR_{ij}$) between these is found. In step S153, the same operations are performed for each of the values that the variable i can take and for each of the values that the variable j can take. As a result, when the flow proceeds from step S153 to step S 154, the differences $D_{ij}$ for all the combinations of i and j have been calculated. For example, in a case where, in step S151, eight small areas are extracted and thus small images $GR_1$ to $GR_8$ are generated and then two straight lines are extracted from each of the small images $GR_1$ to $GR_8$ are extracted, a total of 16 edge width differences $D_{ij}$ are found (here, i is an integer of 1 or more but 8 or less, and j is 1 or 2).

In step S154, the largest $D_{MAX}$ of all the edge width differences $D_{ij}$ found in step S 153 is identified, and the pair of straight lines corresponding to the largest difference $D_{MAX}$ is identified as the pair of straight lines for motion blur detection. Then, in step S155, from this pair of straight lines for motion blur detection and the largest difference $D_{MAX}$, a PSF expressed as a smoothing function is calculated. For example, if, of all the differences $D_{ij}$ found, the difference

$D_{11}$ (=$WL_{11}$ - $WR_{11}$) corresponding to Fig. 22 is the largest difference $D_{MAX}$, the pair of straight lines $HL_{11}$ and $HR_{11}$ is identified as the one for motion blur detection, and the PSF expressed by the space filter 220 shown in Fig. 24 is calculated.

After the PSF is calculated, motion blur correction proceeds through the same operations as described in connection with the first embodiment. Specifically, the motion blur detection/correction portion 20 finds, as the filter coefficients of an image deconvolution filter, the individual elements of the inverse matrix of the PSF found in step S 155, and then, with the image deconvolution filter having those filter coefficients, filters the entire correction target image E1. Then, the image having undergone the filtering, or the image having further undergone ringing elimination, is taken as the definitive corrected image. This corrected image is one in which the blur contained in the correction target image E1 has been eliminated or reduced.

In the second embodiment, a PSF (in other words, a convolution function) as an image convolution filter is found on the assumption that the direction and speed of the motion that acted upon the image-sensing apparatus 1 a during the exposure period of the correction target image E1 is fixed. Thus, with motion to which this assumption does not apply, the effect of correction is lower. Even then, a PSF can be found in a simple fashion with a small amount of processing, and this is practical.

In the second embodiment, Example 2 described previously (see Fig. 7) may be applied so that, from the through-display image acquired immediately before or after the ordinary-exposure shooting for obtaining the correction target image E1, the reference image E2 is generated (here, however, the exposure time of the through-display image needs to be shorter than that of the correction target image E1). In a case where the image size of the through-display image is smaller than that of the correction target image E1, the through-display image may be subjected to image enlargement such that the two images have an equal image size to generate the reference image E2. Conversely, the image obtained by ordinary-exposure shooting may be subjected to image reduction such that the two images have an equal image size.

In the second embodiment, Example 4 described previously (see Fig. 13) may be applied so that, from one of two reference images acquired immediately before and after the ordinary-exposure shooting for obtaining the correction target image E1, the reference image E2 is generated. One of the two reference images can be a through-display image. Needless to say, the exposure time of each of the two reference images needs to be shorter than that of the correction target image E1.

What is noted in Notes 3 to 5 previously given in connection with the first embodiment may be applied to the second embodiment. The motion blur detection/correction portion 20 in Fig. 17 functions as a blur detection apparatus, and also functions as a blur correction apparatus. The motion blur detection/correction portion 20 incorporates a blur information creator that creates a PSF for the entire correction target image and an extractor that extracts parts of the correction target image and the reference image as small images.

**THIRD EMBODIMENT**

Next, a third embodiment of the invention will be described. An image obtained by short-exposure shooting (hereinafter also referred to as a "short-exposure image") contains less blur than an image obtained by ordinary-exposure shooting (hereinafter also referred to as an "ordinary-exposure image"), and this makes the motion blur correction methods described heretofore very useful. A short-exposure image, however, is not completely unaffected by motion blur; a short-exposure image may contain an unignorable degree of blur due to motion (such as camera shake) of an image-shooting apparatus or motion (in the real space) of the subject during the exposure period of the short-exposure image. Thus, in the third embodiment, a plurality of short-exposure images are acquired by performing short-exposure shooting a plurality of times and, from these short-exposure images, a reference image to be used in the correction of motion blur in an ordinary-exposure image is generated.

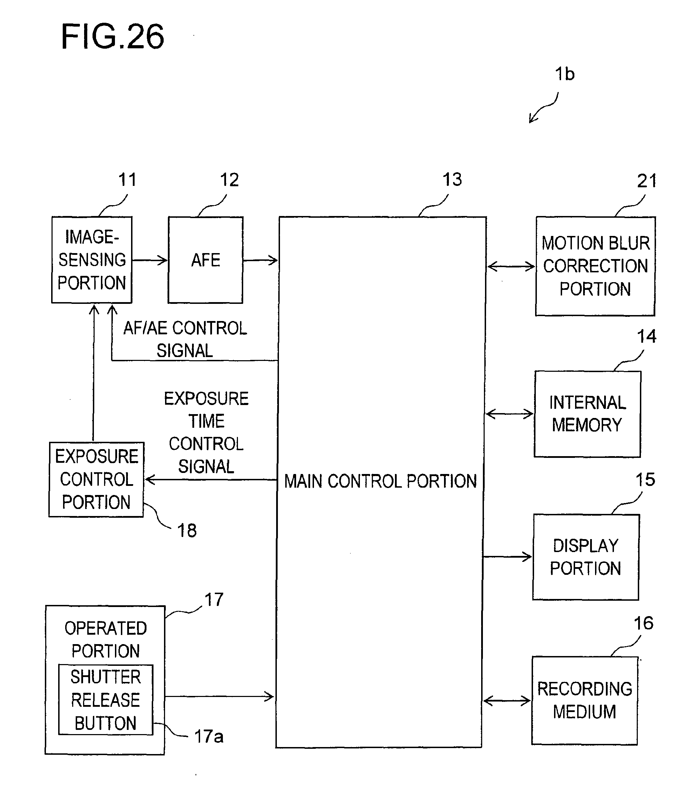

Fig. 26 is an overall block diagram of the image-sensing apparatus 1b of the third embodiment of the invention. The image-sensing apparatus 1b is provided with components identified by reference signs 11 to 18 and 21. The components identified by reference signs 11 to 18 are the same as those in Fig. 1, and accordingly no overlapping description of the same components will be repeated. The image-sensing apparatus 1b is obtained by replacing the motion blur detection/correction portion 19 in the image-sensing apparatus 1 with a motion blur correction portion 21.

In the shooting mode, when the shutter release button 17a is pressed, ordinary-exposure shooting is performed, and the main control portion 13 saves (that is, stores) image data representing a single shot image obtained as a result on the recording medium 16 and in the internal memory 14. This shot image can contain blur resulting from motion, and will later be corrected by the motion blur correction portion 21 automatically or according to a correction instruction fed via the operated portion 17 etc. For this reason, as in the first embodiment, the single shot image obtained by ordinary-exposure shooting as described above is especially called the "correction target image". The motion blur correction portion 21 corrects the blur contained in the correction target image based on the image data obtained from the output signal of the image-sensing portion 11, without the use of a motion detection sensor such as an angular velocity sensor.

Hereinafter, the function of the motion blur correction portion 21 will be described in detail by way of practical examples, namely Examples 6 to 11. Unless inconsistent, any feature in one of these Examples is applicable to any other. It should be noted that, in the following description, what is referred to simply as the "memory" refers to the internal memory 14 or an unillustrated memory provided within the motion blur correction portion 21.

**Example 6**

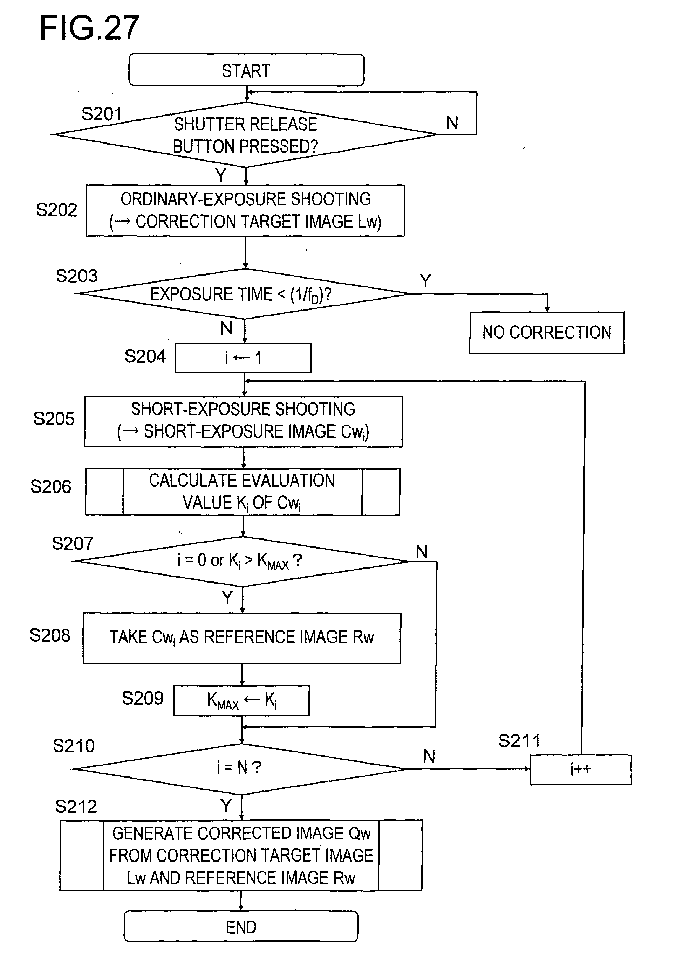

First, Example 6 will be described. In Example 6, out of a plurality of short-exposure images, one that is estimated to contain the least blur is selected. The thus selected short-exposure image is taken as the reference image, and an image obtained by ordinary-exposure shooting is taken as the correction target image, so that, based on the correction target image and the reference image, the motion blur in the correction target image is corrected. Fig. 27 is a flow chart showing the flow of operations for motion blur correction in the image-sensing apparatus 1b. Now, with reference to this flow chart, the operation of the image-sensing apparatus 1b will be described.

In shooting mode, when the shutter release button 17a is pressed, ordinary-exposure shooting is performed, and the ordinary-exposure image generated as a result is, as a correction target image $Lw$, stored in the memory (steps S201 and S202). Next, in step S203, the exposure time T1 with which the correction target image $Lw$ was obtained is compared with a threshold value $T_{TH}$ and, if the exposure time T1 is smaller than the threshold value $T_{TH}$, it is judged that the correction target image $Lw$ contains no (or an extremely small amount of) blur attributable to motion, and the flow shown in Fig. 27 is ended without performing motion blur correction. The threshold value $T_{TH}$ is, for example, the motion blur limit exposure time, which is calculated from the reciprocal of the focal distance $f_D$.

If the exposure time T1 is larger than the threshold value $T_{TH}$, under the control of the main control portion 13, following the ordinary-exposure shooting, short-exposure shooting is performed N times consecutively to acquire short-exposure images $Cw_1$ to $Cw_N$. Then, by performing the operations in steps S206 to S209, the motion blur correction portion 21 calculates evaluation values $K_1$ to $K_N$ for the short-exposure images $Cw_1$ to $Cw_N$ and, based on the evaluation values $K_1$ to $K_N$, selects one of the short-exposure images $Cw_1$ to $Cw_N$ as a reference image. Here, N is an integer of 2 or more, and is, for example, 4. The correction target image $Lw$ and the short-exposure images $Cw_1$ to $Cw_N$ are obtained by consecutive shooting, but the main control portion 13 controls the exposure control portion 18 such that the exposure time with which each of the short-exposure images is obtained is shorter than the exposure time T1. For example, the exposure time of each short-exposure image is set at T1 / 4. The correction target image $Lw$ and the short-exposure images all have an equal image size.

Now, the operation performed in each step will be described more specifically. If the exposure time T1 is larger than the threshold value $T_{TH}$, the flow proceeds from step S203 to step S204. In step S204, a variable i is introduced and, as an initial value, 1 is substituted in the variable i. Then, in step S205, short-exposure shooting is performed once, and the short-exposure image obtained as a result is, as a short-exposure image $Cw_i$, stored in the memory. This memory is a short-exposure image memory that can store the image data of a single short-exposure image. Thus, for example, when i = 1, a short-exposure image $Cw_1$ is stored in the short-exposure image memory, and, when i = 2, a short-exposure image $Cw_2$ is stored, on an overwriting basis, in the short-exposure image memory.

Subsequent to step S205, in step S206, the motion blur correction portion 21 calculates an evaluation value $K_i$ for the short-exposure image $Cw_i$. In principle, the evaluation value $K_i$ takes a value corresponding to the magnitude of blur (henceforth also referred to as "the amount of blur") contained in the short-exposure image $Cw_i$. Specifically, the smaller the amount of blur in the short-exposure image $Cw_i$, the larger the corresponding evaluation value $K_i$ (how an evaluation value $K_i$ is calculated in normal and exceptional cases will be described in detail later, in the course of the description of Example 9).

Thereafter, in step S207, the newest evaluation value $K_i$ is compared with the variable $K_{MAX}$ that represents the largest of the evaluation values calculated heretofore (namely, $K_1$ to $K_{i-1}$). If the former is larger than the latter, or if the variable i equals 1, then, in step S208, the short-exposure image $Cw_i$ is, as a reference image $Rw$, stored in the memory, then, in step S209, the evaluation value $K_i$ is substituted in the variable $K_{MAX}$, and then the flow proceeds to step S210. By contrast, if i ≠ 1 and in addition $K_i \leq K_{MAX}$, then the flow proceeds directly from step S207 to step S210. In step S210, whether or not the variable i equals the value of N is checked. If i = N, the flow proceeds from step S210 to step S212; if i ≠ N, the flow proceeds from step S210 to step S211, where the variable i is incremented by 1, and then the flow returns to step S205 so that the above-described operations in step S205 and the following steps are repeated.

Thus, the operations in steps S205 and S206 are performed N times and, when the flow reaches step S212, the evaluation values $K_1$ to $K_N$ for all the short-exposure images $CW_1$ to $CW_N$ have been calculated, with the largest of the evaluation values $K_1$ to $K_N$ substituted in the variable $K_{MAX}$, and the short-exposure image corresponding to the largest value stored as the reference image $Rw$ in the memory. For example, if the evaluation value $K_{N-1}$ is the largest of the evaluation values $K_1$ to $K_N$ then, with the short-exposure images $CW_{N-1}$ stored as the reference image $Rw$ in the memory, the flow reaches step S212. Here, the memory in which the reference image $Rw$ is stored is a reference image memory that can store the image data of a single reference image. Thus, when new image data needs to be stored in the reference image memory, the memory area in which the old image data is stored is overwritten with the new image data.

In step S212, the motion blur correction portion 21 performs motion blur correction on the correction target image Lw based on the reference image Rw stored in the reference image memory and the correction target image Lw obtained in step S202 to generate a corrected image Qw in which the blur contained in the correction target image Lw has been reduced (how the correction is performed will be described later in connection with Example 10). The corrected image Qw is recorded in the recording medium 16 and is also displayed on the display portion 15.

By generating the reference image Rw as described above, even if, for example, large motion of the image-shooting apparatus or of the subject occurs in part of the period during which a plurality of short-exposure images are shot, it is possible to select as the reference image Rw a short-exposure image that is least affected by motion. This makes it possible to perform motion blur correction accurately. Generally, motion diminishes the high-frequency component of an image; using as a reference image the short-exposure image least affected by motion permits the effect of motion blur correction to extend to a higher-frequency component. Moreover, by performing the operations in steps S205 to S211 so that the short-exposure image and the reference image are stored in an overwriting basis, it is possible to reduce the memory capacity needed in each of the short-exposure image memory and the reference image memory to that for a single image.

**Example 7**

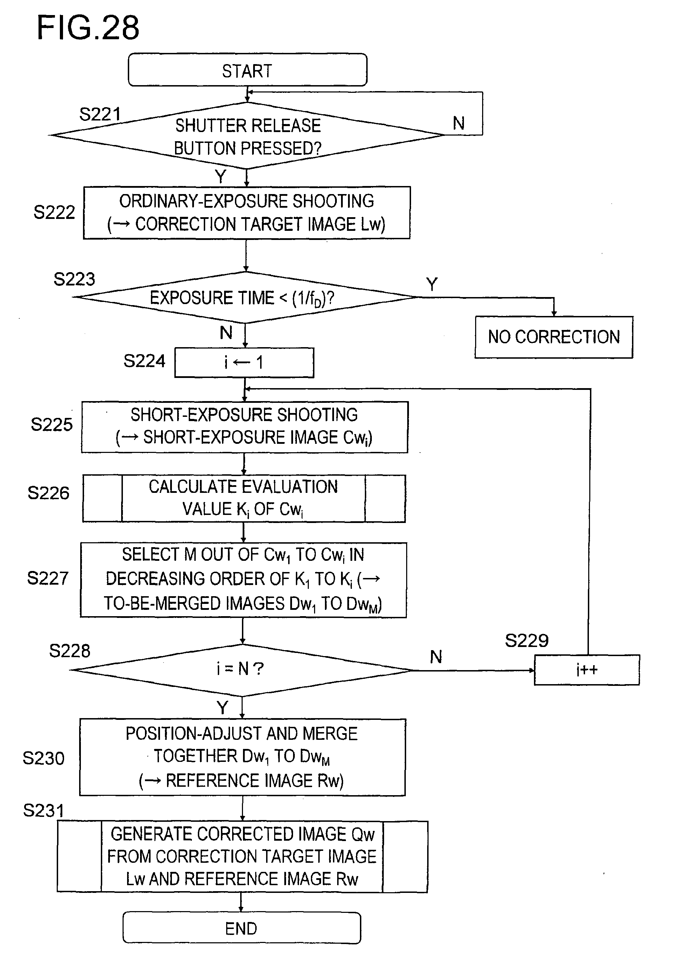

Next, Example 7 will be described. In Example 7, out of a plurality of short-exposure images, two or more that are estimated to contain a comparatively small amount of blur are selected, and the thus selected short-exposure images are merged together to generate a single reference image. Then, based on the thus generated reference image and a correction target image obtained by ordinary-exposure shooting, the motion blur in the correction target image is corrected. Fig. 28 is a flow chart showing the flow of operations for motion blur correction in the image-sensing apparatus 1b. Now, with reference to this flow chart, the operation of the image-sensing apparatus 1b will be described.

In shooting mode, when the shutter release button 17a is pressed, ordinary-exposure shooting is performed, and the ordinary-exposure image generated as a result is, as a correction target image Lw, stored in the memory (steps S221 and S222). Next, in step S223, the exposure time T1 with which the correction target image Lw was obtained is compared with a threshold value $T_{TH}$ and, if the exposure time T1 is smaller than the threshold value $T_{TH}$, it is judged that the correction target image Lw contains no (or an extremely small amount of) blur attributable to motion, and the flow shown in Fig. 28 is ended without performing motion blur correction.

If the exposure time T1 is larger than the threshold value $T_{TH}$, under the control of the main control portion 13, following the ordinary-exposure shooting, short-exposure shooting is performed N times consecutively to acquire short-exposure images $Cw_1$ to $Cw_N$. Then, by performing the operations in steps S226 and S227, the motion blur correction portion 21 calculates evaluation values $K_1$ to $K_N$ for the short-exposure images $Cw_1$ to $Cw_N$ and, based on the evaluation values $K_1$ to $K_N$, selects M of the short-exposure images $Cw_1$ to $Cw_N$. Here, M is an integer of 2 or more, and fulfills the inequality N > M. Accordingly, in Example 7, N needs to be an integer of 3 or more. For example, N = 4. The correction target image Lw and the short-exposure images $Cw_1$ to $Cw_N$ are obtained by consecutive shooting, but the main control portion 13 controls the exposure control portion 18 such that the exposure time with which each of the short-exposure images is obtained is shorter than the exposure time T1. For example, the exposure time of each short-exposure image is set at T1 / 4. The correction target image Lw and the short-exposure images all have an equal image size.

Now, the operation performed in each step will be described more specifically. If the exposure time T1 is larger than the threshold value $T_{TH}$, the flow proceeds from step S223 to step S224. In step S224, a variable i is introduced and, as an initial value, 1 is substituted in the variable i. Then, in step S225, short-exposure shooting is performed once, and the short-exposure image obtained as a result is, as a short-exposure image $Cw_i$, stored in the memory. This memory is a short-exposure image memory that can store the image data of a single short-exposure image. Thus, for example, when i = 1, a short-exposure image $Cw_1$ is stored in the short-exposure image memory, and, when i = 2, a short-exposure image $Cw_2$ is stored, on an overwriting basis, in the short-exposure image memory.

Subsequent to step S225, in step S226, the motion blur correction portion 21 calculates an evaluation value $K_i$ for the short-exposure image $Cw_i$ (how it is calculated will be described in detail later in connection with Example 9). The $K_i$ calculated here is the same as that calculated in step S206 in Fig. 27.

Thereafter, in step S227, the evaluation values $K_1$ to $K_i$ calculated heretofore are arranged in decreasing order, and the M short-exposure images corresponding to the largest to M-th largest evaluation values are selected from the i short-exposure images $Cw_1$ to $Cw_i$. The thus selected M short-exposure images are, as to-be-merged images $Dw_1$ to $Dw_M$, recorded in the memory. For example, in a case where i = 3 and M = 2 and in addition the inequality $K_1 < K_2 < K_3$ holds, out of three short-exposure images $Cw_1$ to $Cw_3$, two $Cw_2$ and $Cw_3$ are selected, and these short-exposure images $Cw_2$ and $Cw_3$ are, as to-be-merged images $Dw_1$ and $Dw_2$, recorded in the memory. Needless to say, while the variable i is so small that the inequality i < M holds, the total number of short-exposure images already acquired is less than M, in which case the short-exposure images $Cw_1$ to $Cw_i$ are recorded intact in the memory as to-be-merged images $Dw_1$ to $Dw_i$. The memory in which the to-be-merged images are recorded is a to-be-merged image memory that can store the image data of M to-be-merged images; when, with the image data of M images already stored there, a need to store new image data arises, the memory area in which unnecessary old image data is recorded is overwritten with the new image data.

Subsequent to step S227, in step S228, whether or not the variable i equals to the value of N is checked. If i = N, the flow proceeds from step S228 to step S230; if i ≠ N, the flow proceeds from step S228 to step S229, where the variable i is incremented by 1, and then the flow returns to step S225 so that the above-described operations in step S225 and the following steps are repeated. Thus, the operations in steps S225 to S227 are repeated N times and, when the flow reaches step S230, the evaluation values $K_1$ to $K_N$ for all the short-exposure images $CW_1$ to $CW_N$ have been calculated, and the M short-exposure images corresponding to the largest to M-th largest of the evaluation values $K_1$ to $K_N$ have been stored, as to-be-merged images $Dw_1$ to $Dw_M$, in the to-be-merged image memory.

In step S230, the motion blur correction portion 21 adjusts the positions of the to-be-merged images $Dw_1$ to $Dw_M$ relative to one another and merges them together to generate a single reference image Rw. For example, with the to-be-merged image $Dw_1$ taken as a datum image and the other to-be-merged images $Dw_2$ to $Dw_M$ each taken as a non-datum image, the positions of the individual non-datum images are adjusted to that of the datum image, and then all the images are merged together. The "position adjustment" here has the same significance as the later described "displacement correction".

A description will now be given of how a single datum image and a single non-datum image are position-adjusted and merged. For example, by use of the Harris corner detector, a characteristic small area (for example, a small area of 32 x 32 pixels) is extracted from the datum image. A characteristic small area denotes a rectangular area that is located in the extraction source image and that contains a comparatively large edge component (in other words, has high contrast); it is, for example, an area containing a characteristic pattern. A characteristic pattern denotes a pattern, like a corner part of an object, that has changes in brightness in two or more directions and that thus permits its position (in an image) to be detected easily through image processing based on those changes in brightness. The image of such a small area extracted from the datum image is taken as a template, and, by template matching, a small area most similar to the template is searched for in the non-datum image. Then, the difference between the position of the small area found as a result (its position in the non-datum image) and the position of the small area extracted from the datum image (its position in the datum image) is calculated as a displacement Δd. The displacement Δd is a two-dimensional quantity containing a horizontal and a vertical component, and is expressed as a so-called motion vector. The non-datum image can be regarded as an image displaced by the displacement Δd relative to the datum image. Thus, the non-datum image is then subjected to coordinate conversion (such as affine conversion) so that the displacement Δd is canceled, and thereby the displacement of the non-datum image is corrected. For example, geometric conversion parameters for the coordinate conversion are found, and the coordinates of the non-datum image are converted to those in a coordinate system in which the datum image is defined, and thereby the displacement is corrected. Thus, through displacement correction, a pixel located at coordinates (x + Δdx, y + Δdy) before displacement correction is converted to a pixel located at coordinates (x, y). Δdx and Δdy are the horizontal and vertical components, respectively, of Δd. Then, the datum image and the non-datum image after displacement correction are merged together. The pixel signal of the pixel located at coordinates (x, y) in the image obtained as a result of the merging is the sum of the pixel signal of the pixel located at coordinates (x, y) in the datum image and the pixel signal of the pixel located at coordinates (x, y) in the non-datum image after displacement correction.

The position adjustment and merging described above are performed on each non-datum image. As a result, an image having the to-be-merged image $Dw_1$ and the displacement-corrected to-be-merged images $Dw_2$ to $Dw_M$ merged together is obtained. The thus obtained image is; as a reference image Rw, stored in the memory. The displacement correction above may be performed by extracting a plurality of characteristic small areas from the datum image, then searching a plurality of small areas corresponding to those small areas in the non-datum image by template matching, and then finding the above-mentioned geometric conversion parameters based on the positions, in the datum image, of the small areas extracted from it and the positions, in the non-datum image, of the small areas found in it.

After the reference image Rw is generated in step S230, in step S231, based on the thus generated reference image Rw and the correction target image Lw obtained in step S222, the motion blur correction portion 21 performs motion blur correction on the correction target image Lw to generate a corrected image Qw in which the blur contained in the correction target image Lw has been corrected (how the correction performed will be described later in connection with Example 10). The corrected image Qw is recorded in the recording medium 16 and is also displayed on the display portion 15.

By generating the reference image Rw as described above, even if, for example, large motion of the image-shooting apparatus or of the subject occurs in part of the period during which a plurality of short-exposure images are shot, it is possible prevent, through the evaluation value comparison calculation, a short-exposure image obtained in that part of the period from being counted as a to-be-merged image. This makes it possible to perform motion blur correction accurately. Moreover, the reference image Rw is generated by position-adjusting and merging together M short-exposure images. Thus, while the amount of blur in the reference image Rw is equivalent to that of a single short-exposure image, the pixel value additive merging permits the reference image Rw to have an S/N ratio (signal-to-noise ratio) higher than that of a single short-exposure image. This makes it possible to perform motion blur correction more accurately. Moreover, by performing the operations in steps S225 to S229 so that the short-exposure image and the to-be-merged images are stored in an overwriting basis, it is possible to reduce the memory capacity needed in the short-exposure image memory to that for a single image and the memory capacity needed in the to-be-merged image memory to that for M images.

**Example 8**

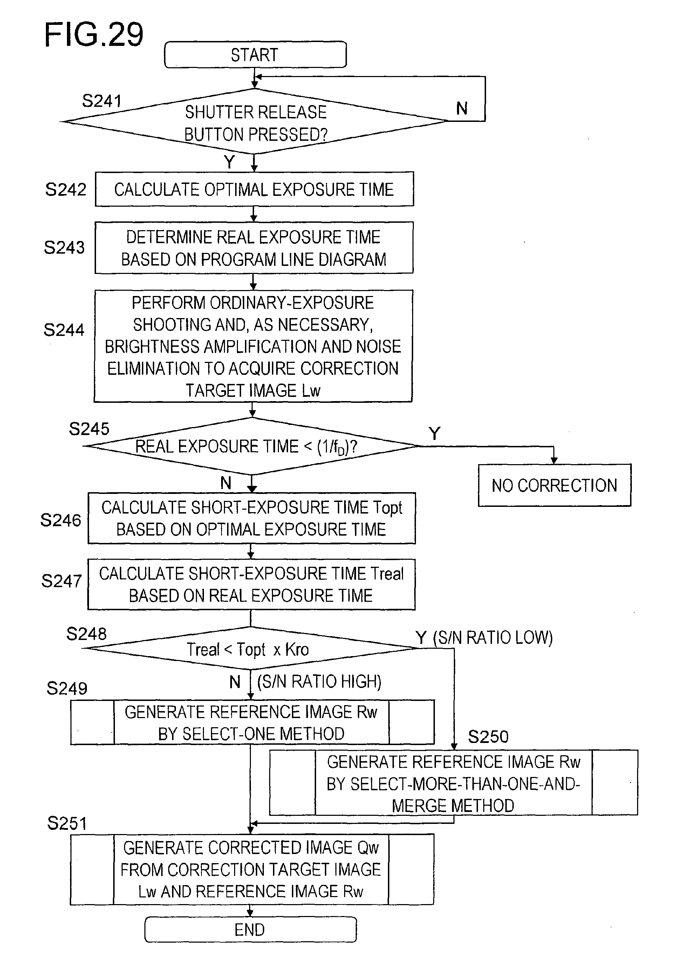

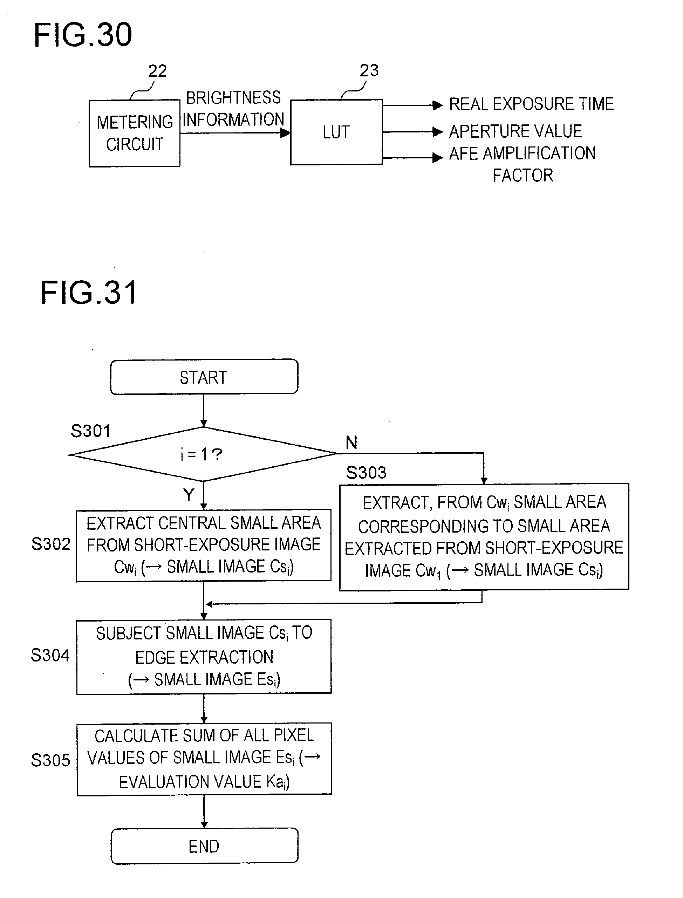

Next, Example 8 will be described. In Example 8, motion blur correction is performed selectively either by use of the reference image generation method of Example 6 (hereinafter also referred to as the "select-one" method) or by use of the reference image generation method of Example 7 (hereinafter also referred to as the "select-more-than-one-and-merge" method). The switching is performed based on an estimated S/N ratio of short-exposure images. Fig. 29 is a flow chart showing the flow of operations for such motion blur correction in the image-sensing apparatus 1b. Now, with reference to this flow chart, the operation of the image-sensing apparatus 1b will be described. Fig. 30 is also referred to.

Fig. 30 shows a metering circuit 22 and a LUT (look-up table) 23 provided in the image-sensing apparatus 1b.

In shooting mode, when the shutter release button 17a is pressed, the main control portion 13 acquires brightness information from the metering circuit 22 and, based on the brightness information, calculates the optimal exposure time for the image sensor of the image-sensing portion 11 (steps S241 and S242). The metering circuit 22 measures the brightness of the subject (in other words, the amount of light entering the image-sensing portion 11) based on the output signal from a metering sensor (unillustrated) or the image sensor. The brightness information represents the result of this measurement. Next, in step S243, the main control portion 13 determines the actual exposure time (hereinafter referred to as the real exposure time) based on the optimal exposure time and a program line diagram set beforehand. In the LUT 23, table data representing the program line diagram is stored beforehand; when brightness information is inputted to the LUT 23, according to the table data, the LUT 23 outputs an real exposure time, an aperture value, and an amplification factor of the AFE 12. Based on the output of the LUT 23, the main control portion 13 determines the real exposure time. Furthermore, according to the aperture value and the amplification factor of the AFE 12 as outputted from the LUT 23, the aperture value (the degree of opening of the aperture of the image-sensing portion 11) and the amplification factor of the AFE 12 for ordinary- and short-exposure shooting are defined.

Next, in step S244, ordinary-exposure shooting is performed with the real exposure time determined in step S243 and the ordinary-exposure image generated as a result is, as a correction target image Lw, stored in the memory. If, however, the real exposure time is shorter than the optimal exposure time, a pixel-value-amplified image obtained by multiplying each pixel value of the ordinary-exposure image by a fixed value such as to compensate for the underexposure corresponding to the ratio of the real exposure time to the optimal exposure time is, as the correction target image Lw, stored in the memory. Here, as necessary, the pixel-value-amplified image may be subjected to noise elimination so that the pixel-value-amplified image having undergone noise elimination is, as the correction target image Lw, stored in the memory. The noise elimination here is achieved by filtering the pixel-value-amplified image with a linear filter (such as a weighted averaging filter) or a non-linear filter (such as a median filter).

Thereafter, in step S245, the real exposure time with which the correction target image Lw was obtained is compared with the above-mentioned threshold value $T_{TH}$ and, if the real exposure time is smaller than the threshold value $T_{TH}$, it is judged that the correction target image Lw contains no (or an extremely small amount of) blur attributable to motion, and the flow shown in Fig. 29 is ended without performing motion blur correction.

If the real exposure time is larger than the threshold value $T_{TH}$, in step S246, the main control portion 13 calculates a short-exposure time Topt based on the optimal exposure time. Then, in step S247, the main control portion 13 calculates a short-exposure time Treal based on the real exposure time. A short-exposure time denotes the exposure time of short-exposure shooting. For example, the short-exposure time Topt is set at 1 / 4 of the optimal exposure time, and the short-exposure time Treal is set at 1 / 4 of the real exposure time. Thereafter, in step S248, the main control portion 13 checks whether or not the inequality Treal < Topt x kro is fulfilled. The coefficient kro is set beforehand such that it fulfills the inequality 0 < kro < 1 and, for example, kro = 0.8.

If the inequality Treal < Topt x kro is not fulfilled, the S/N ratio of the short-exposure image that will be acquired with the short-exposure time Treal is estimated to be comparatively high. Thus, the flow then proceeds to step S249, where the motion blur correction portion 21 adopts the "select-one" method, which achieves motion blur correction by comparatively simple processing, to generate a reference image Rw. Specifically, in step S249, the reference image Rw is generated through the operations in steps S205 to S211 in Fig. 27.

By contrast, if the inequality Treal < Topt x kro is fulfilled, the S/N ratio of the short-exposure image that will be acquired with the short-exposure time Treal is estimated to be comparatively low. Thus, the flow then proceeds to step S250, where the motion blur correction portion 21 adopts the "select-more-than-one-and-merge" method, which can reduce the effect of noise, to generate a reference image Rw. Specifically, in step S250, the reference image Rw is generated through the operations in steps S225 to S230 in Fig. 28. In both step S249 and step S250, the actual exposure time for short-exposure shooting is Treal.

After the reference image Rw is generated in step S249 or step S250, in step S251, the motion blur correction portion 21 generates a corrected image Qw from that reference image Rw and the correction target image Lw acquired in step S244 (how the correction performed will be described later in connection with Example 10). The corrected image Qw is recorded in the recording medium 16 and is also displayed on the display portion 15.

In shooting in low light condition, to reduce blur in an image attributable to motion of the image-sensing apparatus or of the subject, it is common to perform ordinary-exposure shooting with an exposure time shorter than the optimal exposure time calculated simply from the result of the measurement by the metering circuit 22, then multiply each pixel value of the image obtained as a result by a fixed value (that is, increase the sensitivity), and then record the image data. In this case, the inequality Treal < Topt x kro is more likely to be fulfilled, while the S/N ratio of the short-exposure image acquired is comparatively low. Thus, in this case, the "select-more-than-one-and-merge" method, which can reduce the effect of noise, is chosen to generate a reference image Rw. By contrast, in a case where the illuminance around the image-sensing apparatus 1b is comparatively high and thus the inequality Treal < Topt x kro is not fulfilled and hence the S/N ratio of the short-exposure image is estimated to be comparatively high, the "select-one" method, which achieves motion blur correction by comparatively simple processing, is chosen to generate a reference image Rw. By switching the method for generating the reference image Rw according to the S/N ratio of a short-exposure image in this way, it is possible to minimize calculation cost while maintaining satisfactory accuracy in motion blur correction. Calculation cost refers to the load resulting from calculation, and an increase in calculation cost leads to increases in processing time and in consumed power. The short-exposure image may be subjected to noise elimination so that the reference image Rw is generated from the short-exposure image having undergone noise elimination. Even in this case, the above switching control functions effectively.

**Example 9**

Next, Example 9 will be described. In Example 9, how the evaluation value $K_i$, which is used in the processing in Examples 6 to 8, is calculated will be described. The evaluation value $K_i$ is determined from one or more of: a first evaluation value $Ka_i$ based on the edge intensity of the short-exposure image; a second evaluation value $Kb_i$ based on the contrast of the short-exposure image; a third evaluation value $Kc_i$ based on the degree of rotation of the short-exposure image relative to the correction target image Lw; and a fourth evaluation value $Kd_i$ based on the difference in shooting time between short-exposure shooting and ordinary-exposure shooting. First, how each of the first to fourth evaluation values $Ka_i$ to $Kd_i$ is calculated will be described.

**(1) Method for Calculating the First Evaluation Value $Ka_i$**

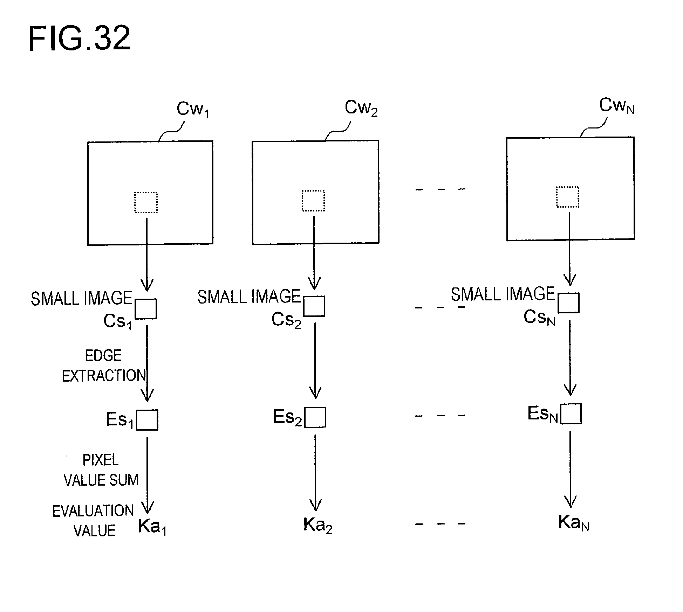

The method by which the evaluation value $Ka_i$ - the first evaluation value - is calculated will be described with reference to Figs. 31 and 32. Fig. 31 is a flow chart showing the flow of operations for calculating the evaluation value $Ka_i$. Fig. 32 is a diagram showing the relationship among different images used in those operations. In a case where the evaluation value $K_i$ is calculated based on the evaluation value $Ka_i$, in step S206 in Fig. 27 and in step S226 in Fig. 28, the operations in steps S301 to S305 in Fig. 31 are performed.

First, in step S301, whether or not the variable i equals 1 is checked. If i = 1, the flow proceeds to step S302; if i ≠ 1, the flow proceeds to step S303. In step S302, a small area located at or near the center of the short-exposure image $Cw_i$ is extracted, and the image in this small area is taken as a small image $Cs_i$. The small area thus extracted is a small area of 128 x 128 pixels. Since the flow reaches step S302 only when i = 1, in step S302, a small image $Cs_1$ is extracted from the first short-exposure image $Cw_1$.

After the operation of step S302, the flow proceeds to step S304. In step S304, the small image $Cs_i$ is subjected to edge extraction to obtain a small image $Es_i$. For example, an arbitrary edge detection operator is applied to each pixel of the small image $Cs_i$ to generate an extracted-edge image of the small image $Cs_i$, and this extracted-edge image is taken as the small image $Es_i$. Thereafter, in step S305, the sum of all the pixel values of the small image $Es_i$ is calculated, and this sum is taken as the evaluation value $Ka_i$.

In step S303, to which the flow proceeds if i ≠ 1, a small area corresponding to the small area extracted from the short-exposure image $Cw_1$ is extracted from the short-exposure image $Cw_i$ (#$Cw_1$), and the image in the small area extracted from the short-exposure image $Cw_i$ is taken as a small image $Cs_i$. The search for the corresponding small area is achieved through image processing employing template matching or the like. Specifically, for example, the small image $Cs_1$ extracted from the short-exposure image $Cw_1$ is taken as a template and, by the well-known template matching, a small area most similar to the template is searched for in the short-exposure image $Cw_i$, and the image in the small area found as a result is taken as the small image $Cs_i$. After the small image $Cs_i$ is extracted in step S303, the small

image $Cs_i$ is subjected to the operations in steps S304 and S305. As will be clear from the above processing, the evaluation value $Ka_i$ increases as the edge intensity of the small image $Cs_i$ increases.

With images of the same composition, the smaller the motion that occurred during their exposure period, the sharper the edges contained in the images, and thus the higher the edge intensity in them. Moreover, since motion blur uniformly degrades an entire image, the edge intensity in the entire short-exposure image $Cw_i$ is commensurate with the edge intensity in the small image $Cs_i$. It is therefore estimated that, the larger the evaluation value $Ka_i$, the smaller the amounts of blur in the corresponding small image $Cs_i$ and in the corresponding short-exposure image $Cw_i$. From the viewpoint that the amount of blur in the short-exposure image used for the generation of a reference image should be as small as possible, it is advantageous to use the evaluation value $Ka_i$. For example, the evaluation value $Ka_i$ itself may be used as the evaluation value $K_i$ to be found in steps S206 in Fig. 27 and S226 in Fig. 28.

Generally, to find the amount of blur in an image from this image alone, as disclosed in JP-A-H11-027574, it is necessary to perform processing that demands high calculation cost, involving Fourier-transforming the image to generate an image converted into a frequency domain and measuring the intervals between the frequencies at which motion blur causes attenuation. By contrast, estimating the amount of blur from edge intensity by exploiting the relation between edge intensity and the amount of blur helps reduce the calculation cost for estimating the amount of blur, compared with that demanded by conventional methods employing a Fourier transform etc. Moreover, calculating the evaluation value with attention paid not to an entire image but to a small image extracted from it helps further reduce the calculation cost. In addition, comparing evaluation values between corresponding small areas by template matching or the like helps alleviate the effect of a change, if any, in composition during the shooting of a plurality of short-exposure images.

### (2) Method for Calculating the Second Evaluation Value $Kb_i$

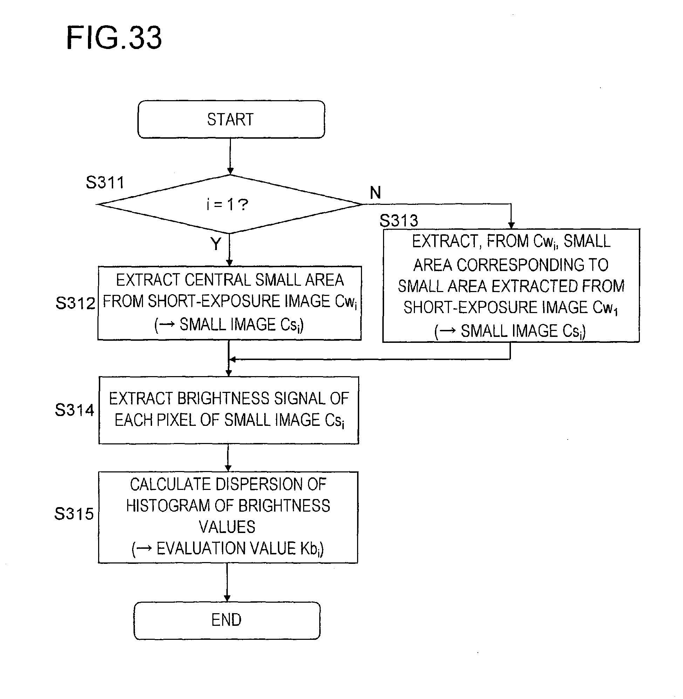

The method by which the evaluation value $Kb_i$ - the second evaluation value - is calculated will be described with reference to Fig. 33. Fig. 33 is a flow chart showing the flow of operations for calculating the evaluation value $Kb_i$. In a case where the evaluation value $K_i$ is calculated based on the evaluation value $Kb_i$, in step S206 in Fig. 27 and in step S226 in Fig. 28, the operations in steps S311 to S315 in Fig. 33 are performed.

The operations in steps S311 to S313 in Fig. 33 are the same as those in steps S301 to S303 in Fig. 31, and therefore no overlapping description of those steps will be repeated. After the operation in step S312 or S313, the flow proceeds to step S314.

In step S314, the brightness signal (luminance signal) of each pixel of the small image $Cs_i$ is extracted. Needless to say, for example, when i = 1, the brightness signal of each pixel of the small image $Cs_1$ is extracted, and, when i = 2, the brightness signal of each pixel of the small image $Cs_2$ is extracted. Then, in step S315, a histogram of the brightness values (that is, the values of the brightness signals) of the small image $Cs_i$ is generated, and the dispersion of the histogram is calculated to be taken as the evaluation value $Kb_i$.

With images of the same composition, the larger the amount of motion that occurred during the exposure period, the more smooth the change of brightness between adjacent pixels, thus the larger the number of pixels of medium halftones, and thus the more the distribution in the histogram of brightness values concentrates at middle halftones, making the evaluation value $Kb_i$ accordingly smaller. Thus, it is estimated that, the larger the evaluation value $Kb_i$, the smaller the amount of blur in the corresponding small image $Cs_i$ and in the corresponding short-exposure image $Cw_i$. From the viewpoint that the amount of blur in the short-exposure image used for the generation of a reference image should be as small as possible, it is advantageous to use the evaluation value $Kb_i$. For example, the evaluation value $Kb_i$ itself may be used as the evaluation value $K_i$ to be found in steps S206 in Fig. 27 and S226 in Fig. 28.

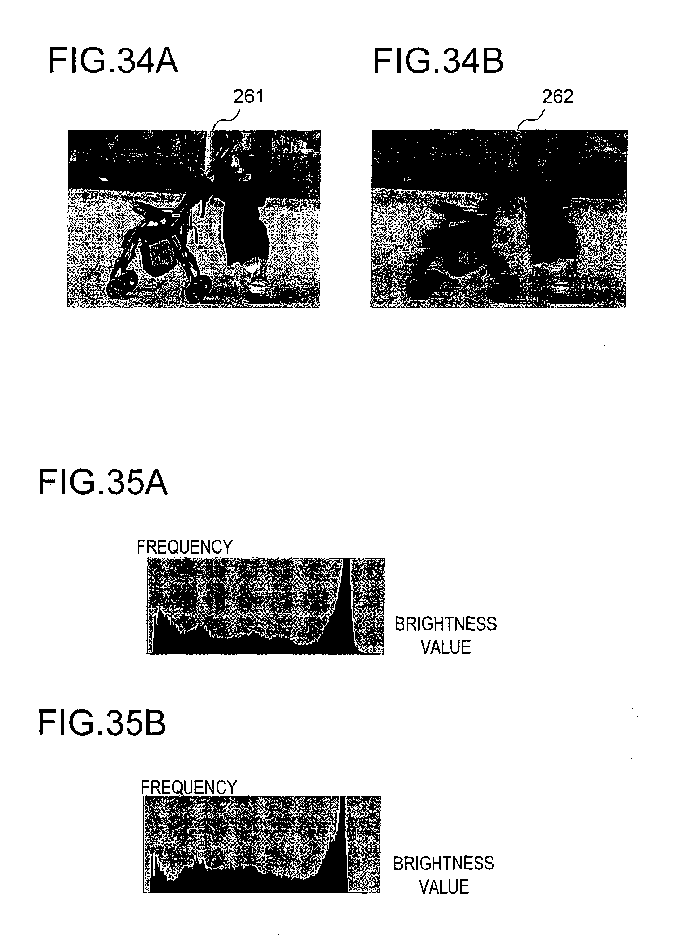

As examples of short-exposure images, Fig. 34A shows a short-exposure image 261 and Fig. 34B shows a short-exposure image 262. Whereas the short-exposure image 261 is a sharp image, the short-exposure image 262 contains much blur as a result of large motion (camera shake) having occurred during the exposure period. Figs. 35A and 35B show histograms generated in step S315 for the short-exposure images 261 and 262 respectively. In comparison with the histogram of the short-exposure image 261 (see Fig. 35A), the histogram of the short-exposure image 262 (see Fig. 35B) exhibits concentration at middle halftones. This concentration makes the dispersion (and the standard deviation) smaller.

With respect to a given image, a small dispersion in its histogram means that the image has low contrast, and a large dispersion in its histogram means that the image has high contrast. Thus, what is achieved by the method described above is estimating the contrast of a given image by calculating the dispersion of its histogram and estimating the amount of blur in the image based on the thus estimated contrast. The estimated contrast value is derived as the evaluation value $Kb_i$.

This evaluation value calculation method exploits the relation between contrast and the amount of blur to estimate the amount of blur from contrast. This helps reduce the calculation cost for estimating the amount of blur, compared with that demanded by conventional methods employing a Fourier transform etc. Moreover, calculating the evaluation value with attention paid not to an entire image but to a small image extracted from it helps further reduce the calculation cost. In addition, comparing evaluation values between corresponding small areas by template matching or the like helps alleviate the effect of a change, if any, in composition during the shooting of a plurality of short-exposure images.

### (3) Method for Calculating the Third Evaluation Value $Kc_i$

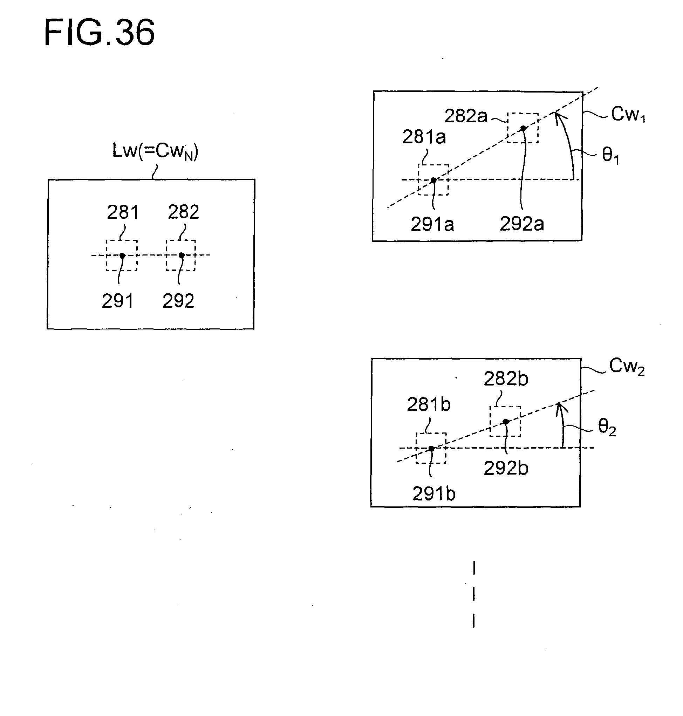

The method by which the evaluation value $Kc_i$ - the third evaluation value - is calculated will be described. The evaluation value $Kc_i$ is calculated from the rotation angle of the short-exposure image $Cw_i$ relative to the correction target image Lw. Now, with reference to Fig. 36, the calculation method will be described more specifically.

First, a plurality of characteristic small areas (for example, small areas of 32 x 32 pixels each) are extracted from the correction target image Lw. The significance of and the method for extracting a characteristic small area are the same as described in connection with Example 7 (the same applies equally to the other Examples described later). Suppose that, as shown in Fig. 36, two small areas 281 and 282 are extracted from the correction target image Lw. The center points of the small areas 281 and 282 are referred to by reference signs 291 and 292 respectively. In the example shown in Fig. 36, the direction of the line connecting the center points 291 and 292 coincides with the horizontal direction of the correction target image Lw.

Next, two small areas corresponding to the two small areas 281 and 282 extracted from the correction target image Lw are extracted from the short-exposure image $Cw_i$. The search for corresponding small areas is achieved by the above-mentioned method employing template matching etc. In Fig. 36 are shown: two small areas 281a and 282a extracted from the short-exposure image $Cw_i$; and two small areas 281b and 282b extracted from the short-exposure image $Cw_2$. The small areas 281a and 281b corresponds to the small area 281, and the small areas 282a and 282b corresponds to the small area 282. The center points of the small areas 281a, 282a, 281 b, and 282b are referred to by reference signs 291 a, 292a, 291 b, and 292b respectively.

To calculate the evaluation value $Kc_1$ for the short-exposure image $Cw_1$, the rotation angle (that is, slope) $\theta_1$ of the line connecting the center points 291a and 292a relative to the line connecting the center points 291 and 292 is found. Likewise, to calculate the evaluation value $Kc_2$ for the short-exposure image $Cw_2$, the rotation angle (that is, slope) $\theta_2$ of the line connecting the center points 291b and 292b relative to the line connecting the center points 291 and 292 is found. The rotation angles $\theta_3$ to $\theta_N$ for the other short-exposure images $Cw_3$ to $Cw_N$ are found likewise, and the reciprocal of the rotation angle $\theta_i$ is found as the evaluation value $Kc_i$.

The shooting time (the time at which shooting takes place) of an ordinary-exposure image as a correction target image differs from the shooting time of a short-exposure image for the generation of a reference image, and thus a change in composition can occur between the shooting of the former and that of the latter. To perform accurate motion blur correction, position adjustment needs to be done to cancel the displacement between the correction target image and the reference image attributable to that difference in composition. This position adjustment can be realized by coordinate conversion (such as affine conversion) but, if it involves image rotation, it demands an increased circuit scale and increased calculation cost. Thus, with a view to minimizing the rotation angle of a short-exposure image for the generation of a reference image, it is advantageous to use the evaluation value $Kc_i$. For example, the evaluation value $Kc_i$ itself may be taken as the evaluation value $K_i$ to be found in step S206 in Fig. 27 and in step S226 in Fig. 28. By so doing, the reference image Rw can be generated by preferential use of a short-exposure image having a small rotation angle relative to the correction target image Lw. This makes it possible to achieve comparatively satisfactory motion blur correction with position adjustment by translational shifting alone, and also helps reduce the circuit scale.

In a case where motion blur correction is performed by use of Fourier iteration as will be described later, linear calculations are performed between images in a frequency domain that are obtained by Fourier-transforming the correction target image Lw and the reference image Rw (this be described in detail later in connection with the Example 10). In this case, due to the characteristics of a Fourier transform, a deviation in the rotation direction between the correction target image Lw and the reference image Rw remarkably lowers the accuracy of motion blur detection and motion blur correction. Thus, in a case where motion blur correction is performed by use of Fourier iteration, selecting a reference image Rw based on the evaluation value $Kc_i$ helps greatly enhance the accuracy of motion blur detection and motion blur correction.

### (4) Method for Calculating the Fourth Evaluation Value $Kd_i$

The method by which the evaluation value $Kd_i$ - the fourth evaluation value - is calculated will be described. The evaluation value $Kd_i$ is the reciprocal of the difference between the shooting time of the correction target image Lw and that of the short-exposure image $Cw_i$. The difference between the shooting time of the correction target image Lw and that of the short-exposure image $Cw_i$ is the difference in time between the midpoint of the exposure time with which the correction target image Lw was shot and the midpoint of the exposure time with which the short-exposure image

$Cw_i$ was shot. In a case where, after the shooting of the correction target image Lw, the short-exposure images $Cw_1$, $Cw_2$, ..., $Cw_N$ are shot in this order, naturally, the relation $Kd_1 > Kd_2 > ... > Kd_N$ holds.

The larger the difference in shooting time between the correction target image Lw and the short-exposure image $Cw_i$, the more likely, in the meantime, the subject moves and also the shooting conditions, such as illuminance, change. Motion of the subject or a change in a shooting condition acts to lower the accuracy of motion blur detection and motion blur correction. It is therefore advisable to use the evaluation value $Kd_i$ so that the reference image Rw is generated by preferential use of the short-exposure image corresponding to a large evaluation value $Kd_i$. This alleviates the effect of motion of the subject or a change in a shooting condition, and permits more accurate motion blur detection and motion blur correction.

**(5) Method for Calculating the Definitive Evaluation Value $K_i$**

The evaluation value $K_i$ to be found in step S206 in Fig. 27 and in step S226 in Fig. 28 is determined based on one or more of the evaluation values $Ka_i$, $Kb_i$, $Kc_i$, and $Kd_i$. For example, the evaluation value $K_i$ is calculated according to formula (A-1) below. Here, ka, kb, kc, and kd are weight coefficients each having a zero or positive value. In a case where the evaluation value $K_i$ is calculated based on two or three of $Ka_i$, $Kb_i$, $Kc_i$, and $Kd_i$, whichever weight coefficient is desired to be zero is made equal to zero. For example, in a case where no consideration is given to the difference in shooting time between the correction target image Lw and the short-exposure image $Cw_i$, the evaluation value $K_i$ is calculated with kd=0.

$$K_i = ka \times Ka_i + kb \times Kb_i + kc \times Kc_i + kd \times Kd_i \qquad (A-1)$$

As described above, it is preferable that the reference image Rw be generated from a short-exposure image whose difference in shooting time from the correction target image Lw is as small as possible. Even then, however, in the calculation of the evaluation value $K_i$, the evaluation value $Kd_i$ should be used on an auxiliary basis. That is, the weight coefficients ka, kb, and kc should not all be zero simultaneously.

**Example 10**

Next, Example 10 will be described. In Example 10, how the correction target image Lw is corrected based on the correction target image Lw and the reference image Rw will be described. The processing for this correction is performed in step S212 in Fig. 27, in step S231 in Fig. 28, and in step S251 in Fig. 29. As examples of methods for correcting the correction target image Lw, three methods, namely a first to a third correction method, will be presented below. The first, second, and third correction methods rely on image deconvolution, image merging, and image sharpening, respectively.

**(1) First Correction Method**

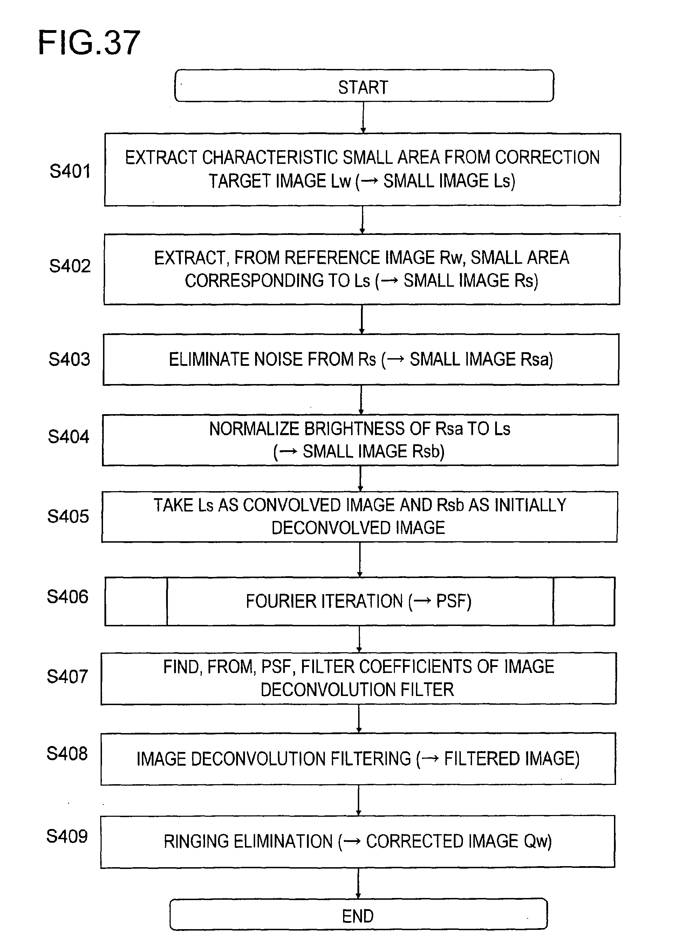

With reference to Fig. 37, the first correction method will be described. Fig. 37 is a flow chart showing the flow of correction processing according to the first correction method. In a case where the first correction method is adopted, step S212 in Fig. 27, step S231 in Fig. 28, and step S251 in Fig. 29 each involve the operations in steps S401 to S409 in Fig. 37.

First, in step S401, a characteristic small area (for example, a small area of 128 x 128 pixels) is extracted from the correction target image Lw, and the image in the thus extracted small area is, as a small image Ls, stored in the memory.

Next, in step S402, a small area having the same coordinates as the small area extracted from the correction target image Lw is extracted from the reference image Rw, and the image in the small area extracted from the reference image Rw is, as a small image Rs, stored in the memory. The center coordinates of the small area extracted from the correction target image Lw (the center coordinates in the correction target image Lw) are equal to the center coordinates of the small area extracted from the reference image Rw (the center coordinates in the reference image Rw); moreover, since the correction target image Lw and the reference image Rw have an equal image size, the two small areas have an equal image size.

Since the exposure time of the reference image Rw is comparatively short, the S/N ratio of the small image Rs is comparatively low. Thus, in step S403, the small image Rs is subjected to noise elimination. The small image Rs having undergone the noise elimination is taken as a small image Rsa. The noise elimination here is achieved by filtering the small image Rs with a linear filter (such as a weighted averaging filter) or a non-linear filter (such as a median filter). Since the brightness of the small image Rsa is low, in step S404, the brightness level of the small image Rsa is increased.

Specifically, for example, brightness normalization is performed in which the brightness values of the individual pixels of the small image Rsa are multiplied by a fixed value such that the brightness level of the small image Rsa becomes equal to the brightness level of the small image Ls (such that the average brightness of the small image Rsa becomes equal to the average brightness of the small image Ls). The small image Rsa thus having its brightness level increased is taken as a small image Rsb.

With the thus obtained small images Ls and Rsb taken as a convolved (degraded) image and an initially deconvolved (restored) image respectively (step S405), then, in step S406, Fourier iteration is executed to find a PSF as an image convolution function. How a PSF is calculated by Fourier iteration here is the same as described earlier in connection with the first embodiment. Specifically, in step S406, the operations in steps S101 to S103 and S110 to S118 in Fig. 4 are performed to find the PSF for the small image Ls. Since motion blur uniformly convolves (degrades) an entire image, the PSF found for the small image Ls can be used as the PSF for the entire correction target image Lw. As described in connection with the first embodiment, the operation in step S118 may be omitted so that the definitive PSF is found through a single session of correction.

In step S407, the elements of the inverse matrix of the PSF calculated in step S406 are found as the individual filter coefficients of an image deconvolution filter. This image deconvolution filter is a filter for obtaining the deconvolved image from the convolved image. In practice, as described earlier in connection with the first embodiment, an intermediary result of the Fourier iteration calculation in step S406 can be used intact to find the individual filter coefficients of the image deconvolution filter.

After the individual filter coefficients of the image deconvolution filter are found in step S407, then, in step S408, the correction target image Lw is filtered (subjected to space filtering) with the image deconvolution filter. That is, the image deconvolution filter having the thus found individual filter coefficients is applied to each pixel of the correction target image Lw to thereby filter the correction target image Lw. Thus, a filtered image is generated in which the blur contained in the correction target image Lw has been eliminated or reduced. The size of the image deconvolution filter is smaller than that of the correction target image Lw, but since it is believed that motion blur uniformly degrades the entire image, applying the image deconvolution filter to the entire correction target image Lw eliminates the blur in the entire correction target image Lw.

The filtered image may contain ringing ascribable to the filtering, and thus then, in step 409, the filtered image is subjected to ringing elimination to eliminate the ringing and thereby generate a definitive corrected image Qw. Since methods for eliminating ringing are well known, no detailed description will be given in this respect. One such method that can be used here is disclosed in, for example, JP-A-2006-129236.

In the corrected image Qw, the blur contained in the correction target image Lw has been eliminated or reduced, and the ringing ascribable to the filtering has also been eliminated or reduced. Since the filtered image already has the blur eliminated or removed, it can be regarded as the corrected image Qw.

Since the amount of blur contained in the reference image Rw is small, its edge component is close to that of an ideal image containing no blur. Thus, as described above, an image obtained from the reference image Rw is taken as the initially deconvolved image for Fourier iteration. This offers various benefits (such as reduced processing time for the calculation of motion blur information (a PSF, or the filter coefficients of an image deconvolution filter) as described earlier in connection with the first embodiment.

**(2) Second Correction Method**

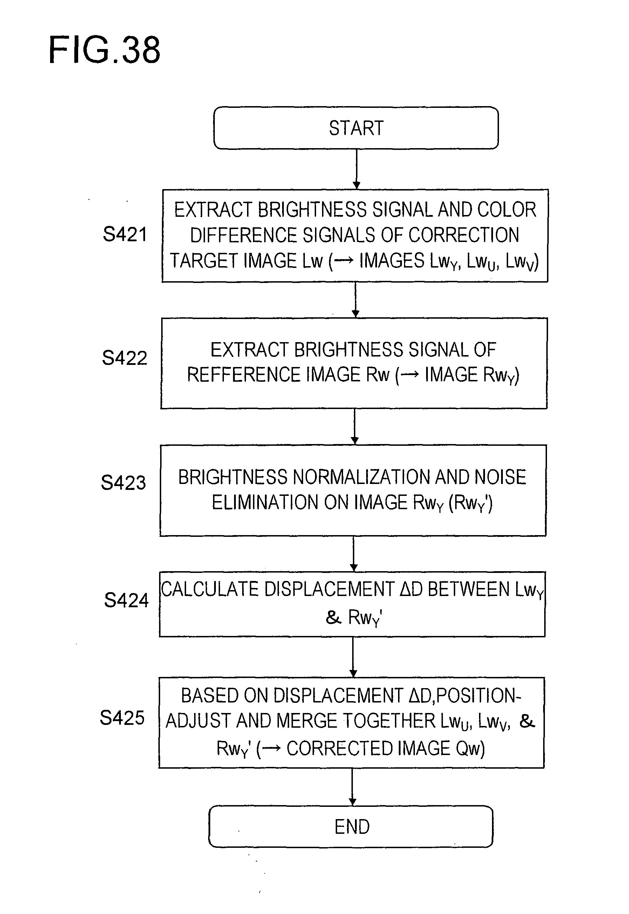

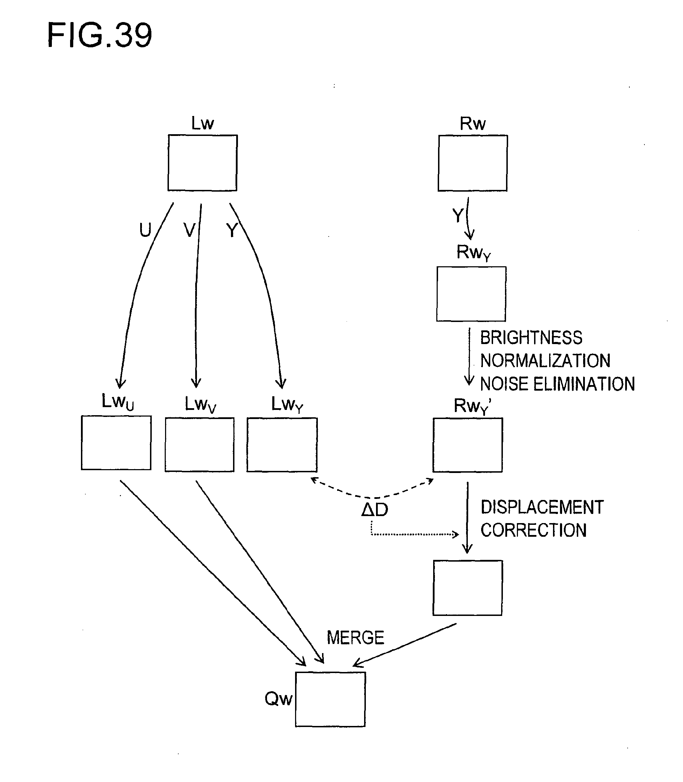

Next, with reference to Figs. 38 and 39, the second correction method will be described. Fig. 38 is a flow chart showing the flow of correction processing according to the second correction method. Fig. 39 is a conceptual diagram showing the flow of this correction processing. In a case where the second correction method is adopted, step S212 in Fig. 27, step S231 in Fig. 28, and step S251 in Fig. 29 each involve the operations in steps S421 to S425 in Fig. 38.

The image obtained by shooting by the image-sensing portion 11 shown in Fig. 26 is a color image that contains information related to brightness and information related to color. Accordingly, the pixel signal of each of the pixels forming the correction target image Lw is composed of a brightness signal (luminance signal) representing the brightness of the pixel and a color signal (chrominance signal) representing the color of the pixel. Suppose here that the pixel signal of each pixel is expressed in the YUV format. In this case, the color signal is composed of two color difference signals U and V. Thus, the pixel signal of each of the pixels forming the correction target image Lw is composed of a brightness signal Y representing the brightness of the pixel and two color difference signals U and V representing the color of the pixel.

Then, as shown in Fig. 39, the correction target image Lw can be decomposed into an image $Lw_Y$ containing brightness signals Y alone as pixel signals, an image $Lw_U$ containing color difference signals U alone as pixel signals, and an image $Lw_V$ containing color difference signals V alone as pixel signals. Likewise, the reference image Rw can be decomposed into an image $Rw_Y$ containing brightness signals Y alone as pixel signals, an image $Rw_U$ containing color difference signals U alone as pixel signals, and an image $Rw_V$ containing color difference signals V alone as pixel signals (only the image $Rw_Y$ is shown in Fig 39).

In step S421 in Fig. 38, first, the brightness signals and color difference signals of the correction target image Lw are extracted to generate images $Lw_Y$, $Lw_U$, and $Lw_V$. Subsequently, in step S422, the brightness signals of the reference image Rw are extracted to generate an image $Rw_Y$.

Since the image $Rw_Y$ has low brightness, in step S423, the brightness level of the image $Rw_Y$ is increased. Specifically, for example, brightness normalization is performed in which the brightness values of the individual pixels of the image $Rw_Y$ are multiplied by a fixed value such that the brightness level of the image $Rw_Y$ becomes equal to the brightness level of the image $Lw_Y$ (such that the average brightness of the image $Rw_Y$ becomes equal to the average brightness of the image $Lw_Y$). The image $Rw_Y$ thus having undergone the brightness normalization is then subjected to noise elimination using a median filter or the like. The image $Rw_Y$ having undergone the brightness normalization and the noise elimination is, as an image $Rw_Y$', stored in the memory.

Thereafter, in step S424, the pixel signals of the image $Lw_Y$ are compared with those of the image $Rw_Y$' to calculate the displacement $\Delta D$ between the images image $Lw_Y$ and $Rw_Y$'. The displacement $\Delta D$ is a two-dimensional quantity containing a horizontal and a vertical component, and is expressed as a so-called motion vector. The displacement $\Delta D$ can be calculated by the well-known representative point matching or template matching. For example, the image in a small area extracted from the image $Lw_Y$ is taken as a template and, by template matching, a small area most similar to the template is searched for in the image $Rw_Y$'. Then, the displacement between the position of the small area found as a result (its position in the image $Rw_Y$') and the position of the small area extracted from the image $Lw_Y$ (its position in the image $Lw_Y$) is calculated as the displacement $\Delta D$. Here, it is preferable that the small area extracted from the image $Lw_Y$ be a characteristic small area as described previously.

With the image $Lw_Y$ taken as the datum, the displacement $\Delta D$ represents the displacement of the image $Rw_Y$' relative to the image $Lw_Y$. The image $Rw_Y$' is regarded as an image displaced by a distance corresponding to the displacement $\Delta D$ from the image $Lw_Y$. Thus, in step S425, the image $Rw_Y$' is subjected to coordinate conversion (such as affine conversion) such that the displacement $\Delta D$ is canceled, and thereby the displacement of the image $Rw_Y$' is corrected. The pixel at coordinates $(x + \Delta Dx, y + \Delta Dy)$ in the image $Rw_Y$' before the correction of the displacement is converted to the pixel at coordinate $(x, y)$. $\Delta Dx$ and $\Delta Dy$ are a horizontal and a vertical component, respectively, of the $\Delta D$.

In step S425, the images $Lw_U$ and $Lw_V$ and the displacement-corrected image $Rw_Y$' are merged together, and the image obtained as a result is outputted as a corrected image Qw. The pixel signals of the pixel located at coordinates $(x, y)$ in the corrected image Qw are composed of the pixel signal of the pixel at coordinates $(x, y)$ in the images $Lw_U$, the pixel signal of the pixel at coordinates $(x, y)$ in the images $Lw_V$, and the pixel signal of the pixel at coordinates $(x, y)$ in the displacement-corrected image $Rw_Y$'.

In a color image, what appears to be blur is caused mainly by blur in brightness. Thus, if the edge component of brightness is close to that in an ideal image containing no blur, the observer perceives little blur. Accordingly, in this correction method, the brightness signal of the reference image Rw, which contains a comparatively small amount of blur, is merged with the color signal of the correction target image Lw, and thereby apparent motion blur correction is achieved. With this method, although false colors appear around edges, it is possible to generate an image with apparently little blur at low calculation cost.

### (3) Third Correction Method

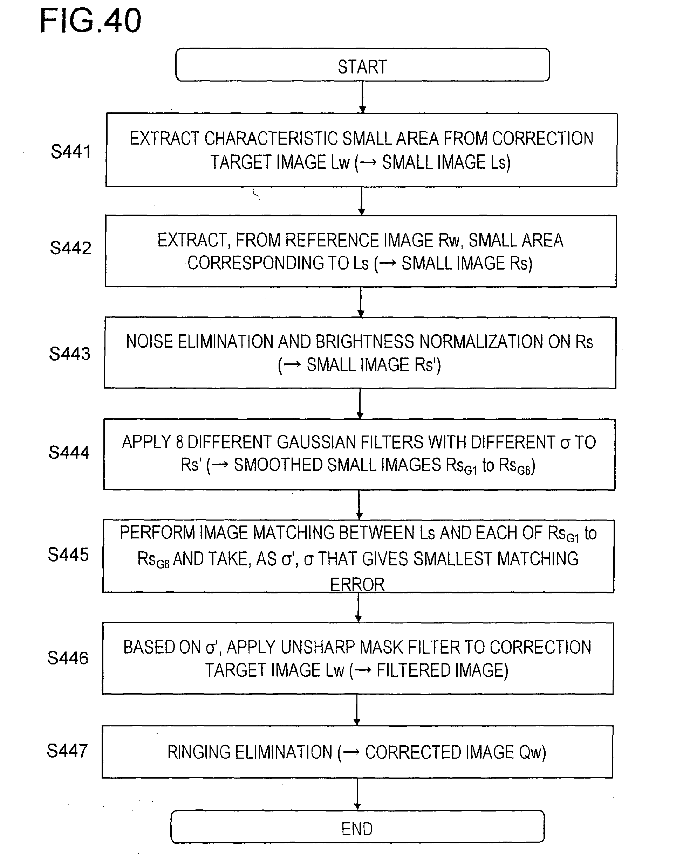

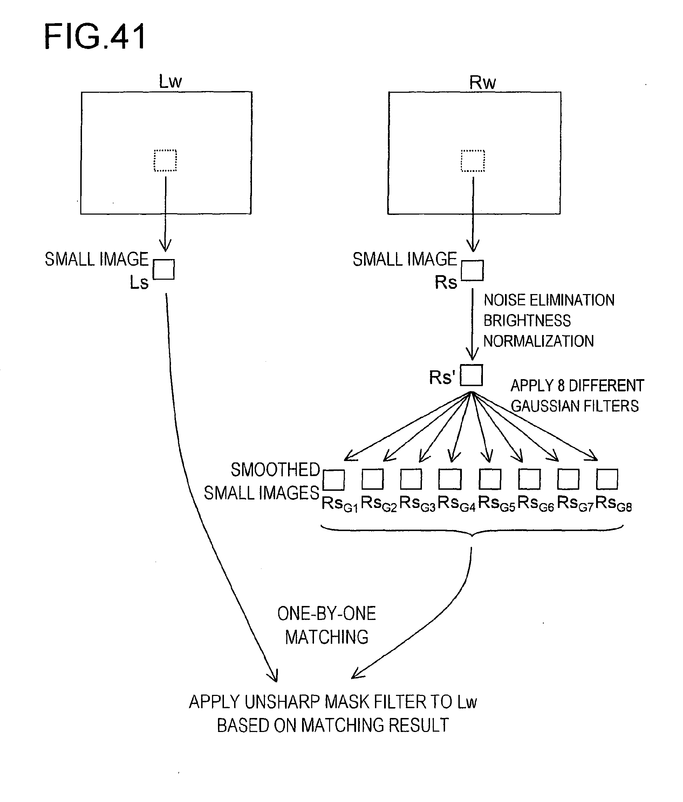

Next, with reference to Figs. 40 and 41, the third correction method will be described. Fig. 40 is a flow chart showing the flow of correction processing according to the third correction method. Fig. 41 is a conceptual diagram showing the flow of this correction processing. In a case where the third correction method is adopted, step S212 in Fig. 27, step S231 in Fig. 28, and step S251 in Fig. 29 each involve the operations in steps S441 to S447 in Fig. 40.

First, in step S441, a characteristic small area is extracted from the correction target image Lw to generate a small image Ls; then, in step S442, a small area corresponding to the small image Ls is extracted from the reference image Rw to generate a small image Rs. The operations in these steps S441 and S442 are the same as those in steps S401 and S402 in Fig. 37. Next, in step S443, the small image Rs is subjected to noise elimination using a median filter or the like, and in addition the brightness level of the small image Rs having undergone the noise elimination is increased. Specifically, for example, brightness normalization is performed in which the brightness values of the individual pixels of the small image Rs are multiplied by a fixed value such that the brightness level of the small image Rs becomes equal to the brightness level of the small image Ls (such that the average brightness of the small image Rs becomes equal to the average brightness of the small image Ls). The small image Rs thus having undergone the noise elimination and the brightness normalization is, as a small image Rs', stored in the memory.

Next, in step S444, the small image Rs' is filtered with eight smoothing filters that are different from one another, to generate eight smoothed small images $Rs_{G1}$, $Rs_{G2}$, ... , $Rs_{G8}$ that are smoothed to different degrees. Suppose now that used as the eight smoothing filters are eight Gaussian filters. The dispersion of the Gaussian distribution represented by each Gaussian filter is represented by $\sigma^2$.

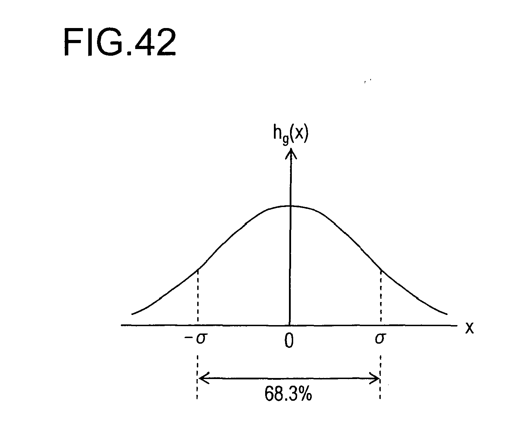

With attention focused on a one-dimensional image, when the position of a pixel in this one-dimensional image is represented by x, then, it is generally known, the Gaussian distribution of which the average is 0 and of which the dispersion is $\sigma^2$ is represented by formula (B-1) below (see Fig. 42). When this Gaussian distribution is applied to a Gaussian filter, the individual filter coefficients of the Gaussian filter are represented by hg(x). That is, when the Gaussian filter is applied to the pixel at position 0, the filter coefficient at position x is represented by hg(x). In other words, the factor of contribution, to the pixel value at position 0 after the filtering with the Gaussian filter, of the pixel value at position x before the filtering is represented by hg(x).

$$h_g(x) = \frac{1}{\sqrt{2\pi}\sigma} \exp\left(-\frac{x^2}{2\sigma^2}\right) \qquad (B\text{-}1)$$

When this way of thinking is expanded to a two-dimensional image and the position of a pixel in the two-dimensional image is represented by (x, y), the two-dimensional Gaussian distribution is represented by formula (B-2) below. Here, x and y represent the coordinates in the horizontal and vertical directions respectively. When this two-dimensional Gaussian distribution is applied to a Gaussian filter, the individual filter coefficients are represented by hg (x, y); when the Gaussian filter is applied to the pixel at position (0, 0), the filter coefficient at position (x, y) is represented by hg(x, y). That is, the factor of contribution, to the pixel value at position (0, 0) after the filtering with the Gaussian filter, of the pixel value at position (x, y) before the filtering is represented by hg(x, y).

$$h_g(x, y) = \frac{1}{2\pi\sigma^2} \exp\left(-\frac{x^2 + y^2}{2\sigma^2}\right) \qquad (B\text{-}2)$$

Assume that, used as the eight Gaussian filters in step S444 are those with $\sigma$ = 1, 3, 5, 7, 9, 11, 13, and 15. Next, in step S445, image matching is performed between the small image Ls and each of the smoothed small images $Rs_{G1}$ to $Rs_{G8}$ to identify, of all the smoothed small images $Rs_{G1}$ to $Rs_{G8}$, the one that exhibits the smallest matching error (that is, the one that exhibits the highest correlation with the small image Ls).

Now, with attention focused on the smoothed small image $Rs_{G1}$, a brief description will be given of how the matching error (matching residue) between the small image Ls and the smoothed small image $RS_{G1}$ is calculated. Assume that the small image Ls and the smoothed small image $Rs_{G1}$ has an equal image size, and that their numbers of pixel in the horizontal and vertical directions are $M_N$ and $N_N$ respectively ($M_N$ and $N_N$ are each an integer of 2 or more). The pixel value of the pixel at position (x, y) in the small image Ls are represented by $V_{Ls}(x, y)$, and the pixel value of the pixel at position (x, y) in the smoothed small image $Rs_{G1}$ are represented by $V_{Rs}(x, y)$ (here, x and y are integers fulfilling $0 \leq x \leq M_N$

- 1 and $0 \leq y \leq N_N$ - 1). Then, $R_{SAD}$, which represents the SAD (sum of absolute differences) between the matched (compared) images, is calculated according to formula (B-3) below, and $R_{SSD}$, which represents the SSD (sum of square differences) between the matched images, is calculated according to (B-4) below.

$$R_{SAD} = \sum_{y=0}^{N_N-1} \sum_{x=0}^{M_N-1} \left| V_{Ls}(x, y) - V_{Rs}(x, y) \right| \qquad (B\text{-}3)$$

$$R_{SSD} = \sum_{y=0}^{N_N-1} \sum_{x=0}^{M_N-1} \left\{ V_{Ls}(x, y) - V_{Rs}(x, y) \right\}^2 \qquad (B\text{-}4)$$

$R_{SAD}$ or $R_{SSD}$ thus calculated is taken as the matching error between the small image Ls and the smoothed small image $Rs_{G1}$ Likewise, the matching error between the small image Ls and each of the smoothed small images $Rs_{G2}$ to $Rs_{G8}$ is found. Then, the smoothed small image that exhibits the smallest matching error is identified. Suppose now that the smoothed small image $Rs_{G3}$, with $\sigma = 5$, is identified. Then, in step S445, $\sigma$ that corresponds to the smoothed small image $Rs_{G3}$ is taken as $\sigma'$; specifically, $\sigma'$ is given a value of 5.

Next, in step S446, with the Gaussian blur represented by $\sigma'$ taken as the image convolution function representing how the correction target image Lw is convolved (degraded), the correction target image Lw is subjected to deconvolution (elimination of degradation).

Specifically, in step S446, based on $\sigma'$, an unsharp mask filter is applied to the entire correction target image Lw to eliminate its blur. The image before the application of the unsharp mask filter is referred to as the input image $I_{INPUT}$, and the image after the application of the unsharp mask filter is referred to as the output image $I_{OUTPUT}$. The unsharp mask filter involves the following operations. First, as the unsharp filter, the Gaussian filter of $\sigma'$ (that is, the Gaussian filter with $\sigma = 5$) is adopted, and the input image $I_{INPUT}$ is filtered with the Gaussian filter of $\sigma'$ to generate a blurred image $I_{BLUR}$. Next, the individual pixel values of the blurred image $I_{BLUR}$ are subtracted from the individual pixel values of the input image $I_{INPUT}$ to generate a differential image $I_{DELTA}$ between the input image $I_{INPUT}$ and the blurred image $I_{BLUR}$. Lastly, the individual pixel values of the differential image $I_{DELTA}$ are added to the individual pixel values of the input image $I_{INPUT}$, and the image obtained as a result is taken as the output image $I_{OUTPUT}$. The relationship between the input image $I_{INPUT}$ and the output image $I_{OUTPUT}$ is expressed by formula (B-5) below. In formula (B-5), ($I_{INPUT} \bullet$ Gauss) represents the result of the filtering of the input image $I_{INPUT}$ with the Gaussian filter of $\sigma'$.

$$\begin{aligned} I_{OUTPUT} &= I_{INPUT} + I_{DELTA} \\ &= I_{INPUT} + (I_{INPUT} - I_{BLUR}) \\ &= I_{INPUT} + (I_{INPUT} - (I_{INPUT} \bullet \text{Gauss}) \end{aligned} \qquad (B-5)$$

In step S446, the correction target image Lw is taken as the input image $I_{INPUT}$, and the filtered image is obtained as the output image $I_{OUTPUT}$. Then, in step S447, the ringing in this filtered image is eliminated to generate a corrected image Qw (the operation in step S447 is the same as that in step S409 in Fig. 37).

The use of the unsharp mask filter enhances edges in the input image ($I_{INPUT}$), and thus offers an image sharpening effect. If, however, the degree of blurring with which the blurred image ($I_{BLUR}$) is generated greatly differs from the actual amount of blur contained in the input image, it is not possible to obtain an adequate blur correction effect. For example, if the degree of blurring with which the blurred image is generated is larger than the actual amount of blur, the output image ($I_{OUTPUT}$) is extremely sharpened and appears unnatural. By contrast, if the degree of blurring with which the blurred image is generated is smaller than the actual amount of blur, the sharpening effect is excessively weak. In this correction method, as an unsharp filter, a Gaussian filter of which the degree of blurring is defined by $\sigma$ is used and, as the $\sigma$ of the Gaussian filter, the $\sigma'$ corresponding to an image convolution function is used. This makes it possible to obtain an optimal sharpening effect, and thus to obtain a corrected image from which blur has been satisfactorily eliminated. That is, it is possible to generate an image with apparently little blur at low calculation cost.

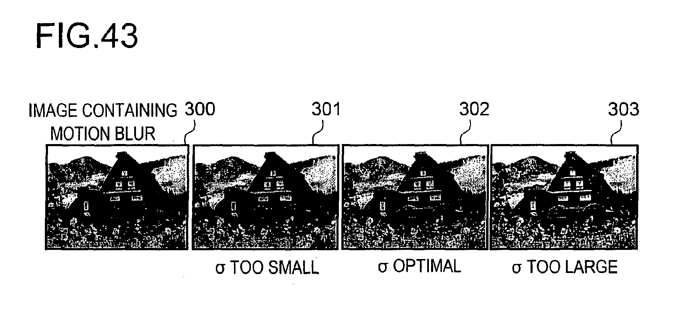

Fig. 43 shows, along with an image 300 containing motion blur as an example of the input image $I_{INPUT}$, an image 302 obtained by use of a Gaussian filter having an optimal $\sigma$ (that is, the desired corrected image), an image 301 obtained by use of a Gaussian filter having an excessively small $\sigma$, and an image 303 obtained by use of a Gaussian filter having an excessively large $\sigma$. It will be understood that an excessively small $\sigma$ weakens the sharpening effect, and that an excessively large $\sigma$ generates an extremely sharpened, unnatural image.

**Example 11**

In Example 9, the methods for calculating the first to fourth evaluation values $Ka_i$, $Kb_i$, $Kc_i$, and $Kd_i$, which are used to select the short-exposure image for the generation of a reference image, are described. There, it is described that a small image $Cs_i$ is extracted from a short-exposure image $Cw_i$, then, based on the edge intensity or contrast of the small image $Cs_i$, the amount of blur in the entire short-exposure image $Cw_i$ is estimated, and then, based on this, the evaluation values $Ka_i$ and $Kb_i$ are calculated (see Figs. 31 and 33). In the example discussed there, the small image $Cs_i$ is extracted from the center, or somewhere nearby, of the short-exposure image $Cw_i$. Here, the small image $Cs_i$ does not necessarily have to be extracted from the center, or somewhere nearby, of the short-exposure image $Cw_i$. For example, it is possible to proceed as described below. For the sake of concreteness, the following description discusses a case where $N = 5$, that is, five short-exposure images $Cw_1$ to $Cw_5$ are acquired.

First, by block matching or the like, the optical flow between every two short-exposure images $Cw_{i-1}$ and $Cw_i$

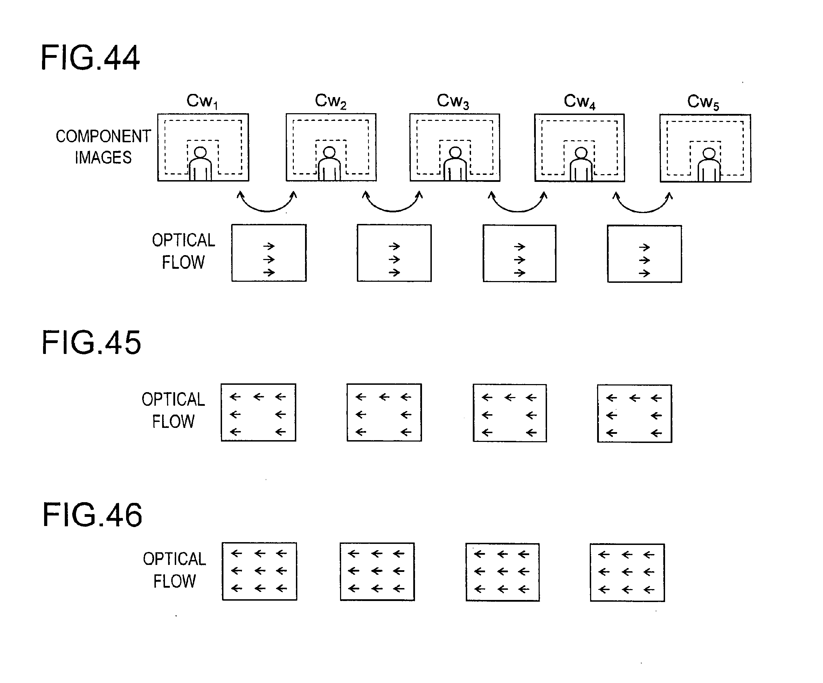

shot consecutively in time is found. Fig. 44 shows an example of the optical flows thus found. An optical flow is a bundle of motion vectors between matched (compared) images. Next, based on the thus found optical flows, small-image-extraction areas in the series of short-exposure images $Cw_1$ to $Cw_5$ are detected. The small-image-extraction areas are defined within the short-exposure images $Cw_1$ to $Cw_5$ respectively. Then, from the small-image-extraction area of each short-exposure image $Cw_i$, a small image $Cs_i$ is extracted.

For example, during the shooting of the five short-exposure images, if, whereas the image-sensing apparatus 1 remains in a substantially fixed position, a person located about the center of the shooting area moves in the real space, whereas significant motion vectors are detected in the area corresponding to the person, no such motion vectors are detected in the peripheral area that occupies the greater part of each short-exposure image. A significant motion vector denotes one having a predetermined magnitude or more; in simple terms, it denotes a vector having a non-zero magnitude. Fig. 44 shows optical flows in such a case. In this case, those areas in which no significant motion vectors are detected are those which represent a subject that remains still in the real space, and such still subject areas are detected as small-image-extraction areas. In the short-exposure images $Cw_1$ to $Cw_5$ shown in Fig. 44, the areas enclosed by broken lines correspond to the detected small-image-extraction areas.

For another example, during the shooting of the five short-exposure images, if, whereas a person located about the center of the shooting area moves rightward in the real space, the body (unillustrated) of the image-sensing apparatus 1 is panned rightward to follow the person, then, as shown in Fig. 45, whereas no significant motion vectors are detected in the area corresponding to the person, significant motion vectors are detected in the peripheral area (background area) that occupies the greater part of each short-exposure image. Moreover, the thus detected significant motion vectors have a uniform magnitude and direction. In this case, those areas in which significant motion vectors are detected, that is, dominant motion areas in the images, are detected as small-image-extraction areas (eventually, small-image-extraction areas similar to those detected in the case shown in Fig. 44 are detected).

For yet another example, during the shooting of the five short-exposure images, if all subjects and the image-sensing apparatus 1 remain still in the real space, no significant motion vectors are detected in any part of any short-exposure image. In this case, the entire area of each short-exposure image is a still subject area, and such still subject areas are detected as small-image-extraction areas. For still another example, during the shooting of the five short-exposure images, if, whereas all subjects remain still in the real space, the body of the image-sensing apparatus 1 is panned rightward, or if, whereas the image-sensing apparatus 1 remains still in the real space, all subjects move uniformly leftward, then, as shown in Fig. 46, significant motion vectors having a uniform magnitude and direction are detected all over each short-exposure image. In this case, it is judged that the entire area of each short-exposure image is a dominant motion area, and such dominant motion areas are detected as small-image-extraction areas.

In this way, by statistically processing a plurality of motion vectors that form optical flows, it is possible to identify small-image-extraction areas.

Alternatively, it is also possible to detect a moving subject - one that is moving in the real space - such as a person, and detect, as a small-image-extraction area, an area where the moving subject is not located. By use of a well-known moving subject following technology relying on image processing, it is possible to detect and follow a moving subject based on the output, including the image data of short-exposure images, of the image-sensing portion 11.

When the small image $Cs_i$ is extracted from an area that represents a subject moving irregularly within the shooting area, and the evaluation value ($Ka_i$ or $Kb_i$) is calculated based on that small image $Cs_i$, the evaluation value is affected by the motion of the moving subject, and this lowers the accuracy with which the amounts of blur in the small image $Cs_i$ and the short-exposure image $Cw_i$ are estimated. As a result, it is more likely that selection of a short-exposure image having a small amount of blur fails, and thus generation of an appropriate reference image Rw fails. By contrast, detecting small-image-extraction areas (still subject areas or dominant motion areas) and extracting small images $Cs_i$ from them as described above makes it possible, even if short-exposure images $Cw_i$ contain a moving subject that moves irregularly, to accurately select a short-exposure image having a small amount of blur and thus to generate an appropriate reference image Rw.

Also when the evaluation value $Kc_i$ based on the rotation angle of the short-exposure image $Cw_i$ is calculated (see Fig. 36), a small area is extracted from the correction target image Lw. Here also, to prevent the evaluation value $Kc_i$ from being affected by motion of a subject, it is preferable that the small area be extracted from a small-image-extraction area. In that case, with respect to a series of continuously shot images consisting of the correction target image Lw and five short-exposure images $Cw_1$ to $Cw_5$, optical flows are found as described above, and the plurality of motion vectors that form those optical flows are statistically processed to define a small-image-extraction area in the correction target image Lw.

In connection with the third embodiment, modified examples or supplementary explanations will be given below in Notes 7 to 8. Unless inconsistent, any part of the contents of these notes may be combined with any other. The contents of Notes 2 to 5 given earlier in connection with the first embodiment may be applied to the third embodiment.

**Note 7:** In the operations described above in connection with Examples 6, 7, and 8, short-exposure shooting is performed N times immediately after the ordinary-exposure shooting for obtaining the correction target image Lw. The N-time short-exposure shooting here may instead be performed immediately before the ordinary-exposure shooting. It is also possible to perform short-exposure shooting Na times immediately before ordinary-exposure shooting and perform short-exposure shooting Nb times immediately after the ordinary-exposure shooting so that the short-exposure shooting is performed a total of N times (here, N = Na + Nb).

**Note 8:** For example, considered from a different angle, the image-sensing apparatus 1b shown in Fig. 26 incorporates a blur correction apparatus, which is provided with: an image acquirer adapted to acquire one ordinary-exposure image as a correction target image and N short-exposure images; a reference image generator (second image generator) adapted to generate a reference image from the N short-exposure images by any one of the methods described in connection with Examples 6, 7, and 8; and a corrector adapted to generate a corrected image by executing the operation in step S212 in Fig. 27, step S231 in Fig. 28, or step S251 in Fig. 29. This blur correction apparatus is formed mainly by the motion blur correction portion 21, or mainly by the motion blur correction portion 21 and the main control portion 13. In particular, to realize the operations performed in Example 8, the reference image generator (second image generator) is provided with: a selector adapted to execute the operation in step S249 in Fig. 29; a merger adapted to execute the operation in step S250 in Fig. 29; and a switch adapted to execute the branching operation in step S248 in Fig. 29 so that only one of the operations in steps S249 and 250 is executed.

### Claims

1. A blur detection apparatus detecting blur contained in a first image acquired by shooting by an image sensor based on an output of the image sensor, the blur detection apparatus comprising:

   a blur information creator adapted to create blur information reflecting the blur based on the first image and a second image shot with an exposure time shorter than an exposure time of the first image.

2. The blur detection apparatus according to claim 1,
   wherein the blur information is an image convolution function representing the blur in the entire first image.

3. The blur detection apparatus according to claim 1 or 2,
   wherein the blur information creator comprises an extractor adapted to extract partial images at least one from each of the first and second images, and creates the blur information based on the partial images.

4. The blur detection apparatus according to claim 2,
   wherein the blur information creator eventually finds the image convolution function through
   provisionally finding, from a first function obtained by converting an image based on the first image into a frequency domain and a second function obtained by converting an image based on the second image into the frequency domain, an image convolution function in the frequency domain and then
   correcting, by using a predetermined restricting condition, a function obtained by converting the image convolution function thus found in the frequency domain into a space domain.

5. The blur detection apparatus according to claim 1 or 2,
   wherein the blur information creator calculates the blur information by Fourier iteration in which an image based on the first image and an image based on the second image are taken as a convolved image and an initial deconvolved image respectively.

6. The blur detection apparatus according to claim 5,
   wherein the blur information creator comprises an extractor adapted to extract partial images at least one from each of the first and second images, and, by generating the convolved image and the initial deconvolved image from the partial images, makes the convolved image and the initial deconvolved image smaller in size than the first image.

7. The blur detection apparatus according to any one of claims 1 to 6, further comprising:

   a holder adapted to hold a display image based on an output of the image sensor immediately before or after shooting of the first image,
   wherein the blur information creator uses the display image as the second image.

8. The blur detection apparatus according to claim 1 or 2, further comprising:

a holder adapted to hold, as a third image, a display image based on an output of the image sensor immediately before or after shooting of the first image,
wherein the blur information creator creates the blur information based on the first, second, and third images.

9. The blur detection apparatus according to claim 8,
wherein the blur information creator generates a fourth image by performing weighted addition of the second and third images, and creates the blur information based on the first and fourth images.

10. The blur detection apparatus according to claim 8,
wherein the blur information creator comprises a selector adapted to choose either the second or third image as a fourth image, and creates the blur information based on the first and fourth images, and
wherein the selector chooses between the second and third images based on at least one of
edge intensity of the second and third images,
exposure time of the second and third images, or
preset external information.

11. The blur detection apparatus according to claim 9 or 10,
wherein the blur information creator calculates the blur information by Fourier iteration in which an image based on the first image and an image based on the fourth image are taken as a convolved image and an initial deconvolved image respectively.

12. The blur detection apparatus according to claim 11,
wherein the blur information creator comprises an extractor adapted to extract partial images at least one from each of the first, second, and third images, and, by generating the convolved image and the initial deconvolved image from the partial images, makes the convolved image and the initial deconvolved image smaller in size than the first image.

13. An image-sensing apparatus, comprising:

the blur detection apparatus according to any one of claims 1 to 12; and
the image sensor.

14. A method of detecting blur contained in a first image shot by an image sensor based on an output of the image sensor, the method comprising:

a step of creating blur information reflecting the blur based on the first image and a second image shot with an exposure time shorter than the exposure time of the first image.

15. A blur correction apparatus, comprising:

an image acquirer adapted to acquire a first image by shooting using an image sensor and acquire a plurality of short-exposure images by a plurality of times of shooting each performed with an exposure time shorter than an exposure time of the first image;
a second image generator adapted to generate from the plurality of short-exposure images one image as a second image; and
a corrector adapted to correct blur contained in the first image based on the first and second images.

16. The blur correction apparatus according to claim 15,
wherein the second image generator selects one of the plurality of short-exposure images as the second image based on at least one of
edge intensity of the short-exposure images;
contrast of the short-exposure images; or
rotation angle of the short-exposure images relative to the first image.

17. The blur correction apparatus according to claim 16,
wherein the second image generator selects the second image based further on differences in shooting time of the plurality of short-exposure images from the first image.

**18.** The blur correction apparatus according to claim 15,
wherein the second image generator generates the second image by merging together two or more of the plurality of short-exposure images.

**19.** The blur correction apparatus according to claim 15,
wherein the second image generator comprises:

a selector adapted to select one of the plurality of short-exposure images based on at least one of
edge intensity of the short-exposure images;
contrast of the short-exposure images; or
rotation angle of the short-exposure images relative to the first image;
a merger adapted to generate a merged image into which two or more of the plurality of short-exposure images are merged; and
a switch adapted to make either the selector or the merger operate alone to generate, as the second image, either the selected one short-exposure image or the merged image, and
wherein the switch decides which of the selector and the merger to make operate based on signal-to-noise ratio of the short-exposure images.

**20.** The blur correction apparatus according to any one of claims 15 to 19,
wherein the corrector creates blur information reflecting the blur in the first image based on the first and second images, and corrects the blur in the first image based on the blur information.

**21.** The blur correction apparatus according to any one of claims 15 to 19,
wherein the corrector corrects the blur in the first image by merging a brightness signal of the second image into a color signal of the first image.

**22.** The blur correction apparatus according to any one of claims 15 to 19,
wherein the corrector corrects the blur in the first image by sharpening the first image by using the second image.

**23.** An image-sensing apparatus, comprising:

the blur correction apparatus according to any one of claims 15 to 22; and
the image sensor.

**24.** A method of correcting blur, comprising:

an image acquisition step of acquiring a first image by shooting using an image sensor and acquiring a plurality of short-exposure images by a plurality of times of shooting each performed with an exposure time shorter than an exposure time of the first image;
a second image generation step of generating from the plurality of short-exposure images one image as a second image; and
a correction step of correcting the blur contained in the first image based on the first and second images.

# FIG.1

1

11 12 13 19

IMAGE-SENSING PORTION → AFE →

MAIN CONTROL PORTION

MOTION BLUR DETECTION/ CORRECTION PORTION

AF/AE CONTROL SIGNAL

EXPOSURE TIME CONTROL SIGNAL

EXPOSURE CONTROL PORTION ← 18

14

INTERNAL MEMORY

15

DISPLAY PORTION

17

OPERATED PORTION

SHUTTER RELEASE BUTTON 17a

16

RECORDING MEDIUM

# FIG.2

```
                    START

S1 ◇ SHUTTER RELEASE BUTTON PRESSED? ──N──┐
                    │                      │
                    Y                      │
S2  ORDINARY-EXPOSURE SHOOTING
    (→ CORRECTION TARGET IMAGE A1)

S3 ◇ EXPOSURE TIME<(1/f_D)? ──Y──┐
                    │             │
                    N             ▼
                             NO CORRECTION
S4  SHORT-EXPOSURE SHOOTING
    (→ REFERENCE IMAGE A2)

S5  EXTRACT CHARACTERISTIC SMALL AREA FROM
    A1 (→ SMALL IMAGE A1a)

S6  EXTRACT FROM A2 SMALL AREA
    CORRESPONDING TO A1a (SMALL IMAGE A2a)

S7  ELIMINATE NOISE FROM A2a
    (→ SMALL IMAGE A2b)

S8  NORMALIZE BRIGHTNESS OF A2b TO A1a
    (→ SMALL IMAGE A2c)

S9  TAKE A1a AS CONVOLVED IMAGE AND A2c AS
    INITIALLY DECONVOLVED IMAGE

S10  FOURIER ITERATION (→ PSF)

S11  FIND,FROM PSF,FILTER
     COEFFICIENTS OF IMAGE
     DECONVOLUTION FILTER

S12  IMAGE DECONVOLUTION FILTERING
     (→ FILTERED IMAGE)

S13  RINGING ELIMINATION
     (→ CORRECTED IMAGE)

                    END
```

# FIG.3

EXPOSURE TIME: T1                    T1/4

CORRECTION TARGET
IMAGE A1                    REFERENCE IMAGE A2

SMALL ↓                    SMALL ↓
IMAGE ☐                    IMAGE ☐
A1a                        A2a ─┐ NOISE
                                ↓ ELIMINATION
                           A2b ☐
                                ─┐ BRIGHTNESS
                                ↓ NORMALIZATION
                           A2c ☐

↓                          ↓

CONVOLVED IMAGE            INITIALLY
                          DECONVOLVED IMAGE

# FIG.4

```
                    ┌─────────────────────────────┐
                    │            START            │
                    └─────────────────────────────┘
                                   │
        ┌──────────────────────────────────────────────────────┐
S101    │  TAKE INITIALLY DECONVOLVED IMAGE AS                 │
        │  DECONVOLVED IMAGE f'                                 │
        └──────────────────────────────────────────────────────┘
                                   │
        ┌──────────────────────────────────────────────────────┐
S102    │            TAKE CONVOLVED IMAGE g                     │
        └──────────────────────────────────────────────────────┘
                                   │
        ┌──────────────────────────────────────────────────────┐
S103    │   FOURIER-TRANSFORM CONVOLVED IMAGE g (→ G)           │
        └──────────────────────────────────────────────────────┘
                                   │
        ┌──────────────────────────────────────────────────────┐
S110    │   FOURIER-TRANSFORM DECONVOLVED IMAGE f' (→ F')       │
        └──────────────────────────────────────────────────────┘
                                   │
        ┌──────────────────────────────────────────────────────┐
S111    │            CALCULATE G/F' (→ H)                       │
        └──────────────────────────────────────────────────────┘
                                   │
        ┌──────────────────────────────────────────────────────┐
S112    │   INVERSELY FOURIER-TRANSFORM H (→ PSF h)            │
        └──────────────────────────────────────────────────────┘
                                   │
        ┌──────────────────────────────────────────────────────┐
S113    │            CORRECT PSF h (→ PSF h')                   │
        └──────────────────────────────────────────────────────┘
                                   │
        ┌──────────────────────────────────────────────────────┐
S114    │         FOURIER-TRANSFORM PSF h' (→ H')              │
        └──────────────────────────────────────────────────────┘
                                   │
        ┌──────────────────────────────────────────────────────┐
S115    │            CALCULATE G/H' (→ F)                       │
        └──────────────────────────────────────────────────────┘
                                   │
        ┌──────────────────────────────────────────────────────┐
S116    │   INVERSELY FOURIER-TRANSFORM F                      │
        │   (→ DECONVOLVED IMAGE f)                             │
        └──────────────────────────────────────────────────────┘
                                   │
        ┌──────────────────────────────────────────────────────┐
S117    │   CORRECT DECONVOLVED IMAGE f                        │
        │   (→ DECONVOLVED IMAGE f')                            │
        └──────────────────────────────────────────────────────┘
                                   │
S118              <  CONVERGED?  >──────── N
                                   │ Y
                    ┌─────────────────────────────┐
                    │             END             │
                    └─────────────────────────────┘
```

# FIG.5

(SHORT-EXPOSURE) INITIALLY DECONVOLVED IMAGE

(ORDINARY-EXPOSURE) CONVOLVED IMAGE

# FIG.6

```
                    ┌─────────────────────────────────────┐
                    │               START                 │
                    └─────────────────────────────────────┘
                                     │◄───────────────────────────┐
        ┌──────────────────────────────────────────────────────┐ │
  S20   │   STORE AND DISPLAY THROUGH-DISPLAY IMAGE ON          │ │
        │          CONSTANTLY REFRESHED BASIS                  │ │
        │           (→ REFERENCE IMAGE B3)                     │ │
        └──────────────────────────────────────────────────────┘ │
                                     │                            │
  S21           ◇ SHUTTER RELEASE BUTTON PRESSD? ◇──── N ─────────┘
                                     │ Y
        ┌──────────────────────────────────────────────────────┐
  S22   │         ORDINARY-EXPOSURE SHOOTING                   │
        │        (→ CORRECTION TARGET IMAGE B1)                │
        └──────────────────────────────────────────────────────┘
                                     │
  S23           ◇ EXPOSURE TIME<(1/f_D)? ◇──── Y ───┐
                                     │ N             │
  S24   ◇ EXPOSURE TIME OF B1 ≤ EXPOSURE TIME OF B3? ◇── Y ──┤
                                     │ N             ▼
                                     │       ┌──────────────────┐
                                     │       │  NO CORRECTION   │
                                     │       └──────────────────┘
        ┌──────────────────────────────────────────────────────┐
  S25   │   EXTRACT CHARACTERISTIC SMALL AREA FROM B3           │
        │           (→ SMALL IMAGE B3a)                        │
        └──────────────────────────────────────────────────────┘
        ┌──────────────────────────────────────────────────────┐
  S26   │   EXTRACT FROM B1 SMALL AREA CORRESPONDING            │
        │          TO B3a AND REDUCE IT                        │
        │           (→ SMALL IMAGE B1a)                        │
        └──────────────────────────────────────────────────────┘
        ┌──────────────────────────────────────────────────────┐
  S27   │        EDGE EXTRACTION ON B1a & B3a                  │
        │         (→ SMALL IMAGE B1b & B3b)                    │
        └──────────────────────────────────────────────────────┘
        ┌──────────────────────────────────────────────────────┐
  S28   │      BRIGHT NORMALIZATION ON B1b & B3b               │
        │        (→ SMALL IMAGES B1c & B3c)                    │
        └──────────────────────────────────────────────────────┘
        ┌──────────────────────────────────────────────────────┐
  S29   │   TAKE B1c AS CONVOLVED IMAGE AND B3c AS             │
        │        INITIALLY DECONVOLVED IMAGE                   │
        └──────────────────────────────────────────────────────┘
        ┌──────────────────────────────────────────────────────┐
  S10   │         FOURIER ITERATION (→ PSF)                    │
        └──────────────────────────────────────────────────────┘
        ┌──────────────────────────────────────────────────────┐
  S11   │   FIND,FROM PSF,FILTER COEFFICIENTS                  │
        │      OF IMAGE DECONVOLUTION FILTER                   │
        └──────────────────────────────────────────────────────┘
        ┌──────────────────────────────────────────────────────┐
  S12   │      IMAGE DECONVOLUTION FILTERING                   │
        │           (→ FILTERED IMAGE)                         │
        └──────────────────────────────────────────────────────┘
        ┌──────────────────────────────────────────────────────┐
  S13   │         RINGING ELIMINATION                          │
        │         (→ CORRECTED IMAGE)                          │
        └──────────────────────────────────────────────────────┘
                    ┌─────────────────────────────────────┐
                    │               END                   │
                    └─────────────────────────────────────┘
```

# FIG.7

EXPOSURE TIME: T3                    T1

REFERENCE
IMAGE B3

CORRECTION
TARGET IMAGE B1

SMALL
IMAGE
B3a

SMALL
IMAGE
B1a

EDGE
EXTRACTION

B3b

B1b

BRIGHTNESS
NORMALIZATION

B3c

B1c

INITIALLY
DECONVOLVED
IMAGE

CONVOLVED
IMAGE

# FIG.8

101

102

| 1 | 4 | 3 |
|---|---|---|
| 7 | 3 | 6 |
| 2 | 9 | 5 |

| 1 | 0 | 4 | 0 | 3 |
|---|---|---|---|---|
| 0 | 0 | 0 | 0 | 0 |
| 7 | 0 | 3 | 0 | 6 |
| 0 | 0 | 0 | 0 | 0 |
| 2 | 0 | 9 | 0 | 5 |

# FIG.9

```
                        ┌─────────────────────────┐
                        │          START          │
                        └─────────────────────────┘
                                     │
        ┌────────────────────────────────────────────────────────┐
  S30   │   STORE AND DISPLAY THROUGH-DISPLAY IMAGE              │◄──┐
        │      ON CONSTANTLY REFRESHED BASIS                     │   │
        │          (→ REFERENCE IMAGE C3)                        │   │
        └────────────────────────────────────────────────────────┘   │
                                     │                                │
  S31          ╱────────────────────────────────────────╲    N       │
              ╱          SHUTTER RELEASE                   ╲──────────┘
              ╲          BUTTON PRESSD?                    ╱
               ╲────────────────────────────────────────╱
                                │ Y
        ┌────────────────────────────────────────────────┐
  S32   │       ORDINARY-EXPOSURE SHOOTING                │
        │      (→ CORRECTION TARGET IMAGE C1)             │
        └────────────────────────────────────────────────┘
                                │
  S33         ╱──────────────────────────────────────╲   Y
             ╱        EXPOSURE TIME<(1/f_D)?           ╲────────────┐
             ╲──────────────────────────────────────╱              │
                                │ N                                 ▼
        ┌────────────────────────────────────────┐        ┌──────────────┐
  S34   │      SHORT-EXPOSURE SHOOTING            │        │      NO      │
        │      (→ REFERENCE IMAGE C2)             │        │  CORRECTION  │
        └────────────────────────────────────────┘        └──────────────┘
```

| | |
|---|---|
| S35 | EXTRACT CHARACTERISTIC SMALL AREA FROM C3 (→ SMALL IMAGE C3a) |
| S36 | EXTRACT FROM C1 & C2 SMALL AREA CORRESPONDING TO C3a AND REDUCE IT (→ SMALL IMAGES C1a & C2a) |
| S37 | NORMALIZE BRIGHTNESS OF C2a TO C3a (→SMALL IMAGE C2b) |
| S38 | WEIGHTED ADDITION OF C3a & C2b BASED ON THEIR DIFFERENCE (→SMALL IMAGE C4a) |
| S39 | NORMALIZE BRIGHTNESS OF C4a TO C1a (→SMALL IMAGE C4b) |
| S40 | TAKE C1a AS CONVOLVED IMAGE AND C4b AS INITIALLY DECONVOLVED IMAGE |
| S10 | FOURIER ITERATION (→ PSF) |
| S11 | FIND,FROM PSF,FILTER COEFFICIENTS OF IMAGE DECONVOLUTION FILTER |
| S12 | IMAGE DECONVOLUTION FILTERING (→ FILTERED IMAGE) |
| S13 | RINGING ELIMINATION (→ CORRECTED IMAGE) |

```
                        ┌─────────────────────────┐
                        │           END           │
                        └─────────────────────────┘
```

# FIG.10

EXPOSURE TIME T3

REFERENCE
IMAGE C3

SMALL
IMAGE
C3a

DIFFERENTIAL
IMAGE

WEIGHTING
COEFFICIENTS
$I_D(p,q)$

T1

CORRECTION TARGET
IMAGE C1

SMALL
IMAGE
C1a

SMALL
IMAGE
C4a

CONVOLVED
IMAGE

T3/4

REFERENCE
IMAGE C2

SMALL
IMAGE
C2a     BRIGHTNESS
        NORMALIZATION

C2b

WEIGHTED ADDITION

BRIGHTNESS NORMALIZATION

C4b

INITIALLY
DECONVOLVED
IMAGE

# FIG.11A

C3a
MORE BLUR

C2b
LESS BLUR

SIMPLE
ADDITION

# FIG.11B

C3a
MORE BLUR

C2b
LESS BLUR

DIFFERENTIAL
IMAGE

110

111

WEIGHTED
ADDITION

# FIG.12

```
┌────────────────────────────────────┐
│               START                │
└────────────────────────────────────┘
                  │◄──────────────────────┐
       ┌──────────────────────────────────┐
       │  STORE AND DISPLAY THROUGH-DISPLAY IMAGE │
S50    │     ON CONSTANTLY REFRESHED BASIS        │
       │       (→ REFERENCE IMAGE D3)             │
       └──────────────────────────────────┘
                  │
S51          ◇ SHUTTER RELEASE              ◇ ─── N
               BUTTON PRESSD?
                  │ Y
       ┌──────────────────────────────────┐
S52    │     ORDINARY-EXPOSURE SHOOTING    │
       │   (→ CORRECTION TARGET IMAGE D1)  │
       └──────────────────────────────────┘
                  │
S53       ◇  EXPOSURE TIME<(1/f_D)?   ◇ ─── Y
                  │ N                         │
       ┌──────────────────────────────────┐  │
S54    │     SHORT-EXPOSURE SHOOTING       │  ▼
       │     (→REFERENCE IMAGE D2)         │ ┌──────────┐
       └──────────────────────────────────┘ │    NO    │
                  │                          │CORRECTION│
       ┌──────────────────────────────────┐ └──────────┘
S55    │ EXTRACT CHARACTERISTIC SMALL AREA FROM D3 │
       │       (→ SMALL IMAGE D3a)         │
       └──────────────────────────────────┘
                  │
       ┌──────────────────────────────────┐
       │    EXTRACT FROM D1 & D2 SMALL AREA │
S56    │  CORRESPONDING TO D3a AND REDUCE IT │
       │    (→ SMALL IMAGES D1a & D2a)      │
       └──────────────────────────────────┘
                  │
S57    │ CHOOSE ONE OF D2a & D3a (→SMALL IMAGE D4a) │
                  │
       ┌──────────────────────────────────┐
S58    │    NORMALIZE BRIGHTNESS OF D4a TO D1a │
       │       (→SMALL IMAGE D4b)          │
       └──────────────────────────────────┘
                  │
       ┌──────────────────────────────────┐
S59    │  TAKE D1a AS CONVOLVED IMAGE AND D4b AS │
       │      INITIALLY DECONVOLVED IMAGE   │
       └──────────────────────────────────┘
                  │
S10    │     FOURIER ITERATION (→ PSF)      │
                  │
S11    │   FIND,FROM PSF,FILTER COEFFICIENTS │
       │   OF IMAGE DECONVOLUTION FILTER    │
                  │
S12    │   IMAGE DECONVOLUTION FILTERING    │
       │       (→ FILTERED IMAGE)          │
                  │
S13    │      RINGING ELIMINATION          │
       │      (→ CORRECTED IMAGE)          │
                  │
       ┌──────────────────────────────────┐
       │               END                │
       └──────────────────────────────────┘
```

# FIG.13

EXPOSURE TIME T3                    T1                    T1/4

REFERENCE          CORRECTION TARGET          REFERENCE
IMAGE D3              IMAGE D1                IMAGE D2

SMALL              SMALL              SMALL
IMAGE ☐            IMAGE ☐            IMAGE ☐
D3a                D1a                D2a

CHOICE

SMALL ☐
IMAGE
D4a    BRIGHTNESS
       NORMALIZATION

D4b ☐

CONVOLVED    INITIALLY
IMAGE      DECONVOLVED
            IMAGE

EP 1 944 732 A2

# FIG.14

## FIG.15 PRIOR ART

$t2=t1/P_{NUM}$

$$DP1 \quad DP2 \quad DP3 \quad DP4$$

TIME

## FIG.16 PRIOR ART

RANDOM IMAGE
OR CONVOLVED
IMAGE

CONVOLVED
IMAGE $g_O$

INITIAL
VALUE

FFT $\bigcirc$ $\bigcirc$ FFT
INVERSE

$G_O$

DECONVOLVED
IMAGE $f_O'$

FFT
$f_O'$ $\bigcirc$ $F_O'$

$\bigotimes$

FFT
$H_O$ $\bigcirc$ $h_O$

PSF $h_O$

CORRECTION

CORRECTION

$G_O$

DECONVOLVED
IMAGE $f_O$

INVERSE
FFT
$f_O$ $\bigcirc$

$F_O$

$\bigotimes$

FFT
$\bigcirc$ $h_O'$
$H_O'$

PSF $h_O'$

# FIG.17

1a

# FIG.18

CORRECTION TARGET IMAGE E1

REFERENCE IMAGE E2

# FIG.19

GL₁

GR₁

# FIG.20

GR₁ → EDGE EXTRACTION → ER₁ → STRAIGHT LINE EXTRACTION → HR₁₁ GR₁ HR₁₂

# FIG.21

HL₁₁ GL₁ HL₁₂

HR₁₁ GR₁ HR₁₂

# FIG.22

HL₁₁  GL₁

BRIGHTNESS  201

HORIZONTAL
POSITION

WL₁₁

HR₁₁  GR₁

BRIGHTNESS  202

HORIZONTAL
POSITION

WR₁₁

# FIG.23

GL₁

HL₁₂

BRIGHTNESS  211

VERTICAL
POSITION

WL₁₂

GR₁

HR₁₂

BRIGHTNESS  212

VERTICAL
POSITION

WR₁₂

# FIG.24

220

| 0 | 0 | 0 | 0 | 0 |
|---|---|---|---|---|
| 0 | 0 | 0 | 0 | 0 |
| 1 | 1 | 1 | 1 | 1 |
| 0 | 0 | 0 | 0 | 0 |
| 0 | 0 | 0 | 0 | 0 |

TAP NUMBER : $D_{MAX}$

# FIG.25

```
                    ┌─────────────────┐
                    │     START       │
                    └────────┬────────┘
                             │
        ┌────────────────────▼──────────────────────────┐
  S151  │ EXTRACT A PLURALITY OF CHARACTERISTIC SMALL    │
        │ AREAS FROM REFERENCE IMAGE (→ SMALL IMAGES GRᵢ)│
        └────────────────────┬──────────────────────────┘
                             │
        ┌────────────────────▼──────────────────────────┐
  S152  │ EXTRACT SMALL AREAS CORRESPONDING TO GRᵢ FROM  │
        │ CORRECTION TARGET IMAGE (→ SMALL IMAGES GLᵢ)   │
        └────────────────────┬──────────────────────────┘
```

S151 EXTRACT A PLURALITY OF CHARACTERISTIC SMALL AREAS FROM REFERENCE IMAGE ($\rightarrow$ SMALL IMAGES $GR_i$)

S152 EXTRACT SMALL AREAS CORRESPONDING TO $GR_i$ FROM CORRECTION TARGET IMAGE ($\rightarrow$ SMALL IMAGES $GL_i$)

S153

$i = 1 \rightarrow N$

GENERATE EXTRACTED-EDGE IMAGE $ER_i$ OF SMALL IMAGE $GR_i$

EXTRACT STRAIGHT LINES FROM $ER_i$ ($\rightarrow$ STRAIGHT LINES $HR_{ij}$)

EXTRACT STRAIGHT LINES CORRESPONDING TO $HR_{ij}$ FROM SMALL IMAGE $GL_i$ ($\rightarrow$ STRAIGHT LINES $HL_{ij}$)

$j = 1 \rightarrow M$

CALCULATE EDGE WIDTHS $WL_{ij}$ & $WR_{ij}$ OF $HL_{ij}$ & $HR_{ij}$

CALCULATE EDGE WIDTH DIFFERENCE $D_{ij} = WL_{ij} - WR_{ij}$

$j = j+1$

$i = i+1$

S154 LARGEST EDGE WIDTH DIFFERENCE $\rightarrow D_{MAX}$
IDENTIFY PAIR OF STRAIGHT LINES FOR MOTION BLUR DETECTION

S155 CALCULATE PSF FROM PAIR OF STRAIGHT LINES FOR MOTION BLUR DETECTION AND $D_{MAX}$

END

# FIG.26

1b

IMAGE-SENSING PORTION — 11

AFE — 12

MAIN CONTROL PORTION — 13

MOTION BLUR CORRECTION PORTION — 21

AF/AE CONTROL SIGNAL

EXPOSURE TIME CONTROL SIGNAL

EXPOSURE CONTROL PORTION — 18

INTERNAL MEMORY — 14

DISPLAY PORTION — 15

OPERATED PORTION — 17

SHUTTER RELEASE BUTTON — 17a

RECORDING MEDIUM — 16

# FIG.27

START

S201    SHUTTER RELEASE BUTTON PRESSED?    N

Y

S202    ORDINARY-EXPOSURE SHOOTING ($\rightarrow$ CORRECTION TARGET IMAGE Lw)

S203    EXPOSURE TIME < $(1/f_D)$?    Y

N

NO CORRECTION

S204    $i \leftarrow 1$

S205    SHORT-EXPOSURE SHOOTING ($\rightarrow$ SHORT-EXPOSURE IMAGE $Cw_i$)

S206    CALCULATE EVALUATION VALUE $K_i$ OF $Cw_i$

S207    $i = 0$ or $K_i > K_{MAX}$?    N

Y

S208    TAKE $Cw_i$ AS REFERENCE IMAGE Rw

S209    $K_{MAX} \leftarrow K_i$

S210    $i = N$?    N    S211    $i++$

Y

S212    GENERATE CORRECTED IMAGE Qw FROM CORRECTION TARGET IMAGE Lw AND REFERENCE IMAGE Rw

END

# FIG.28

```
                    ┌─────────────────────┐
                    │        START        │
                    └─────────────────────┘
                               │
        S221        ╱─────────────────────────╲        N
             ◇ SHUTTER RELEASE BUTTON PRESSED? ◇─────┐
                    ╲─────────────────────────╱       │
                               │ Y                    │
                               ▼                      │
        ┌──────────────────────────────────────┐      │
  S222  │   ORDINARY-EXPOSURE SHOOTING          │      │
        │   (→ CORRECTION TARGET IMAGE Lw)      │      │
        └──────────────────────────────────────┘      │
                               │                      │
        S223        ╱─────────────────────╲     Y     │
             ◇  EXPOSURE TIME < (1/f_D)?   ◇────┐      │
                    ╲─────────────────────╱     │      │
                               │ N      ┌───────▼──────┐
                               ▼        │ NO CORRECTION│
        S224        ┌─────────────┐     └──────────────┘
                    │   i ← 1     │
                    └─────────────┘
                               │
        ┌──────────────────────────────────────┐
  S225  │   SHORT-EXPOSURE SHOOTING             │
        │   (→ SHORT-EXPOSURE IMAGE Cw_i)       │
        └──────────────────────────────────────┘
                               │
        ┌──────────────────────────────────────┐
  S226  │   CALCULATE EVALUATION                │
        │   VALUE K_i OF Cw_i                   │
        └──────────────────────────────────────┘
                               │
        ┌──────────────────────────────────────┐
  S227  │ SELECT M OUT OF Cw_1 TO Cw_i IN       │
        │ DECREASING ORDER OF K_1 TO K_i (→     │
        │ TO-BE-MERGED IMAGES Dw_1 TO Dw_M)     │
        └──────────────────────────────────────┘
                               │           S229
        S228        ╱───────────────╲   N  ┌───────┐
             ◇       i = N ?         ◇─────▶│  i++  │
                    ╲───────────────╱       └───────┘
                               │ Y
                               ▼
        ┌──────────────────────────────────────┐
  S230  │ POSITION-ADJUST AND MERGE             │
        │ TOGETHER Dw_1 TO Dw_M                 │
        │ (→ REFERENCE IMAGE Rw)                │
        └──────────────────────────────────────┘
                               │
  S231  ┌──────────────────────────────────────┐
        │ GENERATE CORRECTED IMAGE Qw           │
        │ FROM CORRECTION TARGET IMAGE          │
        │ Lw AND REFERENCE IMAGE Rw             │
        └──────────────────────────────────────┘
                               │
                    ┌─────────────────────┐
                    │         END         │
                    └─────────────────────┘
```

# FIG.29

```
                        START

S241              SHUTTER RELEASE          N
              BUTTON PRESSED?
                          Y

S242      CALCULATE OPTIMAL EXPOSURE TIME

S243        DETERMINE REAL EXPOSURE TIME
            BASED ON PROGRAM LINE DIAGRAM

S244          PERFORM ORDINARY-EXPOSURE
              SHOOTING AND, AS NECESSARY,
           BRIGHTNESS AMPLIFICATION AND NOISE
           ELIMINATION TO ACQUIRE CORRECTION
                   TARGET IMAGE Lw

S245        REAL EXPOSURE TIME < (1/f_D)?       Y

                          N                        NO CORRECTION

S246    CALCULATE SHORT-EXPOSURE TIME Topt
            BASED ON OPTIMAL EXPOSURE TIME

S247   CALCULATE SHORT-EXPOSURE TIME Treal
            BASED ON REAL EXPOSURE TIME

S248         Treal < Topt x Kro       Y (S/N RATIO LOW)

S249          N (S/N RATIO HIGH)

          GENERATE REFERENCE IMAGE Rw
              BY SELECT-ONE METHOD          S250

                                      GENERATE REFERENCE IMAGE Rw
                                      BY SELECT-MORE-THAN-ONE-AND-
                                              MERGE METHOD

S251
          GENERATE CORRECTED IMAGE Qw
          FROM CORRECTION TARGET IMAGE
            Lw AND REFERENCE IMAGE Rw

                        END
```

# FIG.30

22
METERING CIRCUIT

BRIGHTNESS INFORMATION

23
LUT

→ REAL EXPOSURE TIME

→ APERTURE VALUE

→ AFE AMPLIFICATION FACTOR

# FIG.31

START

S301  $i = 1$?

Y

S302 EXTRACT CENTRAL SMALL AREA FROM SHORT-EXPOSURE IMAGE $Cw_i$ (→ SMALL IMAGE $Cs_i$)

N

S303 EXTRACT, FROM $Cw_i$ SMALL AREA CORRESPONDING TO SMALL AREA EXTRACTED FROM SHORT-EXPOSURE IMAGE $Cw_1$ (→ SMALL IMAGE $Cs_i$)

S304 SUBJECT SMALL IMAGE $Cs_i$ TO EDGE EXTRACTION (→ SMALL IMAGE $Es_i$)

S305 CALCULATE SUM OF ALL PIXEL VALUES OF SMALL IMAGE $Es_i$ (→ EVALUATION VALUE $Ka_i$)

END

# FIG.32

$Cw_1$      $Cw_2$      $Cw_N$

- - -

SMALL IMAGE $Cs_1$    SMALL IMAGE $Cs_2$    - - -    SMALL IMAGE $Cs_N$

EDGE
EXTRACTION

$Es_1$     $Es_2$     - - -     $Es_N$

PIXEL
VALUE SUM

EVALUATION
VALUE $Ka_1$     $Ka_2$     - - -     $Ka_N$

# FIG.33

```
              ┌─────────────────────┐
              │        START        │
              └─────────────────────┘
                         │
                         ▼
S311        ◇─────────────────────────◇  N
          ◇         i = 1 ?           ◇──────────────┐
            ◇─────────────────────◇                  │
                    │                S313            ▼
                    │ Y      ┌──────────────────────────────────┐
                    │        │ EXTRACT, FROM Cw_i, SMALL         │
                    ▼        │ AREA CORRESPONDING TO             │
      ┌──────────────────────┐│ SMALL AREA EXTRACTED FROM        │
      │ EXTRACT CENTRAL SMALL AREA │ SHORT-EXPOSURE IMAGE Cw_1    │
S312  │ FROM SHORT-EXPOSURE IMAGE Cw_i │ (→ SMALL IMAGE Cs_i)     │
      │ (→ SMALL IMAGE Cs_i)  │└──────────────────────────────────┘
      └──────────────────────┘                │
                    │◄──────────────────────────┘
                    ▼
      ┌──────────────────────┐
      │ EXTRACT BRIGHTNESS SIGNAL OF │
S314  │ EACH PIXEL OF SMALL IMAGE Cs_i │
      └──────────────────────┘
                    │
                    ▼
      ┌──────────────────────┐
      │ CALCULATE DISPERSION OF │
      │ HISTOGRAM OF BRIGHTNESS │
S315  │ VALUES                  │
      │ (→ EVALUATION VALUE Kb_i) │
      └──────────────────────┘
                    │
                    ▼
              ┌─────────────────────┐
              │        END          │
              └─────────────────────┘
```

# FIG.34A

261

# FIG.34B

262

# FIG.35A

FREQUENCY

BRIGHTNESS
VALUE

# FIG.35B

FREQUENCY

BRIGHTNESS
VALUE

# FIG.36

# FIG.37

```
                    ┌─────────────────────────────────┐
                    │             START               │
                    └─────────────────────────────────┘
                                    │
                                    ▼
        ┌─────────────────────────────────────────────────────┐
 S401   │  EXTRACT CHARACTERISTIC SMALL AREA FROM CORRECTION   │
        │  TARGET IMAGE Lw (→ SMALL IMAGE Ls)                  │
        └─────────────────────────────────────────────────────┘
                                    │
                                    ▼
        ┌─────────────────────────────────────────────────────┐
 S402   │  EXTRACT, FROM REFERENCE IMAGE Rw, SMALL AREA        │
        │  CORRESPONDING TO Ls (→ SMALL IMAGE Rs)             │
        └─────────────────────────────────────────────────────┘
                                    │
                                    ▼
        ┌─────────────────────────────────────────────────────┐
 S403   │  ELIMINATE NOISE FROM Rs (→ SMALL IMAGE Rsa)         │
        └─────────────────────────────────────────────────────┘
                                    │
                                    ▼
        ┌─────────────────────────────────────────────────────┐
 S404   │  NORMALIZE BRIGHTNESS OF Rsa TO Ls                   │
        │  (→ SMALL IMAGE Rsb)                                 │
        └─────────────────────────────────────────────────────┘
                                    │
                                    ▼
        ┌─────────────────────────────────────────────────────┐
 S405   │  TAKE Ls AS CONVOLVED IMAGE AND Rsb AS INITIALLY     │
        │  DECONVOLVED IMAGE                                   │
        └─────────────────────────────────────────────────────┘
                                    │
                                    ▼
        ┌───┬─────────────────────────────────────────────┬───┐
 S406   │   │         FOURIER ITERATION (→ PSF)            │   │
        └───┴─────────────────────────────────────────────┴───┘
                                    │
                                    ▼
        ┌─────────────────────────────────────────────────────┐
 S407   │  FIND, FROM, PSF, FILTER COEFFICIENTS OF IMAGE       │
        │  DECONVOLUTION FILTER                                │
        └─────────────────────────────────────────────────────┘
                                    │
                                    ▼
        ┌─────────────────────────────────────────────────────┐
 S408   │  IMAGE DECONVOLUTION FILTERING (→ FILTERED IMAGE)    │
        └─────────────────────────────────────────────────────┘
                                    │
                                    ▼
        ┌─────────────────────────────────────────────────────┐
 S409   │  RINGING ELIMINATION (→ CORRECTED IMAGE Qw)          │
        └─────────────────────────────────────────────────────┘
                                    │
                                    ▼
                    ┌─────────────────────────────────┐
                    │              END                │
                    └─────────────────────────────────┘
```

# FIG.38

```
                    ┌─────────────────────────┐
                    │          START           │
                    └─────────────────────────┘
                                 │
                                 ▼
            ┌──────────────────────────────────────────────┐
            │  EXTRACT BRIGHTNESS SIGNAL AND COLOR          │
   S421     │  DIFFERENCE SIGNALS OF CORRECTION             │
            │  TARGET IMAGE Lw (→ IMAGES Lw_Y, Lw_U, Lw_V)  │
            └──────────────────────────────────────────────┘
                                 │
                                 ▼
            ┌──────────────────────────────────────────────┐
            │        EXTRACT BRIGHTNESS SIGNAL OF           │
   S422     │      REFFERENCE IMAGE Rw (→ IMAGE Rw_Y)       │
            └──────────────────────────────────────────────┘
                                 │
                                 ▼
            ┌──────────────────────────────────────────────┐
            │  BRIGHTNESS NORMALIZATION AND NOISE           │
   S423     │  ELIMINATION ON IMAGE Rw_Y (Rw_Y')           │
            └──────────────────────────────────────────────┘
                                 │
                                 ▼
            ┌──────────────────────────────────────────────┐
            │ CALCULATE DISPLACEMENT ΔD BETWEEN Lw_Y       │
   S424     │                & Rw_Y'                        │
            └──────────────────────────────────────────────┘
                                 │
                                 ▼
            ┌──────────────────────────────────────────────┐
            │  BASED ON DISPLACEMENT ΔD,POSITION-           │
   S425     │  ADJUST AND MERGE TOGETHER Lw_U, Lw_V, &     │
            │  Rw_Y' (→ CORRECTED IMAGE Qw)                 │
            └──────────────────────────────────────────────┘
                                 │
                                 ▼
                    ┌─────────────────────────┐
                    │           END            │
                    └─────────────────────────┘
```

# FIG.39

# FIG.40

START

S441 — EXTRACT CHARACTERISTIC SMALL AREA FROM CORRECTION TARGET IMAGE Lw (→ SMALL IMAGE Ls)

S442 — EXTRACT, FROM REFERENCE IMAGE Rw, SMALL AREA CORRESPONDING TO Ls (→ SMALL IMAGE Rs)

S443 — NOISE ELIMINATION AND BRIGHTNESS NORMALIZATION ON Rs (→ SMALL IMAGE Rs')

S444 — APPLY 8 DIFFERENT GAUSSIAN FILTERS WITH DIFFERENT σ TO Rs' (→ SMOOTHED SMALL IMAGES $Rs_{G1}$ to $Rs_{G8}$)

S445 — PERFORM IMAGE MATCHING BETWEEN Ls AND EACH OF $Rs_{G1}$ to $Rs_{G8}$ AND TAKE, AS σ', σ THAT GIVES SMALLEST MATCHING ERROR

S446 — BASED ON σ', APPLY UNSHARP MASK FILTER TO CORRECTION TARGET IMAGE Lw (→ FILTERED IMAGE)

S447 — RINGING ELIMINATION (→ CORRECTED IMAGE Qw)

END

# FIG.41

Lw
Rw

SMALL IMAGE Ls

SMALL IMAGE Rs

NOISE ELIMINATION
BRIGHTNESS
NORMALIZATION

Rs'

APPLY 8 DIFFERENT
GAUSSIAN FILTERS

SMOOTHED
SMALL IMAGES $Rs_{G1}$ $Rs_{G2}$ $Rs_{G3}$ $Rs_{G4}$ $Rs_{G5}$ $Rs_{G6}$ $Rs_{G7}$ $Rs_{G8}$

ONE-BY-ONE
MATCHING

APPLY UNSHARP MASK FILTER TO Lw
BASED ON MATCHING RESULT

# FIG.42

# FIG.43

IMAGE CONTAINING 300      301         302         303
MOTION BLUR

               σ TOO SMALL     σ OPTIMAL     σ TOO LARGE

# FIG.44

$Cw_1$   $Cw_2$   $Cw_3$   $Cw_4$   $Cw_5$

COMPONENT
IMAGES

OPTICAL
FLOW

# FIG.45

OPTICAL
FLOW

# FIG.46

OPTICAL
FLOW

EP 1 944 732 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09261526 A
- JP 2001346093 A
- JP H11027574 A
- JP 2006129236 A

**Non-patent literature cited in the description**

- **G. R. AYERS ; J. C. DAINTY.** Iterative blind deconvolution method and its applications. *OPTICS LETTERS,* 1988, vol. 13 (7), 547-549